# EUROPEAN PATENT APPLICATION

(11) **EP 4 586 662 A1**
(43) Date of publication of application: **16.07.2025**
(21) Application number: 23870896.0
(22) Date of filing: 27.09.2023
(51) Int. Cl.: H04W 12/04

(54) **COMMUNICATION METHOD AND APPARATUS**

(30) Priority: 29.09.2022 CN 202211203513; 22.11.2022 CN 202211469086
(71) Applicant: Huawei Technologies Co., Ltd., Shenzhen, Guangdong 518129 (CN)
(72) Inventor: WU, Yizhuang, Shenzhen, Guangdong 518129 (CN); LEI, Ao, Shenzhen, Guangdong 518129 (CN); LI, He, Shenzhen, Guangdong 518129 (CN)
(74) Representative: Pfenning, Meinig & Partner mbB
(86) International application number: PCT/CN2023/121911
(87) International publication number: WO 2024/067669

(57) **Abstract**

This application provides a communication method and apparatus. The method includes: A first terminal device derives a first key based on a first count value, where the first key is used to protect communication security between the first terminal device and a first secondary node after the first terminal device accesses the first secondary node. The first terminal device stores a second count value, where the second count value is equal to the first count value plus n, the second count value is used to derive a second key, and the second key is used to protect communication security between the first terminal device and a second secondary node when the first terminal device migrates from the first secondary node to the second secondary node. According to the foregoing solutions, when the terminal device accesses different secondary nodes, different keys (that is, different keys used to protect communication security between the terminal device and different nodes) can be derived. This implements key isolation and improves communication security performance.

## Description

This application claims priorities to Chinese Patent Application No. 202211203513.3, filed with the China National Intellectual Property Administration on September 29, 2022 and entitled "COMMUNICATION METHOD AND APPARATUS", and to Chinese Patent Application No. 202211469086.3, filed with the China National Intellectual Property Administration on November 22, 2022 and entitled "COMMUNICATION METHOD AND APPARATUS", both of which are incorporated herein by reference in their entireties.

### TECHNICAL FIELD

This application relates to the field of communication technologies, and in particular, to a communication method and apparatus.

### BACKGROUND

With development of communication technologies, some communication apparatuses can support a dual-connectivity communication mode. Dual connectivity is a mode in which a communication apparatus is in a radio resource control (radio resource control, RRC) connected state. A communication apparatus in dual connectivity can communicate with both a master node and a secondary node.

However, in a current technology, there is a specific security risk in communication between a communication apparatus and a secondary node. Therefore, how to establish a secure connection between a communication apparatus and a secondary node to improve security performance between the communication apparatus and the secondary node is a problem that needs to be resolved currently.

### SUMMARY

This application provides a communication method and apparatus, to improve security performance between a terminal device and an accessed secondary node.

According to a first aspect, a communication method is provided. The method may be performed by a terminal device, or may be performed by a component (for example, a chip or a circuit) of the terminal device. For convenience, the following uses an example in which the terminal device performs the method for description.

The method includes: A first terminal device derives a first key based on a first count value, where the first key is used to protect communication security between the first terminal device and a first secondary node after the first terminal device accesses the first secondary node. The first terminal device stores a second count value, where the second count value is equal to the first count value plus n, the second count value is used to derive a second key, and the second key is used to protect communication security between the first terminal device and a second secondary node when the first terminal device migrates from the first secondary node to the second secondary node.

According to the foregoing solution, when the terminal device accesses different secondary nodes, different keys (that is, different keys used to protect communication security between the terminal device and different nodes) can be derived. This implements key isolation and improves communication security performance.

According to a second aspect, a communication method is provided. The method may be performed by a communication apparatus, or may be performed by a component (for example, a chip or a circuit) of the communication apparatus. For example, the method is performed by a terminal device, or is performed by a component of the terminal device. For convenience, the following uses an example in which the communication apparatus performs the method for description.

The method includes: The communication apparatus receives a radio resource control reconfiguration message from a master node, where the radio resource control reconfiguration message includes N count values for a first secondary node and M count values for a second secondary node, N and M are positive integers greater than or equal to 1, the N count values for the first secondary node are different from each other, and the M count values for the second secondary node are different from each other. The communication apparatus protects communication data between the communication apparatus and the first secondary node based on a first root key when determining to access the first secondary node, where the first root key is generated by the communication apparatus based on a count value that is in the N count values for the first secondary node and that is the first to be used.

According to the foregoing solution, the master node configures at least one count value for the first secondary node and the second secondary node. When the communication apparatus determines to access the first secondary node, the communication apparatus generates, by using the count value that is in the at least one count value for the first secondary node and that is the first to be used, the root key used to protect the communication data between the communication apparatus and the first secondary node, so that the communication apparatus and the first secondary node can protect security of the communication data based on the root key.

It can be understood that, that the communication apparatus accesses the first secondary node may mean that the communication apparatus accesses a cell of the first secondary node, for example, a primary secondary cell of the first secondary node.

Further, the communication apparatus may generate a root key by sequentially using the at least one count value for the first secondary node, so that the communication apparatus can generate different root keys by using different count values when accessing the first secondary node at different moments, to further improve communication security.

Optionally, the N count values for the first secondary node are different from the M count values for the second secondary node, so that key isolation is implemented when the communication apparatus accesses different secondary nodes, and communication security is improved.

In a possible implementation, that the communication apparatus protects communication data between the communication apparatus and the first secondary node based on a first root key may mean that the communication apparatus derives a communication key based on the first root key, and protects the communication data between the communication apparatus and the first secondary node by using the communication key.

An occasion for deriving the first root key by the communication apparatus is not limited in this application. In a possible implementation, the communication apparatus may derive the first root key after determining to access the first secondary node, and further derive a first communication key. For example, based on configuration information corresponding to the first secondary node (where the configuration information corresponding to the first secondary node includes an indication indicating whether to activate user plane ciphering and integrity protection), the communication apparatus determines to derive the first communication key.

In another possible implementation, after receiving the radio resource control reconfiguration message from the master node, the communication apparatus derives all root keys in advance, and locally stores the root keys. It can be understood that the communication apparatus needs to store all the root keys together with a corresponding use order.

In still another possible implementation, after receiving the radio resource control reconfiguration message from the master node, the communication apparatus derives all communication keys, and locally stores the communication keys. It can be understood that the communication apparatus needs to store all the communication keys together with a corresponding use order.

With reference to the second aspect, in some implementations of the second aspect, the method further includes: The communication apparatus determines, from the N count values for the first secondary node based on a use order of the N count values, the first count value that is the first to be used. The communication apparatus generates the first root key based on the first count value.

According to the foregoing solution, when determining to access the first secondary node, the communication apparatus generates the first root key by using the first count value that is in the N count values for the first secondary node and that is the first to be used, to protect the communication data between the communication apparatus and the first secondary node.

With reference to the second aspect, in some implementations of the second aspect, the method further includes: The communication apparatus generates N root keys based on each of the N count values, where the N root keys include the first root key, and the count value corresponding to the first root key is the first to be used.

It can be understood that the N root keys are in one-to-one correspondence with the N count values.

In a possible implementation, after the communication apparatus receives the radio resource control reconfiguration message from the master node, and before the communication apparatus protects the communication data between the communication apparatus and the first secondary node based on the first root key, the communication apparatus generates the N root keys based on each of the N count values.

In other words, the communication apparatus may generate the N root keys in advance based on the N count values. In this way, when determining to access the first secondary node, the communication apparatus can directly select the first root key from the N root keys, to protect the communication data between the communication apparatus and the first secondary node. This can improve efficiency and reduce a communication delay.

With reference to the second aspect, in some implementations of the second aspect, the method further includes: The communication apparatus generates N root keys based on each of the N count values, and then generates N communication keys based on each of the N root keys, where the N root keys include the first root key, and the count value corresponding to the first root key is the first to be used.

In other words, the communication apparatus may generate the N communication keys in advance based on the N count values. In this way, when determining to access the first secondary node, the communication apparatus can directly select a to-be-used communication key from the N communication keys, to protect the communication data between the communication apparatus and the first secondary node. This can improve efficiency and reduce a communication delay.

With reference to the second aspect, in some implementations of the second aspect, the method further includes: The communication apparatus sends an identifier of the first root key to the master node when determining to access the first secondary node.

In a possible implementation, the identifier of the first root key is the count value used to generate the first root key.

According to the foregoing solution, the communication apparatus may send the identifier of the to-be-used first root key to the master node, so that the master node can indicate the first secondary node to use the first root key to protect the communication data between the communication apparatus and the first secondary node. In other words, the communication apparatus and the first secondary node can use a same root key to protect the communication data. This can reduce cases in which service data transmission of the communication apparatus fails, and improve communication security.

With reference to the second aspect, in some implementations of the second aspect, the N count values for the first secondary node are included in first secondary cell group conditional configuration information of the first secondary node, the first secondary cell group conditional configuration information further includes a first execution condition corresponding to a primary secondary cell of the first secondary node, the M count values for the second secondary node are included in second secondary cell group conditional configuration information of the second secondary node, and the second secondary cell group conditional configuration information further includes a second execution condition corresponding to a primary secondary cell of the second secondary node. Before the communication apparatus protects communication data between the communication apparatus and the first secondary node based on a first root key, the method further includes: When the first execution condition is satisfied, the communication apparatus determines to access the first secondary node. After the communication apparatus protects communication data between the communication apparatus and the first secondary node based on a first root key, the method further includes: When the second execution condition is satisfied, the communication apparatus determines to access the second secondary node; and the communication apparatus protects communication data between the communication apparatus and the second secondary node based on a second root key, where the second root key is generated by the communication apparatus based on a count value that is in the M count values for the second secondary node and that is the first to be used.

According to the foregoing solution, after accessing the first secondary node, when the communication apparatus determines to access the second secondary node, the communication apparatus protects the communication data between the communication apparatus and the second secondary node based on the second root key, to protect communication security between the communication apparatus and the second secondary node.

The second root key is generated by the communication apparatus based on the count value that is in the M count values for the second secondary node and that is the first to be used. Because the N count values for the first secondary node are different from the M count values for the second secondary node, the second root key is also different from the first root key. Therefore, according to the foregoing solution, the communication apparatus can generate different root keys by using different count values when accessing different secondary nodes, to protect communication security. This can improve communication security.

With reference to the second aspect, in some implementations of the second aspect, the method further includes: The communication apparatus deletes the first count value or marks the first count value as invalid; or the communication apparatus deletes the first root key or marks the first root key as invalid.

According to the foregoing solution, after generating the first root key by using the first count value, the communication apparatus may delete the first count value or mark the first count value as invalid. In this case, if accessing the first secondary node again, the communication apparatus can learn of count values that have not been used, so that the communication apparatus can use different keys when accessing the first secondary node at different moments, to improve communication security.

It can be understood that, after using the first count value, the communication apparatus may immediately delete the first count value or mark the first count value as invalid; or after determining to be handed over to the second secondary node (for example, receiving a release request message from the master node), the communication apparatus may delete the first count value or mark the first count value as invalid.

In another possible implementation, if generating the N root keys in advance based on the N count values, after protecting the communication data between the communication apparatus and the first secondary node by using the first root key, the communication apparatus may delete the first root key or mark the first root key as invalid. In this case, if accessing the first secondary node again, the communication apparatus can learn of root keys that have not been used, so that the communication apparatus can use different root keys when accessing the first secondary node at different moments, to improve communication security.

With reference to the second aspect, in some implementations of the second aspect, the method further includes: After the communication apparatus protects communication data between the communication apparatus and the second secondary node based on the second root key, the method further includes: When the first execution condition is satisfied, the communication apparatus determines to access the first secondary node; and the communication apparatus protects communication data between the communication apparatus and the first secondary node based on a third root key, where the third root key is generated by the communication apparatus based on a count value that is in the N count values for the first secondary node and that is the second to be used.

According to the foregoing solution, when accessing the first secondary node again, the communication apparatus protects the communication data between the communication apparatus and the first secondary node by using the third root key, to protect communication security.

The third root key is generated based on the count value that is in the N count values and that is the second to be used, or the third root key is generated based on a count value that is in N-1 count values other than the first count value in the N count values and that is the first to be used. In this way, the communication apparatus generates different root keys by using different count values when accessing a same secondary node at different moments, to protect communication security. This improves communication security.

With reference to the second aspect, in some implementations of the second aspect, that the communication apparatus protects communication data between the communication apparatus and the first secondary node based on a first root key when determining to access the first secondary node includes: The communication apparatus protects the communication data between the communication apparatus and the first secondary node based on the first root key when determining to access a first cell of the first secondary node. After the communication apparatus protects the communication data between the communication apparatus and the first secondary node based on the first root key, the method further includes: The communication apparatus protects communication data between the communication apparatus and the first secondary node based on a third root key when determining to be handed over from the first cell of the first secondary node to a second cell of the first secondary node, where the third root key is generated by the communication apparatus based on a count value that is in the N count values for the first secondary node and that is the second to be used.

According to the foregoing solution, when accessing the first cell of the first secondary node, the communication apparatus protects the communication data between the communication apparatus and the first secondary node by using the first root key generated based on the count value that is in the N count values and that is the first to be used. When determining to be handed over from the first cell to the second cell of the first secondary node, the communication apparatus protects the communication data between the communication apparatus and the first secondary node by using the third root key generated based on the count value that is in the N count values and that is the second to be used. Because the N count values for the first secondary node are different from each other, the third root key is also different from the first root key. Therefore, according to the foregoing solution, the communication apparatus can generate different root keys by using different count values when accessing different cells of a same secondary node, to protect communication security. This can improve communication security.

With reference to the second aspect, in some implementations of the second aspect, before the communication apparatus protects communication data between the communication apparatus and the first secondary node based on a third root key, the method further includes: The communication apparatus deletes the first count value or marks the first count value as invalid; or the communication apparatus deletes the first root key or marks the first root key as invalid.

According to the foregoing solution, after generating the first root key by using the first count value, the communication apparatus may delete the first count value or mark the first count value as invalid. In this case, if being handed over to another cell of the first secondary node, the communication apparatus can learn of count values that have not been used, so that the communication apparatus can use different keys when accessing different cells of the first secondary node, to improve communication security.

With reference to the second aspect, in some implementations of the second aspect, the method further includes: The communication apparatus receives indication information from the master node; and the communication apparatus determines the use order of the N count values and/or a use order of the M count values based on the indication information; or the communication apparatus determines the use order of the N count values and/or a use order of the M count values based on a preconfigured rule.

According to the foregoing solution, the communication apparatus may determine the use order of the N count values for the first secondary node and/or the use order of the M count values for the second secondary node based on an indication of the master node or the preconfigured rule, to sequentially use the N count values and/or the M count values, so that a different count value is used each time. This improves communication security.

According to a third aspect, a communication method is provided. The method may be performed by a first secondary node, or may be performed by a component (for example, a chip or a circuit) of the first secondary node. For convenience, the following uses an example in which the first secondary node performs the method for description.

The method includes: The first secondary node receives N root keys from a master node, where N is a positive integer greater than or equal to 1, and values of the N root keys are different from each other. The first secondary node protects communication data between the first secondary node and a communication apparatus based on a first root key when determining that the communication apparatus accesses the first secondary node, where the first root key is a root key that is in the N root keys and that is the first to be used.

According to the foregoing solution, the master node configures the N root keys for the first secondary node. When the communication apparatus accesses the first secondary node, the first secondary node protects the communication data between the first secondary node and the communication apparatus by using the root key that is in the N root keys and that is the first to be used. This improves communication security.

With reference to the third aspect, in some implementations of the third aspect, the method further includes: The first secondary node determines, from the N root keys based on a use order of the N root keys, the first root key that is the first to be used.

With reference to the third aspect, in some implementations of the third aspect, the method further includes: The first secondary node receives indication information from the master node; and the first secondary node determines the use order of the N root keys based on the indication information; or the first secondary node determines the use order of the N root keys based on a preconfigured rule.

According to the foregoing solution, the first secondary node may determine a use order of N count values for the first secondary node based on an indication of the master node or the preconfigured rule, to sequentially use the N count values, so that the first secondary node uses a different count value each time. This improves communication security.

With reference to the third aspect, in some implementations of the third aspect, before the first secondary node protects communication data between the first secondary node and a communication apparatus based on a first root key, the method further includes: The first secondary node receives an identifier of the first root key from the master node.

According to the foregoing solution, the first secondary node may determine, based on an indication of the master node, to protect the communication data between the communication apparatus and the first secondary node by using the first root key. This improves communication security.

With reference to the third aspect, in some implementations of the third aspect, the method further includes: The first secondary node receives an identifier of each of the N root keys from the master node; and the first secondary node determines the first root key from the N root keys based on the identifier of the first root key.

With reference to the third aspect, in some implementations of the third aspect, the identifier of each of the N root keys is a count value used to generate each of the N root keys.

According to the foregoing solution, a root key may be identified by using a count value used to generate the root key. Therefore, the master node does not need to send an additional parameter to indicate the root key, so that signaling overheads can be reduced.

With reference to the third aspect, in some implementations of the third aspect, the method further includes: The first secondary node protects communication data between the first secondary node and the communication apparatus based on a second root key when determining that the communication device accesses the first secondary node again after being disconnected from the first secondary node, where the second root key is a root key that is in the N root keys and that is the second to be used.

According to the foregoing solution, when the communication apparatus accesses the first secondary node again, the first secondary node protects the communication data between the first secondary node and the communication apparatus by using the root key that is in the N root keys and that is the second to be used, so that the communication apparatus uses different root keys when accessing the first secondary node at different moments, to further improve communication security.

With reference to the third aspect, in some implementations of the third aspect, the method further includes: The first secondary node deletes the first root key from a local storage or marks the first root key as invalid.

According to the foregoing solution, after protecting the communication data between the communication apparatus and the first secondary node by using the first root key, the first secondary node may delete the first root key or mark the first root key as invalid. In this case, if the communication apparatus accesses the first secondary node again, the first secondary node can learn of root keys that have not been used, so that the first secondary node can use different keys when the communication apparatus accesses the first secondary node at different moments, to improve communication security.

According to a fourth aspect, a communication method is provided. The method may be performed by a master node, or may be performed by a component (for example, a chip or a circuit) of the master node. For convenience, the following uses an example in which the master node performs the method for description.

The method includes: The master node generates N count values for a first secondary node and M count values for a second secondary node, where N and M are positive integers greater than or equal to 1, the N count values for the first secondary node are different from each other, and the M count values for the second secondary node are different from each other. The master node generates N root keys based on each of the N count values for the first secondary node and generates M root keys based on each of the M count values for the second secondary node. The master node sends the N root keys to the first secondary node and sends the M root keys to the second secondary node. The master node sends a radio resource control reconfiguration message to a communication apparatus, where the radio resource control reconfiguration message includes the N count values for the first secondary node and the M count values for the second secondary node.

According to the foregoing solution, the master node generates the N count values and the N root keys for the first secondary node, and generates the M count values and the M root keys for the second secondary node. Because the N count values are different from the M count values, when accessing the first secondary node and the second secondary node, the communication apparatus can use different root keys to protect communication security. This improves communication security.

Because the N count values are different from each other, and the M count values are also different from each other, the terminal apparatus can use different root keys when accessing a same secondary node at different moments, to protect communication security. This improves communication security.

With reference to the fourth aspect, in some implementations of the fourth aspect, the method further includes: The master node sends first indication information to the first secondary node, where the first indication information indicates a use order of the N root keys. The master node sends second indication information to the second secondary node, where the second indication information indicates a use order of the M root keys. The master node sends third indication information and fourth indication information to the terminal device, where the third indication information indicates a use order of the N count values, the fourth indication information indicates a use order of the M count values, the use order of the N count values corresponds to the use order of the N root keys, and the use order of the M count values corresponds to the use order of the M root keys.

According to the foregoing solution, the master node may indicate the use order of the N count values and the use order of the N root keys to the communication apparatus, indicate the use order of the N root keys to the first secondary node, and indicate the use order of the M root keys to the second secondary node. In this way, when the communication apparatus accesses the first secondary node (or the second secondary node), the communication apparatus and the first secondary node (or the second secondary node) can use a same root key to protect communication data. This improves communication security, and can reduce cases in which a service of the communication apparatus fails.

With reference to the fourth aspect, in some implementations of the fourth aspect, the method further includes: The master node determines values of N and M.

According to the foregoing solution, the master node may determine the values of N and M depending on an actual requirement, to avoid a waste of resources.

With reference to the fourth aspect, in some implementations of the fourth aspect, the method further includes: The master node sends an identifier of each of the N root keys to the first secondary node and sends an identifier of each of the M root keys to the second secondary node.

With reference to the fourth aspect, in some implementations of the fourth aspect, the identifier of each of the N root keys is a count value used to generate each of the N root keys, and the identifier of each of the M root keys is a count value used to generate each of the M root keys.

With reference to the fourth aspect, in some implementations of the fourth aspect, after the master node sends a radio resource control reconfiguration message to the communication apparatus, the method further includes: The master node receives an identifier of a first root key for the first secondary node from the communication apparatus, and the master node sends the identifier of the first root key to the first secondary node.

According to the foregoing solution, the communication apparatus may indicate the identifier of the to-be-used root key to the first secondary node by using the master node, so that the communication apparatus and the first secondary node use a same root key to protect communication data. This can reduce cases in which service data transmission of the communication apparatus fails, and improve communication security.

According to a fifth aspect, a communication method is provided. The method may be performed by a communication apparatus, or may be performed by a component (for example, a chip or a circuit) of the communication apparatus. For example, the method is performed by a terminal device, or is performed by a component of the terminal device. For convenience, the following uses an example in which the communication apparatus performs the method for description.

The method includes: The communication apparatus receives a radio resource control reconfiguration message from a master node, where the radio resource control reconfiguration message includes a first count value for a first secondary node and a second secondary node. The communication apparatus protects communication data between the communication apparatus and the first secondary node based on a first root key when determining to access the first secondary node, where the first root key is generated by the communication apparatus based on the first count value.

According to the foregoing solution, the master node configures, for the communication apparatus, the first count value for the first secondary node and the second secondary node. When the communication apparatus determines to access the first secondary node, the communication apparatus generates, by using the first count value, the root key used to protect the communication data between the communication apparatus and the first secondary node, so that the communication apparatus and the first secondary node can protect security of the communication data based on the root key.

With reference to the fifth aspect, in some implementations of the fifth aspect, the radio resource control reconfiguration message includes first secondary cell group conditional configuration information of the first secondary node and second secondary cell group conditional configuration information of the second secondary node, the first secondary cell group conditional configuration information further includes a first execution condition corresponding to a primary secondary cell of the first secondary node, and the second secondary cell group conditional configuration information further includes a second execution condition corresponding to a primary secondary cell of the second secondary node. Before the communication apparatus protects communication data between the communication apparatus and the first secondary node based on a first root key, the method further includes: When the first execution condition is satisfied, the communication apparatus determines to access the first secondary node. After the communication apparatus protects communication data between the communication apparatus and the first secondary node based on a first root key, the method further includes: When the second execution condition is satisfied, the communication apparatus determines to access the second secondary node; and the communication apparatus protects communication data between the second communication apparatus and the second secondary node based on a second root key, where the second root key is generated by the communication apparatus based on a second count value, and the second count value is generated based on the first count value.

According to the foregoing solution, after accessing the first secondary node, when the communication apparatus determines to access the second secondary node, the communication apparatus protects the communication data between the communication apparatus and the second secondary node based on the second root key, to protect communication security between the communication apparatus and the second secondary node.

In addition, the second root key is generated based on the second count value, and the second count value is generated based on the first count value (for example, the second count value is generated by increasing the first count value by n, where n is an integer greater than or equal to 1). In this case, the first root key is different from the second root key. Therefore, the communication apparatus uses different root keys when accessing the first secondary node and the second secondary node. This further improves communication security.

With reference to the fifth aspect, in some implementations of the fifth aspect, the first count value is included in the first secondary cell group conditional configuration information and the second secondary cell group conditional configuration information; or the first count value is included in information that is other than the first secondary cell group conditional configuration information and the second secondary cell group conditional configuration information and that is in the radio resource control reconfiguration message.

With reference to the fifth aspect, in some implementations of the fifth aspect, the method further includes: The first secondary node sends the second count value to the master node.

According to the foregoing solution, after generating the second root key by using the second count value, the first secondary node may send the second count value to the master node, so that the master node can generate the second root key based on the second count value. This ensures that the communication apparatus and the second secondary node use a same root key.

With reference to the fifth aspect, in some implementations of the fifth aspect, the method further includes: After the communication apparatus protects communication data between the second communication apparatus and the second secondary node based on a second root key, the method further includes: When the first condition is satisfied, the communication apparatus determines to access the first secondary node; and the communication apparatus protects communication data between the communication apparatus and the first secondary node based on a third root key, where the third root key is generated by the communication apparatus based on a third count value, and the third count value is generated by the communication apparatus based on the second count value.

According to the foregoing solution, when accessing the first secondary node again, the communication apparatus protects the communication data between the communication apparatus and the first secondary node based on the third root key, to protect communication security between the communication apparatus and the first secondary node.

Moreover, the third root key is generated based on the third count value, and the third count value is generated based on the second count value. In this case, the third root key is different from the first root key and the second root key. Therefore, the communication apparatus uses different root keys when accessing the first secondary node and the second secondary node, and the communication apparatus also uses different root keys when accessing the first secondary node for the first time and accessing the first secondary node for the second time. This further improves communication security.

With reference to the fifth aspect, in some implementations of the fifth aspect, the method further includes: The first secondary node sends the third count value to the master node.

According to the foregoing solution, after generating the second root key by using the third count value, the first secondary node may send the third count value to the master node, so that the master node can generate the second root key based on the third count value. This ensures that the communication apparatus and the first secondary node use a same root key.

According to a sixth aspect, a communication method is provided. The method may be performed by a master node, or may be performed by a component (for example, a chip or a circuit) of the master node. For convenience, the following uses an example in which the master node performs the method for description.

The method includes: The master node generates a first count value for a first secondary node and a second secondary node. The master node sends a radio resource control reconfiguration message to a communication apparatus, where the radio resource control reconfiguration message includes the first count value. The master node generates a first root key based on the first count value when determining that the communication apparatus accesses the first secondary node. The master node sends the first root key to the first secondary node, where the first root key is used to protect communication data between the communication apparatus and the first secondary node.

According to the foregoing solution, after generating the first count value for the first secondary node and the second secondary node, the master node sends the first count value to the communication apparatus; and when the communication apparatus accesses the first secondary node, sends the first root key generated based on the first count value to the first secondary node. In this way, the first secondary node can protect the communication data between the communication apparatus and the first secondary node based on the first root key, to protect communication security between the communication apparatus and the first secondary node.

With reference to the sixth aspect, in some implementations of the sixth aspect, after the master node sends the first root key to the first secondary node, the method further includes: The master node generates a second root key based on a second count value when determining that the communication apparatus accesses the second secondary node, where the second count value is generated based on the first count value, and the first count value is different from the second count value. The master node sends the second root key to the second secondary node, where the second root key is used to protect communication data between the communication apparatus and the second secondary node.

According to the foregoing solution, when the communication apparatus accesses the second secondary node, the master node sends the second root key generated based on the second count value to the second secondary node. In this way, the second secondary node can protect the communication data between the communication apparatus and the second secondary node based on the second root key, to protect communication security between the communication apparatus and the second secondary node.

In addition, the second count value is generated based on the first count value, and the first count value is different from the second count value. Therefore, the first root key is different from the second root key. In this way, the root key used by the first secondary node when the communication apparatus accesses the first secondary node is different from the root key used by the second secondary node when the communication apparatus accesses the second secondary node. This further improves communication security.

With reference to the sixth aspect, in some implementations of the sixth aspect, the method further includes: The master node receives the second count value from the communication apparatus; or the master node generates the second count value based on the first count value.

With reference to the sixth aspect, in some implementations of the sixth aspect, after the master node sends the second root key to the second secondary node, the method further includes: The master node generates a third root key based on a third count value when determining that the communication apparatus accesses the first secondary node, where the third root key is used to protect communication data between the communication apparatus and the first secondary node, the third count value is generated based on the second count value, and the third count value is different from the second count value. The master node sends the third root key to the first secondary node.

According to the foregoing solution, when the communication apparatus accesses the first secondary node again, the master node sends the third root key generated based on the third count value to the first secondary node. In this way, the first secondary node can protect the communication data between the communication apparatus and the first secondary node based on the third root key, to protect communication security between the communication apparatus and the first secondary node.

Moreover, the third count value is generated based on the second count value, the third count value is different from the second count value, and in this case, the third count value is also different from the first count value. Therefore, the third root key is different from the second root key, and is also different from the first root key. In this way, the root key used by the first secondary node when the communication apparatus accesses the first secondary node is different from the root key used by the second secondary node when the communication apparatus accesses the second secondary node, and the root key used by the first secondary node when the communication apparatus accesses the first secondary node for the first time is different from the root key used by the first secondary node when the communication apparatus accesses the first secondary node for the second time. This further improves communication security.

According to a seventh aspect, a communication method is provided. The method may be performed by a communication apparatus, or may be performed by a component (for example, a chip or a circuit) of the communication apparatus. For example, the method is performed by a terminal device, or is performed by a component of the terminal device. For convenience, the following uses an example in which the communication apparatus performs the method for description.

The method includes: The communication apparatus receives a first count value for a first secondary node and a second count value for a second secondary node from a master node, where the first count value is different from the second count value. The communication apparatus protects communication data between the communication apparatus and the first secondary node based on a first root key when determining to access the first secondary node, where the first root key is generated by the communication apparatus based on the first count value.

According to the foregoing solution, the master node configures the first count value for the first secondary node and the second count value for the second secondary node. When the communication apparatus determines to access the first secondary node, the communication apparatus generates, by using the first count value for the first secondary node, the root key used to protect the communication data between the communication apparatus and the first secondary node, so that the communication apparatus and the first secondary node can protect security of the communication data based on the root key.

With reference to the seventh aspect, in some implementations of the seventh aspect, the first count value is included in first secondary cell group conditional configuration information of the first secondary node, the first secondary cell group conditional configuration information further includes a first execution condition corresponding to a primary secondary cell of the first secondary node, the second count value is included in second secondary cell group conditional configuration information of the second secondary node, and the second secondary cell group conditional configuration information further includes a second execution condition corresponding to a primary secondary cell of the second secondary node. Before the communication apparatus protects communication data between the communication apparatus and the first secondary node based on a first root key, the method further includes: When the first execution condition is satisfied, the communication apparatus determines to access the first secondary node. After the communication apparatus protects communication data between the communication apparatus and the first secondary node based on a first root key, the method further includes: When the second execution condition is satisfied, the communication apparatus determines to access the second secondary node; and the communication apparatus protects communication data between the second communication apparatus and the second secondary node based on a second root key, where the second root key is generated by the communication apparatus based on the second count value.

According to the foregoing solution, when the communication apparatus accesses the second secondary node, the communication apparatus generates, by using the second count value for the second secondary node, the root key used to protect the communication data between the communication apparatus and the second secondary node, so that the communication apparatus and the second secondary node can protect security of the communication data based on the root key.

In addition, the first count value is different from the second count value, so that the root key used when the communication apparatus accesses the first secondary node is different from the root key used when the communication apparatus accesses the second secondary node. This further improves communication security.

With reference to the seventh aspect, in some implementations of the seventh aspect, the method further includes: After the communication apparatus protects communication data between the second communication apparatus and the second secondary node based on a second root key, the method further includes: When the first condition is satisfied, the communication apparatus determines to access the first secondary node; and the communication apparatus protects communication data between the communication apparatus and the first secondary node based on a third root key, where the third root key is generated by the communication apparatus based on the first root key, and a third count value is different from the first count value.

According to the foregoing solution, when accessing the first secondary node again, the communication apparatus uses the third root key as a root key to protect the communication data between the communication apparatus and the second secondary node, so that the communication apparatus and the second secondary node can protect security of the communication data based on the root key.

Moreover, the third root key is generated based on the first root key. In this case, the third root key is different from the first root key. Therefore, the root key used when the communication apparatus accesses the first secondary node for the first time is different from the root key used when the communication apparatus accesses the second secondary node for the second time. This further improves communication security.

According to an eighth aspect, a communication method is provided. The method may be performed by a first secondary node, or may be performed by a component (for example, a chip or a circuit) of the first secondary node. For convenience, the following uses an example in which the first secondary node performs the method for description.

The method includes: The first secondary node receives a first root key from a master node. The first secondary node protects communication data between the first secondary node and a communication apparatus based on the first root key when determining that the communication apparatus accesses the first secondary node. The first secondary node protects communication data between the first secondary node and the communication apparatus based on a third root key when determining that the communication apparatus accesses the first secondary node again after being disconnected from the first secondary node, where the third root key is generated by the first secondary node based on the first root key, and the third root key is different from the first root key.

According to the foregoing solution, when the communication apparatus accesses the first secondary node for the first time, the first secondary node protects the communication data between the first secondary node and the communication apparatus by using the first root key. When the communication apparatus accesses the first secondary node for the second time, the first secondary node protects the communication data between the first secondary node and the communication apparatus by using the third root key different from the first root key. In this way, communication security between the communication apparatus and the first secondary node can be protected.

With reference to the eighth aspect, in some implementations of the eighth aspect, before the first secondary node protects communication data between the first secondary node and the communication apparatus based on a second root key, the method further includes: The first secondary node stores the first root key and marker information associated with the first root key, where the marker information indicates that the first root key has been used. The first secondary node generates the third root key based on the first root key and the marker information.

According to the foregoing solution, after protecting the communication data between the first secondary node and the communication apparatus by using the first root key, the first secondary node may mark the first root key as "used". In this case, when the communication apparatus accesses the first secondary node for the second time, the first secondary node may generate the third root key based on the first root key, so that the first secondary node uses different root keys when the communication apparatus accesses the first secondary node at different moments, to further improve communication security.

With reference to the eighth aspect, in some implementations of the eighth aspect, before the first secondary node generates the third root key based on the first root key, the method further includes: The first secondary node determines that the marker information associated with the first root key is locally stored.

According to a ninth aspect, a communication method is provided. The method may be performed by a master node, or may be performed by a component (for example, a chip or a circuit) of the master node. For convenience, the following uses an example in which the master node performs the method for description.

The method includes: The master node generates a first count value for a first secondary node and a second count value for a second secondary node, where the first count value is different from the second count value. The master node generates a first root key based on the first count value and generates a second root key based on the second count value. The master node sends a radio resource control reconfiguration message to a communication apparatus, where the radio resource control reconfiguration message includes the first count value for the first secondary node and the second count value for the second secondary node. The master node sends the first root key to the first secondary node and sends the second root key to the second secondary node.

According to the foregoing solution, the master node generates the first count value and the first root key for the first secondary node, and generates the second root key for the second secondary node. In this way, the first secondary node can protect communication data between the first secondary node and the communication apparatus by using the first root key, and the second secondary node can protect the communication data between the first secondary node and the communication apparatus by using the second root key, to protect communication security.

In addition, because the first count value is different from the second count value, the first root key is different from the second root key. In other words, the first secondary node and the second secondary node can use different root keys to protect communication security. This further improves communication security.

With reference to the ninth aspect, in some implementations of the ninth aspect, the method further includes: When the master node determines that the communication apparatus accesses the first secondary node, and the master node receives indication information from the communication apparatus, the master node generates a third root key based on the first root key, where the indication information indicates the master node to derive a new root key based on the first root key. The master node sends the third root key to the first secondary node, where the third root key is used to protect communication security between the communication apparatus and the first secondary node.

According to the foregoing solution, the master node may generate, for the first secondary node based on an indication of the communication apparatus, the third root key different from the first root key, so that the first secondary node can protect communication data between the first secondary node and the communication apparatus by using the third root key. Moreover, because the first root key is different from the third root key, the first secondary node uses different root keys when the communication apparatus accesses the first secondary node at different moments, to further improve communication security.

According to a tenth aspect, a communication method is provided. The method includes: A master node generates N count values for a first secondary node and M count values for a second secondary node, where N and M are positive integers greater than or equal to 1, the N count values for the first secondary node are different from each other, and the M count values for the second secondary node are different from each other. The master node generates N root keys based on each of the N count values for the first secondary node and generates M root keys based on each of the M count values for the first secondary node. The master node sends the N root keys to the first secondary node and sends the M root keys to the second secondary node. The master node sends a radio resource control reconfiguration message to a communication apparatus, where the radio resource control reconfiguration message includes the N count values for the first secondary node and the M count values for the second secondary node. The first secondary node receives the N root keys from the master node and receives the M root keys from the master node. The first secondary node protects communication data between the first secondary node and the communication apparatus based on a first root key when determining that the communication apparatus accesses the first secondary node, where the first root key is a root key that is in the N root keys and that is the first to be used.

With reference to the tenth aspect, in some implementations of the tenth aspect, the method further includes: The second secondary node protects communication data between the second secondary node and the communication apparatus based on a third root key when determining that the communication apparatus accesses the second secondary node, where the third root key is a root key that is in the M root keys and that is the first to be used.

With reference to the tenth aspect, in some implementations of the tenth aspect, the method further includes: The first secondary node deletes the first root key from a local storage or marks the first root key as invalid.

With reference to the tenth aspect, in some implementations of the tenth aspect, the method further includes: The first secondary node protects communication data between the first secondary node and the communication apparatus based on a second root key when determining that the communication device accesses the first secondary node again, where the second root key is a root key that is in the N root keys and that is the second to be used.

According to an eleventh aspect, a communication method is provided, including: A master node generates a first count value for a first secondary node and a second secondary node. The master node sends a radio resource control reconfiguration message to a communication apparatus, where the radio resource control reconfiguration message includes the first count value. The master node generates a first root key based on the first count value when determining that the communication apparatus accesses the first secondary node. The master node sends the first root key to the first secondary node. The first secondary node receives the first root key from the master node. The first secondary node protects communication data between the communication apparatus and the first secondary node based on the first root key.

With reference to the eleventh aspect, in some implementations of the eleventh aspect, the radio resource control reconfiguration message includes first secondary cell group conditional configuration information of the first secondary node and second secondary cell group conditional configuration information of the second secondary node, and the first count value is included in the first secondary cell group conditional configuration information and the second secondary cell group conditional configuration information; or the first count value is included in information that is other than the first secondary cell group conditional configuration information and the second secondary cell group conditional configuration information and that is in the radio resource control reconfiguration message.

With reference to the eleventh aspect, in some implementations of the eleventh aspect, after the master node sends the first root key to the first secondary node, the method further includes: The master node generates a second root key based on a second count value when determining that the communication apparatus accesses the second secondary node, where the second count value is generated based on the first count value, and the first count value is different from the second count value. The master node sends the second root key to the second secondary node, where the second root key is used to protect communication data between the communication apparatus and the second secondary node. The first secondary node receives the second root key from the master node. The first secondary node protects the communication data between the communication apparatus and the second secondary node based on the second root key.

With reference to the eleventh aspect, in some implementations of the eleventh aspect, the method further includes: The master node receives the second count value from the communication apparatus; or the master node generates the second count value based on the first count value.

With reference to the eleventh aspect, in some implementations of the eleventh aspect, after the master node sends the second root key to the second secondary node, the method further includes: The master node generates a third root key based on a third count value when determining that the communication apparatus accesses the first secondary node, where the third root key is used to protect communication data between the communication apparatus and the first secondary node, the third count value is generated based on the second count value, and the third count value is different from the second count value. The master node sends the third root key to the first secondary node. The first secondary node receives the third root key from the master node. The first secondary node protects the communication data between the communication apparatus and the first secondary node based on the third root key.

According to a twelfth aspect, a communication method is provided. The method includes: A master node generates a first count value for a first secondary node and a second count value for a second secondary node, where the first count value is different from the second count value. The master node generates a first root key based on the first count value and generates a second root key based on the second count value. The master node sends a radio resource control reconfiguration message to a communication apparatus, where the radio resource control reconfiguration message includes the first count value for the first secondary node and the second count value for the second secondary node. The master node sends the first root key to the first secondary node and sends the second root key to the second secondary node. The first secondary node receives the first root key from the master node, and the second secondary node receives the second root key from the master node. The first secondary node protects communication data between the communication apparatus and the first secondary node based on the first root key when determining that the communication apparatus accesses the first secondary node.

With reference to the twelfth aspect, in some implementations of the twelfth aspect, after the first secondary node protects communication data between the communication apparatus and the first secondary node based on the first root key, the method further includes: The second secondary node protects communication data between the communication apparatus and the second secondary node based on the second root key when determining that the communication apparatus accesses the second secondary node.

With reference to the twelfth aspect, in some implementations of the twelfth aspect, after the second secondary node protects communication data between the communication apparatus and the second secondary node based on the second root key, the method further includes: When determining that the communication apparatus accesses the first secondary node, the first secondary node generates a third root key based on the first root key, where the third root key is different from the first root key. The first secondary node protects communication data between the communication apparatus and the first secondary node based on the third root key.

With reference to the twelfth aspect, in some implementations of the twelfth aspect, before the first secondary node protects communication data between the first secondary node and the communication apparatus based on the second root key, the method further includes: The first secondary node stores the first root key and marker information associated with the first root key, where the marker information indicates that the first root key has been used. That the first secondary node generates a third root key based on the first root key includes: The first secondary node generates the third root key based on the first root key and the marker information.

With reference to the twelfth aspect, in some implementations of the twelfth aspect, before the first secondary node generates a third root key based on the first root key, the method further includes: The first secondary node determines that the marker information associated with the first root key is locally stored.

With reference to the twelfth aspect, in some implementations of the twelfth aspect, after the second secondary node protects communication data between the communication apparatus and the second secondary node based on the second root key, the method further includes: When determining that the communication apparatus accesses the first secondary node, the master node generates the third root key based on the first root key, where the third root key is different from the first root key. The master node sends the third root key to the first secondary node. The first secondary node receives the third root key from the master node. The first secondary node protects the communication data between the communication apparatus and the first secondary node based on the third root key.

With reference to the twelfth aspect, in some implementations of the twelfth aspect, that the master node generates the third root key based on the first root key includes: When the master node receives indication information from the communication apparatus, the master node generates the third root key based on the first root key, where the indication information indicates the master node to derive a new root key based on the first root key.

According to a thirteenth aspect, an apparatus is provided. The apparatus includes: a transceiver module, configured to receive a radio resource control reconfiguration message from a master node, where the radio resource control reconfiguration message includes N count values for a first secondary node and M count values for a second secondary node, N and M are positive integers greater than or equal to 1, the N count values for the first secondary node are different from each other, and the M count values for the second secondary node are different from each other; and a processing module, configured to protect communication data between the apparatus and the first secondary node based on a first root key when determining to access the first secondary node, where the first root key is generated by the communication apparatus based on a count value that is in the N count values for the first secondary node and that is the first to be used.

With reference to the thirteenth aspect, in some implementations of the thirteenth aspect, the processing module is further configured to: determine, from the N count values for the first secondary node based on a use order of the N count values, the first count value that is the first to be used; and generate, for the communication apparatus, the first root key based on the first count value.

With reference to the thirteenth aspect, in some implementations of the thirteenth aspect, the processing module is further configured to generate N root keys based on each of the N count values, where the N root keys include the first root key, and the count value corresponding to the first root key is the first to be used.

With reference to the thirteenth aspect, in some implementations of the thirteenth aspect, the processing module is further configured to send, by using the transceiver module, an identifier of the first root key to the master node when determining to access the first secondary node.

With reference to the thirteenth aspect, in some implementations of the thirteenth aspect, the identifier of the first root key is the count value used to generate the first root key.

With reference to the thirteenth aspect, in some implementations of the thirteenth aspect, the N count values for the first secondary node are included in first secondary cell group conditional configuration information of the first secondary node, the first secondary cell group conditional configuration information further includes a first execution condition corresponding to a primary secondary cell of the first secondary node, the M count values for the second secondary node are included in second secondary cell group conditional configuration information of the second secondary node, and the second secondary cell group conditional configuration information further includes a second execution condition corresponding to a primary secondary cell of the second secondary node. The processing module is further configured to: when the first execution condition is satisfied, determine to access the first secondary node. The processing module is further configured to: when the second execution condition is satisfied, determine, for the communication apparatus, to access the second secondary node; and protect, for the communication apparatus, communication data between the communication apparatus and the second secondary node based on a second root key, where the second root key is generated by the communication apparatus based on a count value that is in the M count values for the second secondary node and that is the first to be used.

With reference to the thirteenth aspect, in some implementations of the thirteenth aspect, the processing module is further configured to: delete the first count value or mark the first count value as invalid; or delete the first root key or mark the first root key as invalid.

With reference to the thirteenth aspect, in some implementations of the thirteenth aspect, the processing module is further configured to: when the first execution condition is satisfied, determine to access the first secondary node; and protect communication data between the communication apparatus and the first secondary node based on a third root key, where the third root key is generated by the communication apparatus based on a count value that is in the N count values for the first secondary node and that is the second to be used.

With reference to the thirteenth aspect, in some implementations of the thirteenth aspect, the processing module is specifically configured to: protect the communication data between the communication apparatus and the first secondary node based on the first root key when determining to access a first cell of the first secondary node. The processing module is further configured to: protect communication data between the communication apparatus and the first secondary node based on a third root key when determining to be handed over from the first cell of the first secondary node to a second cell of the first secondary node, where the third root key is generated by the communication apparatus based on a count value that is in the N count values for the first secondary node and that is the second to be used.

With reference to the thirteenth aspect, in some implementations of the thirteenth aspect, the processing module is further configured to: delete the first count value or mark the first count value as invalid; or delete the first root key or mark the first root key as invalid.

With reference to the thirteenth aspect, in some implementations of the thirteenth aspect, the transceiver module is further configured to receive indication information from the master node; and the processing module is further configured to determine the use order of the N count values and/or a use order of the M count values based on the indication information; or the processing module is further configured to determine the use order of the N count values and/or a use order of the M count values based on a preconfigured rule.

According to a fourteenth aspect, an apparatus is provided. The apparatus includes: a transceiver module, configured to receive N root keys from a master node, where N is a positive integer greater than or equal to 1, and values of the N root keys are different from each other; and a processing module, configured to protect communication data between the transceiver module and a communication apparatus based on a first root key when determining that the communication apparatus accesses the first secondary node, where the first root key is a root key that is in the N root keys and that is the first to be used.

With reference to the fourteenth aspect, in some implementations of the fourteenth aspect, the processing module is further configured to determine, from the N root keys based on a use order of the N root keys, the first root key that is the first to be used.

With reference to the fourteenth aspect, in some implementations of the fourteenth aspect, the transceiver module is further configured to receive indication information from the master node; and the processing module is further configured to determine the use order of the N root keys based on the indication information; or determine the use order of the N root keys based on a preconfigured rule.

With reference to the fourteenth aspect, in some implementations of the fourteenth aspect, the transceiver module is further configured to receive an identifier of the first root key from the master node.

With reference to the fourteenth aspect, in some implementations of the fourteenth aspect, the transceiver module is further configured to receive an identifier of each of the N root keys from the master node.

With reference to the fourteenth aspect, in some implementations of the fourteenth aspect, the identifier of each of the N root keys is a count value used to generate each of the N root keys.

With reference to the fourteenth aspect, in some implementations of the fourteenth aspect, the processing module is further configured to: protect communication data between the apparatus and the communication apparatus based on a second root key when determining that the communication device accesses the first secondary node again after being disconnected from the first secondary node, where the second root key is a root key that is in the N root keys and that is the second to be used.

With reference to the fourteenth aspect, in some implementations of the fourteenth aspect, the processing module is further configured to delete the first root key from a local storage or mark the first root key as invalid.

With reference to the fourteenth aspect, in some implementations of the fourteenth aspect, the transceiver module is further configured to receive the indication information from the master node; and the first secondary node determines the use order of the N root keys based on the indication information; or the processing module is further configured to determine the use order of the N root keys based on a preconfigured rule.

According to a fifteenth aspect, an apparatus is provided. The apparatus includes: a processing module, configured to: generate N count values for a first secondary node and M count values for a second secondary node, where N and M are positive integers greater than or equal to 1, the N count values for the first secondary node are different from each other, and the M count values for the second secondary node are different from each other; and generate N root keys based on each of the N count values for the first secondary node and generate M root keys based on each of the M count values for the second secondary node; and a transceiver module, configured to send the N root keys to the first secondary node and send the M root keys to the second secondary node. The transceiver module is further configured to send a radio resource control reconfiguration message to a communication apparatus, where the radio resource control reconfiguration message includes the N count values for the first secondary node and the M count values for the second secondary node.

With reference to the fifteenth aspect, in some implementations of the fifteenth aspect, the transceiver module is further configured to: send first indication information to the first secondary node, where the first indication information indicates a use order of the N root keys; send second indication information to the second secondary node, where the second indication information indicates a use order of the M root keys; and send third indication information and fourth indication information to the terminal device, where the third indication information indicates a use order of the N count values, the fourth indication information indicates a use order of the M count values, the use order of the N count values corresponds to the use order of the N root keys, and the use order of the M count values corresponds to the use order of the M root keys.

With reference to the fifteenth aspect, in some implementations of the fifteenth aspect, the processing module is further configured to determine values of N and M.

With reference to the fifteenth aspect, in some implementations of the fifteenth aspect, the transceiver module is further configured to send an identifier of each of the N root keys to the first secondary node and send an identifier of each of the M root keys to the second secondary node.

With reference to the fifteenth aspect, in some implementations of the fifteenth aspect, the identifier of each of the N root keys is a count value used to generate each of the N root keys, and the identifier of each of the M root keys is a count value used to generate each of the M root keys.

With reference to the fifteenth aspect, in some implementations of the fifteenth aspect, the transceiver module is further configured to: receive an identifier of a first root key for the first secondary node from the communication apparatus; and send the identifier of the first root key to the first secondary node.

According to a sixteenth aspect, an apparatus is provided. The apparatus includes: a transceiver module, configured to receive a radio resource control reconfiguration message from a master node, where the radio resource control reconfiguration message includes a first count value for a first secondary node and a second secondary node; and a processing module, configured to protect communication data between the apparatus and the first secondary node based on a first root key when determining to access the first secondary node, where the first root key is generated by the communication apparatus based on the first count value.

With reference to the sixteenth aspect, in some implementations of the sixteenth aspect, the radio resource control reconfiguration message includes first secondary cell group conditional configuration information of the first secondary node and second secondary cell group conditional configuration information of the second secondary node, the first secondary cell group conditional configuration information further includes a first execution condition corresponding to a primary secondary cell of the first secondary node, and the second secondary cell group conditional configuration information further includes a second execution condition corresponding to a primary secondary cell of the second secondary node. The processing module is further configured to: when the first execution condition is satisfied, determine to access the first secondary node. The processing module is further configured to: when the second execution condition is satisfied, determine to access the second secondary node; and protect communication data between the second communication apparatus and the second secondary node based on a second root key, where the second root key is generated based on a second count value, and the second count value is generated based on the first count value.

With reference to the sixteenth aspect, in some implementations of the sixteenth aspect, the first count value is included in the first secondary cell group conditional configuration information and the second secondary cell group conditional configuration information; or the first count value is included in information that is other than the first secondary cell group conditional configuration information and the second secondary cell group conditional configuration information and that is in the radio resource control reconfiguration message.

With reference to the sixteenth aspect, in some implementations of the sixteenth aspect, the transceiver module is further configured to send the second count value to the master node.

With reference to the sixteenth aspect, in some implementations of the sixteenth aspect, the processing module is further configured to: when the first condition is satisfied, determine to access the first secondary node; and protect communication data between the apparatus and the first secondary node based on a third root key, where the third root key is generated based on a third count value, and the third count value is generated based on the second count value.

With reference to the sixteenth aspect, in some implementations of the sixteenth aspect, the transceiver module is further configured to send the third count value to the master node.

According to a seventeenth aspect, a communication apparatus is provided. The apparatus includes: a processing module, configured to generate a first count value for a first secondary node and a second secondary node; and a transceiver module, configured to send a radio resource control reconfiguration message to a communication apparatus, where the radio resource control reconfiguration message includes the first count value. The processing module is configured to generate a first root key based on the first count value when determining that the communication apparatus accesses the first secondary node. The transceiver module is further configured to send the first root key to the first secondary node, where the first root key is used to protect communication data between the communication apparatus and the first secondary node.

With reference to the seventeenth aspect, in some implementations of the seventeenth aspect, the processing module is further configured to generate a second root key based on a second count value when determining that the communication apparatus accesses the second secondary node, where the second count value is generated based on the first count value, and the first count value is different from the second count value. The transceiver module is further configured to send the second root key to the second secondary node, where the second root key is used to protect communication data between the communication apparatus and the second secondary node.

With reference to the seventeenth aspect, in some implementations of the seventeenth aspect, the transceiver module is further configured to receive the second count value from the communication apparatus; or the processing module is further configured to generate the second count value based on the first count value.

With reference to the seventeenth aspect, in some implementations of the seventeenth aspect, the processing module is further configured to: generate a third root key based on a third count value when determining that the communication apparatus accesses the first secondary node, where the third root key is used to protect communication data between the communication apparatus and the first secondary node, the third count value is generated based on the second count value, and the third count value is different from the second count value. The master node sends the third root key to the first secondary node.

According to an eighteenth aspect, an apparatus is provided. The apparatus includes: a transceiver module, configured to receive a first count value for a first secondary node and a second count value for a second secondary node from a master node, where the first count value is different from the second count value; and a processing module, configured to protect communication data between the communication apparatus and the first secondary node based on a first root key when determining to access the first secondary node, where the first root key is generated by the communication apparatus based on the first count value.

With reference to the eighteenth aspect, in some implementations of the eighteenth aspect, the first count value is included in first secondary cell group conditional configuration information of the first secondary node, the first secondary cell group conditional configuration information further includes a first execution condition corresponding to a primary secondary cell of the first secondary node, the second count value is included in second secondary cell group conditional configuration information of the second secondary node, and the second secondary cell group conditional configuration information further includes a second execution condition corresponding to a primary secondary cell of the second secondary node. The processing module is further configured to: when the first execution condition is satisfied, determine to access the first secondary node. The processing module is further configured to: when the second execution condition is satisfied, determine, for the communication apparatus, to access the second secondary node; and protect communication data between the second communication apparatus and the second secondary node based on a second root key, where the second root key is generated by the communication apparatus based on the second count value.

With reference to the eighteenth aspect, in some implementations of the eighteenth aspect, the processing module is further configured to: when the first condition is satisfied, determine to access the first secondary node; and protect communication data between the communication apparatus and the first secondary node based on a third root key, where the third root key is generated by the communication apparatus based on the first root key, and a third count value is different from the first count value.

According to a nineteenth aspect, an apparatus is provided. The apparatus includes: a transceiver module, configured to receive a first root key from a master node; and a processing module, configured to protect communication data between the first secondary node and a communication apparatus based on the first root key when determining that the communication apparatus accesses the apparatus. The processing module is further configured to protect communication data between the apparatus and the communication apparatus based on a third root key when determining that the communication apparatus accesses the apparatus again after being disconnected from the apparatus, where the third root key is generated by the first secondary node based on the first root key, and the third root key is different from the first root key.

With reference to the nineteenth aspect, in some implementations of the nineteenth aspect, the processing module is further configured to: store the first root key and marker information associated with the first root key, where the marker information indicates that the first root key has been used; and generate the third root key based on the first root key and the marker information.

With reference to the nineteenth aspect, in some implementations of the nineteenth aspect, the processing module is further configured to determine that the marker information associated with the first root key is locally stored.

According to a twentieth aspect, a communication apparatus is provided. The apparatus includes: a processing module and a transceiver module. The processing module is configured to generate a first count value for a first secondary node and a second count value for a second secondary node, where the first count value is different from the second count value. The processing module is further configured to generate a first root key based on the first count value and generate a second root key based on the second count value. The transceiver module is configured to send a radio resource control reconfiguration message to a communication apparatus, where the radio resource control reconfiguration message includes the first count value for the first secondary node and the second count value for the second secondary node. The transceiver module is further configured to send the first root key to the first secondary node and send the second root key to the second secondary node.

With reference to the twentieth aspect, in some implementations of the twentieth aspect, the processing module is further configured to: when the processing module determines that the communication apparatus accesses the first secondary node, and the transceiver module receives indication information from the communication apparatus, generate a third root key based on the first root key, where the indication information indicates the master node to derive a new root key based on the first root key. The transceiver module is further configured to send the third root key to the first secondary node, where the third root key is used to protect communication security between the communication apparatus and the first secondary node.

According to a twenty-first aspect, a communication apparatus is provided. The apparatus is configured to perform any method provided in the first aspect to the eighth aspect. Specifically, the apparatus may include units and/or modules configured to perform the methods provided in the first aspect to the eighth aspect, for example, a processing module and/or a transceiver module (which may also be referred to as a communication module).

In an implementation, the apparatus is a communication apparatus, for example, a terminal device, or a chip, a chip system, or a circuit in a terminal device. When the apparatus is a chip, a chip system, or a circuit in a terminal device, the transceiver module may be an input/output interface, an interface circuit, an output circuit, an input circuit, a pin, a related circuit, or the like of the chip, the chip system, or the circuit, and the processing module may be a processor, processing circuit, logic circuit, or the like. In this case, the apparatus may include a unit and/or a module configured to perform the method provided in any one of the first aspect, the fourth aspect, and the sixth aspect, for example, a processing unit and/or a communication unit.

In another possible case, the apparatus is a first secondary node, or a chip, a chip system, or a circuit in a first secondary node. In this case, the apparatus may include a unit and/or a module configured to perform the method provided in any one of the second aspect and the seventh aspect, for example, a processing module and/or a transceiver module.

In still another possible case, the apparatus is a master node, or a chip, a chip system, or a circuit in a master node. In this case, the apparatus may include a unit and/or a module configured to perform the method provided in any one of the third aspect, the fifth aspect, and the eighth aspect, for example, a processing module and/or a transceiver module.

Optionally, the transceiver module may be a transceiver circuit. Optionally, the input/output interface may be an input/output circuit.

According to a twenty-second aspect, a communication apparatus is provided. The apparatus includes: a memory, configured to store a program; and a processor, configured to execute the program stored in the memory. When the program stored in the memory is executed, the processor is configured to perform any method provided in the first aspect to the eighth aspect.

According to a twenty-third aspect, this application provides a processor, configured to perform the methods provided in the foregoing aspects. In a procedure of performing these methods, a procedure of sending the foregoing information and a procedure of obtaining/receiving the foregoing information in the foregoing methods can be understood as a procedure of outputting the foregoing information by the processor and a procedure of receiving the foregoing input information by the processor. When outputting the foregoing information, the processor outputs the foregoing information to a transceiver, so that the transceiver transmits the foregoing information. After the foregoing information is output by the processor, other processing may further need to be performed on the foregoing information, and then processed information arrives at the transceiver. Similarly, when the processor receives the foregoing input information, the transceiver obtains/receives the foregoing information, and inputs the foregoing information into the processor. Further, after the transceiver receives the foregoing information, other processing may need to be performed on the foregoing information, and then processed information is input into the processor.

According to the foregoing principle, for example, receiving the request message mentioned in the foregoing methods can be understood as receiving input information by the processor.

Transmitting, sending, obtaining/receiving, and other operations related to the processor can be more generally understood as output, receiving, input, and other operations performed by the processor, instead of transmitting, sending, and receiving operations directly performed by a radio frequency circuit and an antenna, unless otherwise specified or the operations contradict actual functions or internal logic of the operations in related descriptions.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (read-only memory, ROM). The memory and the processor may be integrated on one chip, or may be disposed on different chips. A type of the memory and a manner in which the memory and the processor are disposed are not limited in embodiments of this application.

According to a twenty-fourth aspect, a computer-readable storage medium is provided. The computer-readable storage medium stores program code to be executed by a device, and the program code includes instructions used to perform any method provided in the first aspect to the eighth aspect.

According to a twenty-fifth aspect, a computer program product including instructions is provided. When the computer program product runs on a computer, the computer is enabled to perform any method provided in the first aspect to the eighth aspect.

According to a twenty-sixth aspect, a chip is provided. The chip includes a processor and a communication interface. The processor reads, through the communication interface, instructions stored in a memory, to perform any method provided in the first aspect to the eighth aspect.

Optionally, in an implementation, the chip may further include a memory. The memory stores instructions, and the processor is configured to execute the instructions stored in the memory. When the instructions are executed, the processor is configured to perform any method provided in the first aspect to the sixth aspect.

According to a twenty-seventh aspect, a communication system is provided, including the first secondary node according to the second aspect and the master node according to the third aspect.

Optionally, the communication system further includes the communication apparatus according to the first aspect.

According to a twenty-eighth aspect, a communication system is provided, including the first secondary node according to the seventh aspect and the master node according to the eighth aspect.

Optionally, the communication system further includes the communication apparatus according to the sixth aspect.

### BRIEF DESCRIPTION OF DRAWINGS

FIG. 1(a), FIG. 1(b), and FIG. 1(c) are diagrams of architectures of communication systems to which this application is applicable;
FIG. 2 is a diagram of enhanced CPAC;
FIG. 3 is a diagram of a CPA procedure according to an embodiment of this application;
FIG. 4 is a diagram of a CPC procedure according to an embodiment of this application;
FIG. 5 is a diagram of a security establishment procedure between UE and an SN according to an embodiment of this application;
FIG. 6 is an example flowchart of a communication method 600 according to an embodiment of this application;
FIG. 7(a) is an example flowchart of a communication method 700 according to an embodiment of this application;
FIG. 7(b) is an example flowchart of a communication method 700 according to an embodiment of this application;
FIG. 8 is an example flowchart of a communication method 800 according to an embodiment of this application;
FIG. 9 is an example flowchart of a communication method 900 according to an embodiment of this application;
FIG. 10 is an example flowchart of a communication method 1000 according to an embodiment of this application;
FIG. 11 is an example flowchart of a communication method 1100 according to an embodiment of this application;
FIG. 12A and FIG. 12B are an example flowchart of a communication method 1200 according to an embodiment of this application;
FIG. 13 is a diagram of a structure of a communication apparatus according to an embodiment of this application;
FIG. 14 is a diagram of a structure of another communication apparatus according to an embodiment of this application; and
FIG. 15 is a diagram of a structure of still another communication apparatus according to an embodiment of this application.

### DESCRIPTION OF EMBODIMENTS

To make the objectives, technical solutions, and advantages of this application clearer, the following further describes this application in detail with reference to accompanying drawings. Specific operation methods in method embodiments can also be applied to apparatus embodiments or a system embodiment. In descriptions of this application, unless otherwise specified, "a plurality of" means at least two.

In embodiments of this application, unless otherwise specified or there is a logical conflict, terms and/or descriptions in different embodiments are consistent and may be mutually referenced, and technical features in different embodiments may be combined into a new embodiment based on an internal logical relationship between the technical features.

It can be understood that various numbers in this application are merely used for differentiation for ease of description, but are not intended to limit the scope of this application. Sequence numbers of the foregoing procedures do not mean execution sequences. The execution sequences of the procedures should be determined based on functions and internal logic of the procedures.

In the specification, the claims, and the accompanying drawings of this application, the terms "first", "second", "third", "fourth", and various other ordinal number terms (if existent) are intended to distinguish between similar objects but do not necessarily indicate a specific order or sequence. It should be understood that the data termed in such a way are interchangeable in appropriate circumstances so that embodiments described herein can be implemented in other orders than the order illustrated or described herein. In addition, the terms "include", "contain" and any other variants thereof are intended to cover non-exclusive inclusion, for example, a process, method, system, product, or device that includes a list of steps or units is not necessarily limited to those steps or units expressly listed, but may include other steps or units not expressly listed or inherent to the process, method, product, or device.

The technical solutions provided in this application can be applied to various communication systems, for example, a 5th generation (5th generation, 5G) system, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application can also be applied to future communication systems such as a 6th generation mobile communication system. The technical solutions provided in this application can also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

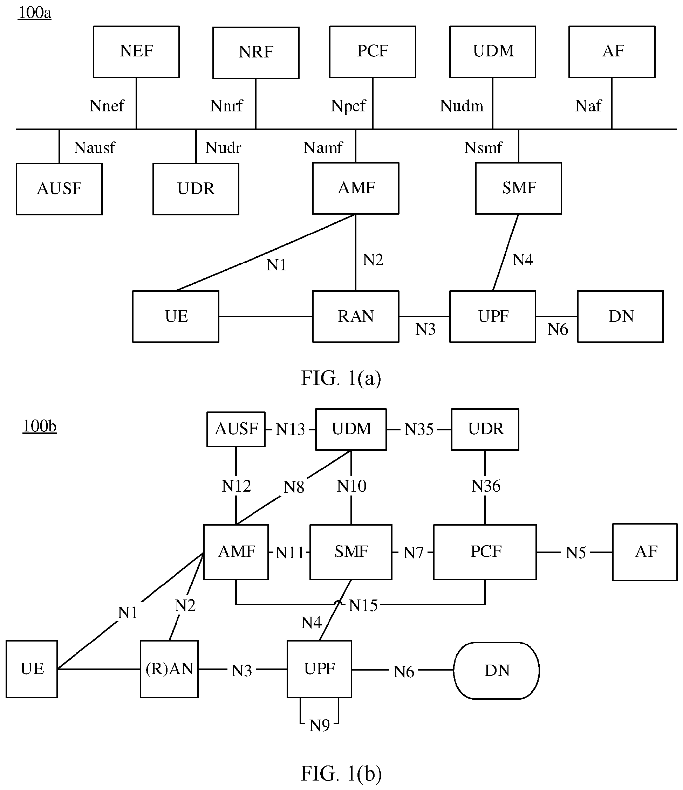

The following describes, by using examples with reference to FIG. 1(a) and FIG. 1(b), a 5G system to which embodiments of this application are applicable. It should be understood that the 5G system described in this specification is merely an example, and should not constitute any limitation on this application.

It should also be understood that some network elements in the 5G system may communicate with each other through a service-based interface or a point-to-point interface. The following separately describes a 5G system framework based on a point-to-point interface and a 5G system framework based on a service-based interface with reference to FIG. 1(a) and FIG. 1(b).

As an example for description, FIG. 1(a) is a diagram of an architecture of a 5G system 200a to which an embodiment of this application is applicable. FIG. 1(a) is a diagram of a 5G network architecture based on a point-to-point interface. As shown in FIG. 1(a), the network architecture may include but is not limited to the following network elements (or referred to as function network elements, functional entities, nodes, devices, or the like):
a (radio) access network (radio access network, (R)AN) device, an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an AF network element, a data network (data network, DN), a network slice selection function (network slice selection function, NSSF), an authentication server function (authentication server function, AUSF), unified data management (unified data management, UDM), a BSF network element, and a unified data repository (unified data repository, UDR).

The following briefly describes the network elements shown in FIG. 1(a).
1. User equipment (user equipment, UE) may be referred to as a terminal device (terminal equipment), a terminal apparatus, an access terminal, a subscriber unit, a subscriber station, a mobile console, a mobile station (mobile station, MS), a mobile terminal (mobile terminal, MT), a remote station, a remote terminal, a mobile device, a user terminal, a terminal, a wireless communication device, a user agent, or a user apparatus. The terminal device may be a device that provides a user with voice/data connectivity, for example, a handheld device or a vehicle-mounted device having a wireless connection function. Currently, some examples of the terminal may be: a mobile phone (mobile phone), a tablet computer (pad), a computer having wireless receiving and sending functions (for example, a notebook computer or a palmtop computer), a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, and a terminal device in a future evolved public land mobile network (public land mobile network, PLMN).

The terminal device may alternatively be a terminal device in an internet of things (internet of things, IoT) system. IoT is an important part in future development of information technologies. A main technical feature of the IoT is to connect things to a network by using a communication technology, to implement an intelligent network for human-machine interconnection and interconnection between things. The IoT technology can achieve massive connections, deep coverage, and terminal power saving by using, for example, a narrowband (narrowband, NB) technology.

The terminal device may alternatively include an intelligent printer, a train detector, and the like. Main functions include collecting data (which is a function of some terminal devices), receiving control information and downlink data of a network device, sending an electromagnetic wave, and transmitting uplink data to the network device.

It should be understood that the user equipment may be any device capable of accessing a network. The terminal device may communicate with an access network device by using an air interface technology.

Optionally, the user equipment may be used as a base station. For example, the user equipment may be used as a scheduling entity that provides a sidelink signal between user equipment in V2X, D2D, or the like. For example, a cellular phone and an automobile communicate with each other by using a sidelink signal. The cellular phone communicates with a smart household device without relaying a communication signal by a base station.

2. The (radio) access network ((radio) access network, (R)AN) device is configured to provide a network access function for authorized user equipment in a specific area, and is capable of using transmission tunnels of different quality of service-based on a level of the user equipment, a service requirement, and the like.

The (R)AN can manage radio resources and provide an access service for the user equipment, to forward a control signal and user equipment data between the user equipment and a core network. The (R)AN can also be understood as a base station in a conventional network.

For example, the access network device in this embodiment of this application may be any communication device having wireless receiving and sending functions for communicating with the user equipment. The access network device includes but is not limited to an evolved NodeB (evolved NodeB, eNB), a gNB or a transmission point (TRP or TP) in a 5G system, for example, NR, or one antenna panel or a group of antenna panels (including a plurality of antenna panels) of a base station in the 5G system, or may be a network node that forms a gNB or a transmission point, for example, a baseband unit (BBU) or a distributed unit (distributed unit, DU).

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer or is converted from information at the PHY layer. Therefore, in such an architecture, it may be considered that higher layer signaling such as RRC layer signaling is sent by the DU or is sent by DU+AAU. It can be understood that the access network device may be a device including one or more of a CU node, a DU node, or an AAU node. In addition, the CU may be classified as an access network device in an access network (radio access network, RAN), or the CU may be classified as an access network device in the core network (core network, CN). This is not limited in this application.

3. A user plane function (user plane function, UPF) network element is configured for packet routing and forwarding, quality of service (quality of service, QoS) handling for user plane data, and the like.

In a 5G communication system, a user plane network element may be a user plane function (user plane function, UPF) network element. In a future communication system, a user plane network element may still be the UPF network element, or may have another name. This is not limited in this application.

4. Access and mobility management function (access and mobility management function, AMF) network element: The access and mobility management function network element is mainly configured for mobility management, access management, and the like, and may be configured to implement a function in an MME function other than session management, for example, an access authorization/authentication function.

In a future communication system, an access and mobility management device may still be the AMF, or may have another name. This is not limited in this application.

5. The session management function (session management function, SMF) network element is mainly configured for session management, internet protocol (Internet Protocol, IP) address allocation and management of user equipment, selection of a manageable user plane function, termination of interfaces towards policy control and charging functions, downlink data notification, and the like.

In a future communication system, a session management network element may still be the SMF network element, or may have another name. This is not limited in this application.

6. The policy control function (policy control function, PCF) network element is configured for a unified policy framework to govern network behavior, and provides policy rule information and the like for a control plane function network element (for example, the AMF or the SMF).

In a future communication system, a policy control network element may still be the PCF network element, or may have another name. This is not limited in this application.

7. The application function (application function, AF) is configured for application impact on data routing, wirelessly accessing a network exposure function network element, and interacting with a policy framework for policy control, and the like.

In a future communication system, an application network element may still be the AF network element, or may have another name. This is not limited in this application.

8. The unified data management (unified data management, UDM) network element is configured to perform UE identifier handling, access authentication, registration and mobility management, and the like.

In a future communication system, unified data management may still be the UDM network element, or may have another name. This is not limited in this application.

9. The authentication server function (authentication server function, AUSF) network element is configured to provide an authentication service, generate a key to implement mutual authentication for user equipment, and support a unified authentication framework.

In a future communication system, an authentication server function network element may still be the AUSF network element, or may have another name. This is not limited in this application.

10. A network data analytics function (network data analytics function, NWDAF) network element is configured to: identify a network slice instance, and load load-level information of the network slice instance. The network data analytics function enables NF consumers to subscribe to or unsubscribe from periodic notifications and notify the consumers when a threshold is exceeded.

In a future communication system, a network data analytics function network element may still be the NWDAF network element, or may have another name. This is not limited in this application.

11. Data network (data network, DN): The DN is a network located outside an operator network. The operator network may access a plurality of DNs. The DN may be deployed with a plurality of services, and may provide a data service, a voice service, and/or the like for a terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

In FIG. 1(a), Nausf, Nnef, Npcf, Nudm, Naf, Namf, Nsmf, N1, N2, N3, N4, and N6 are interface sequence numbers. For meanings of the interface sequence numbers, refer to meanings defined in a 3GPP standard protocol. This is not limited herein.

In the network architecture shown in FIG. 1(a), the network elements may communicate with each other through interfaces shown in the figure. As shown in the figure, the UE and the AMF may interact with each other through an N1 interface, and an interaction message may be referred to as, for example, an N1 message (N1 message). The RAN and the AMF may interact with each other through an N2 interface, and the N2 interface may be configured for sending a non-access stratum (non-access stratum, NAS) message and the like. The RAN and the UPF may interact with each other through an N3 interface, and the N3 interface may be configured for transmitting user plane data and the like. The SMF and the UPF may interact with each other through an N4 interface, and the N4 interface may be configured for transmitting information such as tunnel identification information of an N3 connection, data buffering indication information, and a downlink data notification message. The UPF and the DN may interact with each other through an N6 interface, and the N6 interface may be configured for transmitting user plane data and the like. Relationships between other interfaces and network elements are shown in FIG. 1(a). For brevity, details are not described herein.

FIG. 1(b) is a diagram of a 5G network architecture based on a point-to-point interface. For descriptions of functions of network elements in the figure, refer to descriptions of functions of corresponding network elements in FIG. 1(a). Details are not described again. A main difference between FIG. 1(b) and FIG. 1(a) lies in that interfaces between network elements in FIG. 1(b) are point-to-point interfaces rather than service-based interfaces.

In the architecture shown in FIG. 1(b), names and functions of the interfaces between the network elements are as follows:
(1) N7 is an interface between a PCF and an SMF, configured to deliver a protocol data unit (protocol data unit, PDU) session granularity and service data flow granularity control policy.
(2) N15 is an interface between the PCF and an AMF, configured to deliver a UE policy and an access control-related policy.
(3) N5 is an interface between an AF and the PCF, configured to deliver application service requests and report network events.
(4) N4 is an interface between the SMF and a UPF, configured to transmit information between a control plane and a user plane, including delivery of a forwarding rule, a QoS control rule, a traffic statistics rule, and the like that are from the control plane to the user plane, and information reporting by the user plane.
(5) N11 is an interface between the SMF and the AMF, configured to: transmit PDU session tunnel information between a RAN and the UPF, transmit a control message sent to UE, transmit radio resource control information sent to the RAN, and the like.
(6) N2 is an interface between the AMF and the RAN, configured to transmit radio bearer control information from a core network side to the RAN, and the like.
(7) N1 is an interface between the AMF and the UE, is unrelated to access, and is configured to transmit a QoS control rule and the like to the UE.
(8) N8 is an interface between the AMF and a UDM, used by the AMF to obtain access and mobility management-related subscription data and authentication data from the UDM, and used by the AMF to register current mobility management-related information and the like of the UE with the UDM.
(9) N10 is an interface between the SMF and the UDM, used by the SMF to obtain session management-related subscription data from the UDM, and used by the SMF to register current session-related information and the like of the UE with the UDM.
(10) N35 is an interface between the UDM and a UDR, used by the UDM to obtain user subscription data information from the UDR.
(11) N36 is an interface between the PCF and the UDR, used by the PCF to obtain policy-related subscription data and application data-related information from the UDR.
(12) N12 is an interface between the AMF and an AUSF, used by the AMF to initiate an authentication procedure to the AUSF, where a SUCI may be carried as a subscription identifier.
(13) N13 is an interface between the UDM and the AUSF, used by the AUSF to obtain a user authentication vector from the UDM to perform the authentication procedure.

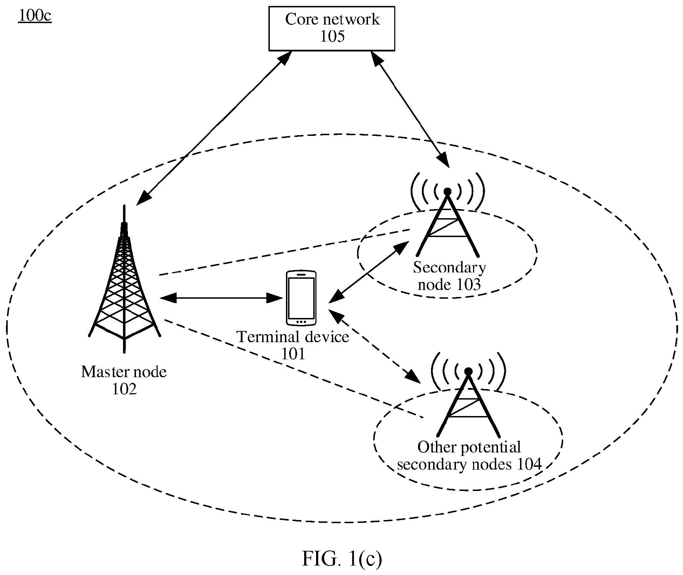

In an example, FIG. 1(c) is a diagram of an architecture of a dual connectivity (dual connectivity, DC) communication system 100c to which this application is applicable. Dual connectivity may also be referred to as multi-radio dual connectivity (multi-radio dual connectivity, MR-DC). Generally, the dual connectivity communication system supports simultaneous deployment of two radio access systems, and allows communication between devices based on the two radio access systems, so that radio resource utilization can be improved, a system handover delay can be reduced, and user and system performance can be improved.

It can be understood that the 5G communication system is used as an example for description in FIG. 1(a) and FIG. 1(b). However, this application is not limited thereto. For example, the radio access system in the communication system 100c may include but is not limited to the following systems: a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system, a new radio (new radio, NR) system, or a future evolved communication system (for example, a 6th generation (6th generation, 6G) system). For example, in the dual connectivity communication system, two same communication systems may be simultaneously deployed, or two different communication systems may be simultaneously deployed, for example, a long term evolution (long term evolution, LTE) system and a new radio (new radio, NR) system are simultaneously deployed. However, this is not limited in embodiments of this application.

As shown in (c) in FIG. 1, the communication system 100c may include one or more terminal devices 101, a master node (master node, MN) 102, a secondary node (secondary node, SN) 103, one or more other potential secondary nodes (other potential SNs) 104, and a core network 105. The master node 102 and the secondary node 103 (or the secondary node 104) may correspond to a same radio access system or different radio access systems.

It can be understood that the master node and the secondary nodes in the communication system 100c are all network devices. The master node 102 may be a network device during initial access of the terminal device 101, and is responsible for radio resource control (radio resource control, RRC) communication with the terminal device 101. A secondary node 103 may be added during RRC reconfiguration, and is configured to provide additional radio resources.

The terminal device 101 establishes connections to both the master node 102 and the secondary node 103, that is, the terminal device 101 can support simultaneous access to two different nodes. In addition, the terminal device 101 may be further handed over from the secondary node 103 to any one of the other potential secondary nodes 104. The master node 102 and the secondary node 103 may establish connections to the core network 105. For example, the master node 102 may transmit control information or user data to the core network 105 through a backhaul (backhaul) interface (for example, an N2 interface), and the secondary node 103 may transmit user data to the core network 105 through a backhaul (backhaul) interface (for example, an S1 interface). The master node 102 and the secondary nodes (including the secondary node 103 and other potential secondary nodes 104) may also communicate with each other.

The core network 105 may be a core network in any communication system. The 5G communication system is used as an example. A core network 105 includes a plurality of network function (network function, NF) network element entities, for example, an access and mobility management function (access and mobility management function, AMF), a session management function (session management function, SMF), a user plane function (user plane function, UPF), a policy control function (policy control function, PCF) network element, unified data management (unified data management, UDM), and an authentication server function (authentication server function, AUSF). Different NFs communicate with each other through service-based interfaces or point-to-point interfaces to implement corresponding functions such as terminal registration, session establishment/update/deletion, location change, slicing, policy management, and capability exposure. For specific descriptions of the core network 105, refer to corresponding descriptions in FIG. 1(a) and FIG. 1(b). Details are not described herein again.

Because the terminal device 101 may simultaneously receive services of a plurality of cells of one node, a serving cell group provided by the master node 102 for the terminal device 101 may be referred to as a master cell group (master cell group, MCG), and a serving cell group provided by the secondary node 103 for the terminal device 101 may be referred to as a secondary cell group (secondary cell group, SCG). The MCG and the SCG each include at least one cell (cell). A primary cell (primary cell, PCell) exists in the master node 102, and a primary SCG cell (primary SCG cell, PSCell) (or referred to as a primary secondary cell) exists in the secondary node 103.

For ease of understanding embodiments of this application, the following describes some terms in this application by using examples. It can be understood that the following terms are described by using an existing NR system as an example. However, it should be understood that in other communication systems (for example, a future 6th generation communication system), the following terms may have other names. This is not limited in this application.

### 1. Enhanced CPAC

In a CPA/CPC procedure, after UE completes a random access procedure with a target PSCell, the UE releases a CPA/CPC configuration. Therefore, before a network is reconfigured or restarted, the UE cannot perform a subsequent CPA/CPC. To reduce a delay and signaling overheads caused by an SCG change, a subsequent CPC/CPA after SCG selective activation or an SCG change allows that after the SCG change and before network reconfiguration, the CPA/CPC continues to be performed by using a CPA/CPC configuration previously stored by the UE. This CPA/CPC is referred to as an enhanced CPAC or may be referred to as a continuous CPAC.

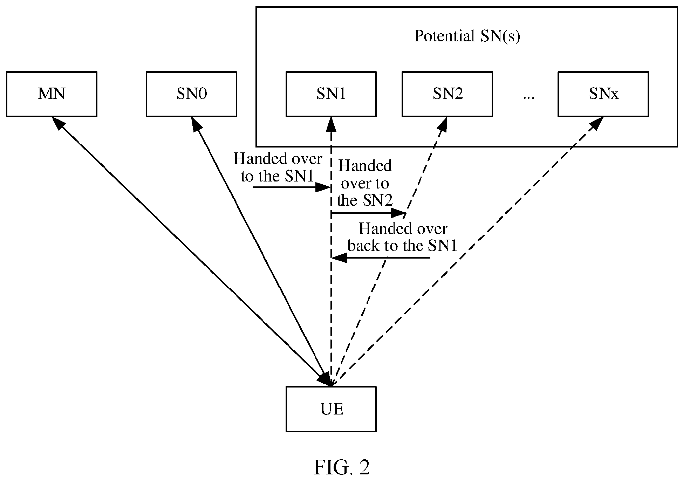

FIG. 2 shows a possible example. In this example, UE establishes connections to cells of a master station MN and an SN0. A network configures a CPC configuration for the UE, where candidate SNs include an SN1, an SN2, ..., and an SNx.

If detecting that a configuration execution condition corresponding to the SN1 is satisfied, the UE is handed over to a cell of the SN1. After completing a connection to the SN1, the UE does not release the CPC configuration, that is, continues to maintain the CPC configuration and performs a CPC procedure.

The UE may continue to perform condition evaluation (that is, evaluate whether an execution condition is satisfied). When other candidate cells satisfy execution conditions, the UE triggers a change procedure. For example, the UE is handed over from the SN1 to the SN2, or the UE is handed over from a PSCell1 of the SN1 to a PSCell2. It can be understood that, after the UE is handed over to the SN2, the UE may be further handed over back to the SN1.

It can be understood that the foregoing procedure is an example, but this application is not limited thereto. Alternatively, the MN may perform a CPA procedure when the SN0 has not been established, and subsequently perform a condition change based on information about a CPA configuration.

### 2. PDU split

The PDU split means that some services of a PDU session are transmitted by a master node, and some services of the PDU session are transmitted by a secondary node.

### 3. SRB3

The SRB3 is a signaling radio bearer between UE and an SN.

### 4. Primary SCG cell (PSCell)

The PSCell is an SCG cell that is randomly accessed by UE when the UE performs a synchronous reconfiguration procedure for a dual connectivity operation.

### 5. Secondary cell group (SCG)

The SCG is a serving cell subset including a PSCell and zero or more secondary cells.

### 6. Secondary cell (Secondary Cell)

The secondary cell is a cell that provides additional radio resources above a special cell for UE configured with CA.

To enable user equipment (user equipment, UE) to quickly add a primary secondary cell group (secondary cell group, SCG) cell (primary SCG cell, PSCell), a conditional PSCell addition/change (conditional PSCell addition/change, CPAC) is introduced into an existing standard. The CPAC includes a conditional PSCell addition (conditional PSCell addition, CPA) and a conditional PSCell change (conditional PSCell change, CPC). The CPA or the CPC is an addition or a change of a primary SCG cell (PSCell) of a secondary station in a DC scenario. A main concept is that a network configures a plurality of candidate PSCells cells, and each candidate PSCell cell configuration includes a configuration of a candidate cell and a corresponding execution condition. When the UE learns through evaluation that an execution condition of a candidate cell is satisfied, the UE may perform a PSCell addition or change.

### 7. CPAC

Mobility of a terminal device may trigger a PSCell of the terminal device to change, that is, the terminal device may be handed over from one PSCell to another PSCell. It should be understood that the PSCell change may be that the terminal device is handed over from a cell of a secondary node to a cell of another secondary node, or may be that the terminal device is handed over from a cell of a secondary node to another cell of the secondary node. In addition, the PSCell change may be triggered by a master node, or may be triggered by a secondary node.

To enable the terminal device to quickly add or change a PSCell, a conditional PSCell addition/change (conditional PSCell addition/change, CPAC) mechanism is introduced.

For example, an implementation of the CPAC is as follows: A network side first configures a plurality of candidate PSCells, and notifies the terminal device of configurations of the plurality of candidate PSCells and an execution condition corresponding to each candidate PSCell. Subsequently, when determining that a candidate PSCell satisfies an execution condition corresponding to the candidate PSCell, the terminal device may directly access the candidate PSCell that satisfies the execution condition. In this way, the network side does not need to wait for the terminal device to report a measurement report before delivering a new PSCell configuration to the terminal device, so that a delay needed to add or change a PSCell can be shortened. In a scenario in which a secondary node triggers a PSCell change, a case in which a measurement report cannot be reported and a reconfiguration message cannot be delivered when signal quality of a PSCell quickly changes can be avoided. This improves robustness of the PSCell change.

The CPAC includes a conditional PSCell addition (conditional PSCell addition, CPA) and a conditional PSCell change (conditional PSCell change, CPC). The CPA or the CPC is an addition or a change of a PSCell of a secondary node in a DC scenario.

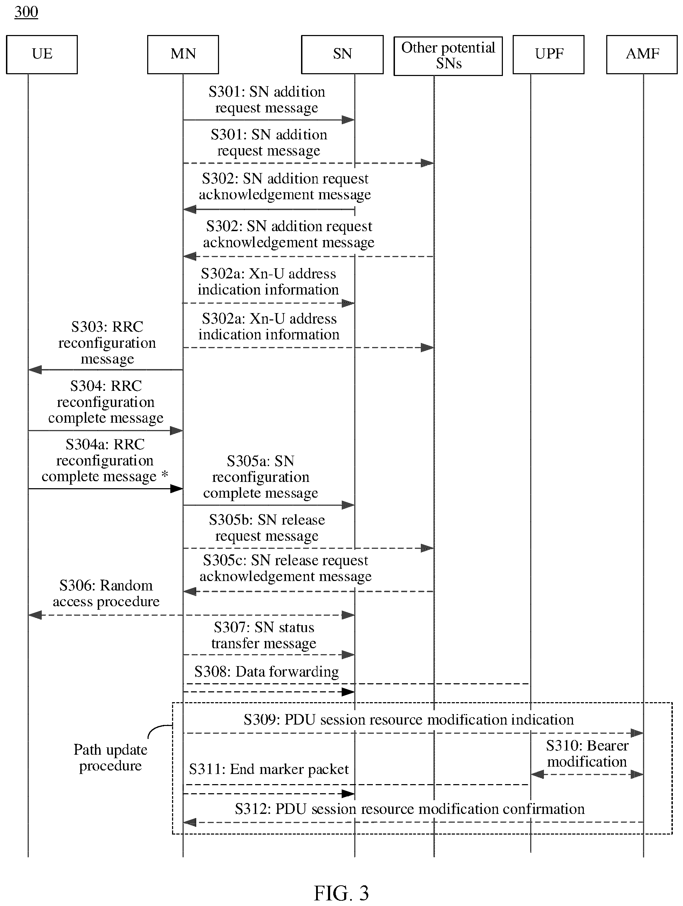

With reference to steps in FIG. 3, the following first briefly describes a CPA procedure provided in embodiments of this application. Only main steps are shown in this procedure. For a detailed procedure, refer to 3GPP TS 37.340.

S301: When determining to configure a CPA for UE, an MN sends an SN addition request (SN Addition Request) message to at least one candidate SN, where the SN addition request message is used to request the candidate SN to allocate resources. The SN addition request message includes a security parameter, and the security parameter is used to enable SRB3 establishment. In an example, the SN and other potential SNs shown in FIG. 3 are candidate SNs of the UE.

It can be understood that a quantity of candidate SNs is not limited in this application. To be specific, the MN may send the SN addition request message to only one SN, or may send the addition request message to at least two SNs. This is not limited in this application.

S302: After receiving the SN addition request message from the MN, the candidate SN sends an SN addition request acknowledgement message to the MN after confirming that the resource request can be allowed.

Optionally, in S302a, the MN sends Xn-U address indication information to the SN.

S303: The MN sends an RRC reconfiguration (RRC Reconfiguration) message to the UE, where the RRC reconfiguration message includes a CPA configuration.

For example, the CPA configuration includes one or more pieces of candidate SCG configuration information and an execution condition associated with each piece of candidate SCG configuration information. An SCG configuration is from the SN. Each candidate SCG configuration includes one SN counter, that is, a conditional configuration corresponding to the SN includes the SN counter. An SN counter value is carried in an Sk-counter information element.

For example, information about the CPA configuration includes SCG configuration (SCG configuration) information of one or more candidate PSCells and an execution condition associated with the one or more pieces of SCG configuration information. It can be understood that each piece of SCG configuration information corresponds to one PSCell, and therefore each PSCell has a corresponding execution condition.

S304: After receiving the RRC reconfiguration message from the MN, the UE returns an RRC reconfiguration complete (RRC Reconfiguration complete) message to the MN. The UE uses an RRC configuration that is other than the CPA configuration and that is in the RRC reconfiguration message.

S304a: The UE starts to evaluate the execution condition associated with the SCG configuration information. If an execution condition of a candidate PSCell cell is satisfied, the UE uses a configuration of the selected candidate PSCell in the RRC reconfiguration message (a configuration associated with the execution condition), and sends the RRC reconfiguration complete message to the MN. The RRC reconfiguration complete message includes an RRC reconfiguration complete message of the selected candidate PSCell, and information that enables the MN to identify the selected candidate PSCell.

S305a: The MN sends an SN reconfiguration complete message to the SN, to notify the SN in which the selected PSCell is located that the UE successfully completes a reconfiguration procedure.

Optionally, in S305b, if other candidate SNs are configured, the MN sends SN release request messages to the other candidate SNs. After receiving the SN release request message, the candidate SN returns an SN release request acknowledgement message in S305c.

S306: The UE performs synchronization with a target PSCell (the foregoing selected candidate PSCell/the candidate cell that satisfies the execution condition). The synchronization may be implemented through a random access procedure. A detailed procedure is not limited in this application. It can be understood that a sequence in which the UE sends the RRC reconfiguration complete message and performs the random access procedure is not limited in this application.

S307: The MN sends an SN status transfer message to the SN.

S308: The MN performs data forwarding to the target SN.

S309 to S312: Perform a path update procedure. A detailed procedure is not limited in this application.

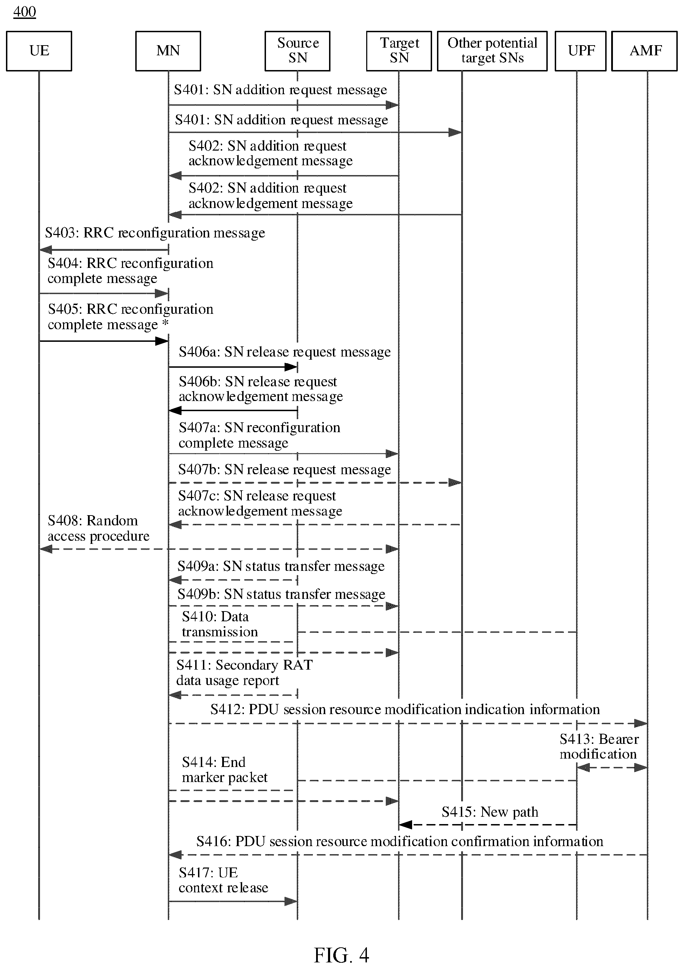

With reference to steps in FIG. 4, the following briefly describes a CPC procedure provided in embodiments of this application. Only main steps are shown in this procedure. For a detailed procedure, refer to 3GPP TS 37.340.

It can be understood that a source SN shown in FIG. 4 is an SN currently accessed by UE, and a target SN shown in FIG. 4 is a candidate SN of the UE, that is, a to-be-accessed SN.

S401: When determining to initiate a CPC procedure, an MN sends an SN addition request (SN Addition Request) message to at least one candidate SN, where the SN addition request message is used to request the candidate SN to allocate resources, and the like. The SN addition request message includes a CPC initiation indication (CPC initiation indication).

S402: The SN in which a candidate cell is located sends an SN addition request acknowledgement (SN Addition Request Acknowledgement) message to the MN after confirming that the resource request can be allowed.

S403: The MN sends an RRC reconfiguration message to the UE, where the RRC reconfiguration message includes a CPC configuration. The CPC configuration includes one or more pieces of candidate SCG configuration information and an execution condition associated with each piece of SCG configuration information. An SCG configuration is from the candidate target SN.

S404: After receiving the RRC reconfiguration message from the MN, the UE returns an RRC reconfiguration complete message to the MN. The UE uses an RRC configuration that is other than the CPC configuration and that is in the RRC reconfiguration message.

S405: The UE starts to evaluate the execution condition. If an execution condition of a candidate cell is satisfied, the UE uses a configuration of the selected candidate PSCell in the RRC reconfiguration message, and sends the RRC reconfiguration complete message to the MN. The RRC reconfiguration complete message includes an RRC reconfiguration complete message of the selected candidate PSCell, and information that enables the MN to identify the selected candidate PSCell.

It can be understood that the candidate SCG configuration information herein corresponds to the candidate PSCell. Therefore, the execution condition associated with the SCG configuration information can also be understood as an execution condition corresponding to one or more candidate PSCells.

S406a: The MN sends an SN release request message to the source SN, to notify the source SN to stop data transmission with the UE.

S406b: After receiving the SN release request message from the MN, the source SN sends an SN release request acknowledgement message to the MN.

S407a: The MN sends an SN reconfiguration complete message to the target SN, to notify the SN in which the selected candidate PSCell is located that a reconfiguration procedure is completed.

Optionally, in S407b, if other candidate SNs are configured, the MN sends SN release request messages to the other candidate SNs. After receiving the SN release request message, the candidate SN returns an SN release acknowledgement message in S407c.

S408: The UE performs synchronization with a target PSCell (the foregoing selected candidate PSCell/the candidate cell that satisfies the execution condition). The synchronization may be implemented through a random access procedure.

S409a and S409b: Optionally, the source SN sends an SN status transfer message to the target SN through the MN.

S410: The MN performs data forwarding to the target SN.

S411 to S417: Perform a path switch procedure. A detailed procedure is not limited in this application.

### 8. Communication key

The communication key in embodiments of this application is a key used to protect air interface communication security between devices. For example, a communication key between UE and an SN is used to protect communication security between the UE and the SN. In an example, the communication key includes a signaling plane key (which may also be referred to as an RRC key) and/or a user plane key (UP key). The signaling plane key is used to protect security of a signaling plane message transmitted between devices, and the user plane key is used to protect security of user plane data transmitted between devices. The signaling plane key may include a signaling plane integrity protection key KRRCint and/or a signaling plane encryption/decryption key KRRCenc. KRRCint is used to prevent the signaling plane message from being tampered with, and KRRCenc is used to prevent the signaling plane message from being leaked. The user plane key may include a user plane integrity protection key KUPint and/or a user plane encryption/decryption key KUPenc. KUPint is used to prevent the user plane data from being tampered with, and KUPenc is used to prevent the user plane data from being leaked.

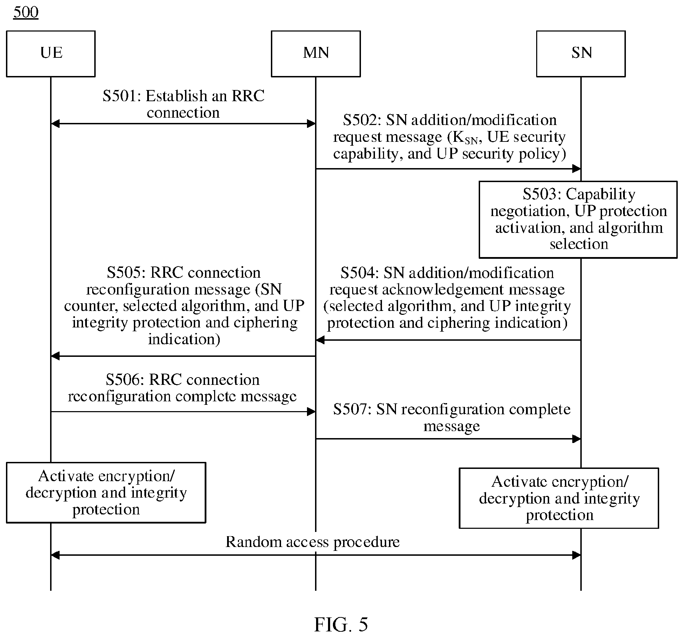

In a dual connectivity scenario, control plane security protection between the UE and an MN is based on a signaling plane key (for example, an integrity protection key KRRCint and an encryption/decryption key KRRCenc) derived (or derived) from KgNB, and user plane security protection between the UE and the MN is based on a user plane key (for example, an integrity protection key KUPint and/or an encryption/decryption key KUPenc) derived from KgNB. Control plane security protection between the UE and the SN is based on a signaling plane key (for example, an integrity protection key and an encryption/decryption key) derived from K_{SN}, and user plane security protection between the UE and the SN is based on a user plane key (for example, an integrity protection key and an encryption/decryption key) derived from K_{SN}. The SN determines whether to enable user plane security protection between the UE and the SN. In other words, the UE and the MN may derive, by using KgNB, a communication key used to protect communication security between the UE and the MN; and the UE and the SN may derive, by using K_{SN}, a communication key used to protect communication security between the UE and the SN. The following describes a security establishment procedure between UE and an SN with reference to FIG. 5.

S501: Establish an RRC connection between the UE and an MN. A detailed procedure is not limited in this application.

S502: The MN sends an SN addition/modification request to the SN, where the request is used to negotiate on available resources, a configuration, and an algorithm that is used by the SN. If new K_{SN} is needed, the MN generates K_{SN}, and sends K_{SN} to the SN by using the SN addition/modification request. The SN addition/modification request further includes a UE security capability and a UP security policy. In a PDU split scenario, the SN addition/modification request may further include a user plane integrity protection and ciphering activation decision.

The MN maintains a 16-bit SN counter in an access stratum security context. When the MN derives K_{SN}, the SN counter is used as an input. For example, input parameters for deriving K_{SN} by the MN include KgNB, the SN counter, and a length of the SN counter.

The MN needs to maintain the SN counter in the access stratum security context, but the UE does not need to maintain the SN counter, because the MN provides the UE with a current SN counter when the UE needs to compute new K_{SN}. If the MN determines to release a connection to the SN and then restarts a connection to the same SN, the SN counter needs to keep increasing to keep K_{SN} that is computed fresh.

Inputs for deriving K_{SN} by the MN mainly include KgNB, the SN counter, the length of the SN counter, and the like.

S503: The SN allocates necessary resources and selects a security algorithm. If the SN receives new K_{SN}, the SN uses new K_{SN} to compute a needed RRC key and UP key. For the UP key, in a non-PDU split scenario, the SN may determine, based on the received UP security policy, to derive the UP key. For example, the SN derives the corresponding key only when determining to activate user plane integrity protection and/or ciphering. In the PDU split scenario, the SN may determine, based on the received user plane integrity protection and ciphering activation decision, to derive the key. For example, the SN derives the corresponding key only when the activation policy indicates activation.

S504: The SN sends an SN addition/modification acknowledgement message to the MN, to indicate availability of the requested resources, an identifier for the selected algorithm, and a UP integrity protection and ciphering indication to the MN.

S505: The MN sends an RRC reconfiguration message to the UE, to indicate the UE to configure a new DRB and/or SRB for the SN. The message includes the SN counter used to notify the UE that new K_{SN} needs to be derived, and further includes the identifier for the algorithm, and the UP integrity protection and ciphering indication.

S506: After the UE successfully receives the RRC reconfiguration message, if the RRC reconfiguration message includes the SN counter, the UE derives K_{SN} based on the received SN counter. The UE sends an RRC reconfiguration complete message to the MN. The UE derives RRC and UP keys for communication security between the UE and the SN based on K_{SN}, and activates RRC protection and user plane protection based on the received indication.

It can be understood that an algorithm and an input parameter used by the UE to derive K_{SN} are the same as those used by the MN to derive K_{SN}. Therefore, K_{SN} derived by the UE is the same as K_{SN} sent by the MN to the SN. In addition, the UE uses the same algorithm and input parameter to derive the RRC key and the UP key (namely, communication keys) by using K_{SN}. Therefore, the RRC key and the UP key (namely, the communication keys) derived by the UE are also the same as those derived by the SN.

S507: The MN sends an SN reconfiguration complete message to the SN, and the SN may activate encryption/decryption and integrity protection between the SN and the UE after receiving the message. If the SN has not activated encryption/decryption and integrity protection at this stage, the SN needs to activate encryption/decryption and integrity protection when receiving a random access request from the UE.

After the foregoing procedure, both the UE and the SN obtain same K_{SN}, and derive the same RRC key and UP key by using same K_{SN}, to protect communication security between the UE and the SN by using the same RRC key and UP key.

In the method procedure shown in FIG. 5, only a procedure of establishing security between the UE and the SN in a procedure scenario in which the MN adds or modifies one SN is defined. However, it can be learned from the example CPA and CPC procedures shown in FIG. 3 and FIG. 4 that a plurality of SNs may be configured for the MN. If a secure connection is established still based on the procedure shown in FIG. 5, different SNs may obtain same K_{SN}, and key isolation cannot be supported. Therefore, how to establish a secure connection between the UE and the SN in CPAC and enhanced CPAC scenarios is a problem that needs to be considered.

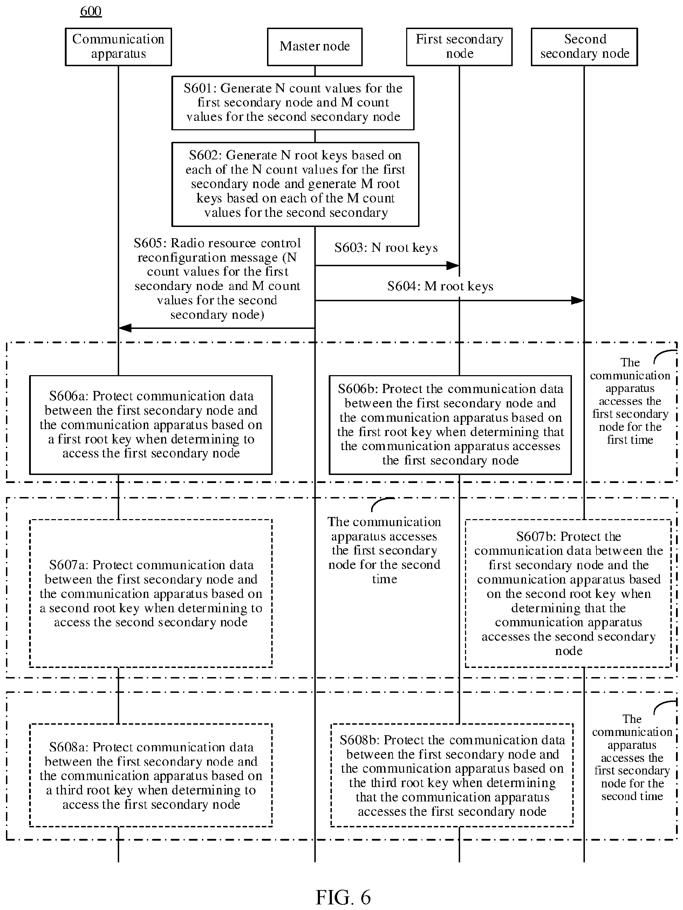

FIG. 6 is an example flowchart of a method 600 according to an embodiment of this application. The following describes the method 600 by using an example with reference to steps in FIG. 6.

S601: A master node generates N count values for a first secondary node and M count values for a second secondary node.

For example, when determining to configure the first secondary node and the second secondary node for a communication apparatus, the master node generates the N count values for the first secondary node and the M count values for the second secondary node, where N and M are positive integers greater than or equal to 1, the N count values for the first secondary node are different from each other, the M count values for the second secondary node are different from each other, and the N count values for the first secondary node are also different from the M count values for the second secondary node.

For example, the master node obtains a count value from an access stratum context, sequentially derives the N count values (for example, sequentially increases a previous count value by 1 to obtain the N count values) for the first secondary node based on the count value, and then sequentially derives the M count values for the second secondary node based on a latest count value (a largest value in the N count values).

S602: The master node generates N root keys based on each of the N count values for the first secondary node and generates M root keys based on each of the M count values for the second secondary node.

In an example, after obtaining the N count values for the first secondary node, the master node sequentially generates the N root keys for the first secondary node based on each of the N count values. In an example, the master node generates the N root keys for the first secondary node based on each of the N count values and a root key between the communication apparatus and the master node. The root key between the communication apparatus and the master node herein is used to protect communication data between the communication apparatus and the master node. It can be understood that because the N count values are different from each other, the N root keys are also different from each other.

In another example, each time the master node obtains one count value, the master node generates a root key based on the count value until the N root keys are generated.

Similarly, the master node generates the M root keys for the second secondary node based on each of the M count values. A specific solution is not described again.

S603: The master node sends the N root keys to the first secondary node. Correspondingly, the first secondary node receives the N root keys from the master node.

For example, after generating the N root keys for the first secondary node in S602, the master node sends the N root keys to the first secondary node. The first secondary node receives and stores the N root keys.

Optionally, in a possible implementation (denoted as a solution I), the master node may further indicate a use order of the N root keys to the first secondary node. For example, the master node sends first indication information to the first secondary node, where the first indication information indicates the use order of the N root keys. Alternatively, the master node may indicate the use order of the N root keys by using other implicit information. For example, the master node may indicate the use order of the N root keys (for example, sequentially using the N root keys from front to back) by setting a sorting order of the N root keys in a message.

Optionally, in another possible implementation (denoted as a solution II), the master node may further indicate an identifier of each of the N root keys to the first secondary node.

For example, the identifier of each root key may be a count value used to generate the root key. Specifically, for example, information sent by the master node to the first secondary node is: a count value 1 and a root key 1; a count value 2 and a root key 2; a count value 3 and a root key 3; ...; and a count value N and a root key N. The count value 1 is a count value used to generate the root key 1, the count value 2 is a count value used to generate the root key 2, and so on.

For another example, the identifier of each root key is an identifier allocated by the master node to the root key. Specifically, for example, information sent by the master node to the first secondary node is: an identifier 1 and a root key 1; an identifier 2 and a root key 2; an identifier 3 and a root key 3; ...; and an identifier N and a root key N. The identifier 1 identifies the root key 1, the identifier 2 identifies the root key 2, and so on.

S604: The master node sends the M root keys to the second secondary node. Correspondingly, the second secondary node receives the M root keys from the master node.

For example, after generating the M root keys for the second secondary node in S602, the master node sends the M root keys to the second secondary node. The second secondary node receives and stores the M root keys.

Optionally, the master node may further indicate a use order of the M root keys to the second secondary node. For details, refer to the solution I in S603. Details are not described herein again.

Optionally, in another possible implementation, the master node may further indicate an identifier of each of the M root keys to the second secondary node. For details, refer to the solution II in S603. Details are not described herein again.

S605: The master node sends a radio resource control reconfiguration message to the communication apparatus, where the radio resource control reconfiguration message includes the N count values for the first secondary node and the M count values for the second secondary node. Correspondingly, the communication apparatus receives the radio resource control reconfiguration message from the master node.

For example, after generating the N count values for the first secondary node and the M count values for the second secondary node in S601, the master node sends the N count values and the M count values to the communication apparatus. The communication apparatus receives and stores the N count values and the M count values. It can be understood that the N count values are associated with identification information of the first secondary node, and the M count values are associated with identification information of the second secondary node.

Optionally, in correspondence to the solution II, the master node may further indicate the identifiers of the N root keys corresponding to the N count values to the communication apparatus.

In an example, if the identifier of each root key is a count value used to generate the root key, the master node does not need to send a parameter other than the N count values to the communication apparatus to indicate the identifiers of the N root keys. Specifically, for example, information sent by the master node to the communication apparatus is: the count value 1, the count value 2, the count value 3, ..., and the count value N.

In another example, the identifier of each root key is an identifier allocated by the master node to the root key. In this case, in addition to the N count values, the master node further needs to send an additional parameter to the communication apparatus to indicate the identifiers of the N root keys. Specifically, for example, information sent by the master node to the communication apparatus is: the identifier 1 and the count value 1; the identifier 2 and the count value 2; the identifier 3 and the count value 3; ...; and the identifier N and the count value N. The identifier 1 identifies the root key 1 corresponding to the count value 1, the identifier 2 identifies the root key 2 corresponding to the count value 2, and so on.

For example, the communication apparatus in this embodiment of this application may be a terminal device or a component of the terminal device (for example, a chip or a circuit of the terminal device). This is not limited in this application.

Optionally, the master node may further indicate a use order of the N count values for the first secondary node to the communication apparatus. For example, the master node sends third indication information to the communication apparatus, where the third indication information indicates the use order of the N count values. Alternatively, the master node may indicate the use order of the N count values by using other implicit information. For example, the master node may indicate the use order of the N count values (for example, sequentially using the N count values from front to back) by setting a sorting order of the N count values in a message. Alternatively, the use order of the N count values may be indicated by using a preconfigured rule (for example, sequentially using the N count values in ascending order).

Similarly, the master node may further indicate a use order of the M count values for the second secondary node to the communication apparatus. A specific solution is similar to that in the foregoing descriptions, and details are not described herein again.

It can be understood that the use order of the N count values indicated by the master node to the communication apparatus corresponds to the use order of the N root keys indicated by the master node to the first secondary node. In other words, a count value that is the x^{th} to be used in the N count values is a count value used to generate a root key that is the x^{th} to be used in the N root keys, where x is a positive integer greater than or equal to 1 and less than or equal to N. Similarly, the use order of the M count values indicated by the master node to the communication apparatus corresponds to the use order of the M root keys indicated by the master node to the second secondary node.

S606a: The communication apparatus protects communication data between the first secondary node and the communication apparatus based on a first root key when determining to access the first secondary node.

In an example, the N count values for the first secondary node that are received by the communication apparatus in S605 are included in first secondary cell group conditional configuration information of the first secondary node, and the first secondary cell group conditional configuration information further includes a first execution condition corresponding to a primary secondary cell of the first secondary node. When the first execution condition is satisfied, the communication apparatus determines to access the first secondary node. It can be understood that, that the communication apparatus determines to access the first secondary node in this embodiment of this application means that the communication apparatus is to (or expects to) access the first secondary node, or the communication apparatus determines to initiate a procedure of accessing the first secondary node.

The communication apparatus protects the communication data between the first secondary node and the communication apparatus based on the first root key when determining to access the first secondary node. For example, the communication apparatus generates a first communication key based on the first root key, and protects the communication data between the communication apparatus and the first secondary node by using the first communication key.

The first root key is generated by the communication apparatus based on a count value that is in the N count values for the first secondary node and that is the first to be used. The count value that is the first to be used is a count value with a highest use ranking in the N count values, or a count value that is most preferentially used in the N count values. For example, the communication apparatus determines, based on the third indication information from the master node or the preconfigured rule, the count value that is in the N count values for the first secondary node and that is the first to be used.

In a possible implementation (denoted as a solution 1), when determining to access the first secondary node, the communication apparatus determines, from the N count values for the first secondary node based on the use order of the N count values, a first count value that is the first to be used, generates the first root key based on the first count value, generates the first communication key based on the first root key, and protects the communication data between the first secondary node and the communication apparatus by using the first communication key.

In another possible implementation (denoted as a solution 2), after receiving the N count values for the first secondary node from the master node, the communication apparatus separately generates the N root keys for the first secondary node based on each of the N count values, and then stores the N root keys based on the use order. It can be understood that the N root keys respectively correspond to the N count values, and therefore the use order of the N root keys corresponds to the use order of the N count values. When determining to access the first secondary node, the communication apparatus determines the first root key corresponding to the first count value that is in the N count values and that is the first to be used (or the communication apparatus determines, based on the use order of the N root keys, the first root key that is the first to be used), generates the first communication key based on the first root key, and protects the communication data between the first secondary node and the communication apparatus by using the first communication key.

In another possible implementation (denoted as a solution 3), after receiving the N count values for the first secondary node from the master node, the communication apparatus separately generates the N root keys based on each of the N count values, separately generates N communication keys for the first secondary node based on each of the N root keys, and then stores the N communication keys based on the use order. It can be understood that the N communication keys respectively correspond to the N count values, and therefore a use order of the N communication keys corresponds to the use order of the N count values. When determining to access the first secondary node, the communication apparatus determines the first communication key corresponding to the first count value that is in the N count values and that is the first to be used (or the communication apparatus determines, based on the use order of the N communication keys, the first communication key that is the first to be used), and then protects the communication data between the first secondary node and the communication apparatus by using the first communication key.

Optionally, in correspondence to the solution II, the communication apparatus may send an identifier of the first root key to the master node. For example, the identifier of each root key may be a count value used to generate the root key (where for details, refer to the example of the solution II in S605). It is assumed that the first count value herein is the count value 1 in the foregoing example, and the first root key herein is the root key 2 in the foregoing example. In this case, after generating the root key 1 based on the count value 1, the communication apparatus sends the count value 1 to the master node. For another example, the identifier of each root key is an identifier allocated by the master node to the root key (where for details, refer to the example of the solution II in S605). It is assumed that the first count value herein is the count value 1 in the foregoing example, and the first root key herein is the root key 2 in the foregoing example. In this case, after generating the root key 1 based on the count value 1, the communication apparatus sends the identifier 1 (namely, the identifier of the first root key) to the master node. It can be understood that, in the solution II, when determining to access the first secondary node, the communication apparatus may randomly select a count value from the N count values for the first secondary node as the count value that is the first to be used, or the communication apparatus selects, from the N count values for the first secondary node based on a preconfigured use order or an order indicated by the master node, the count value that is the first to be used.

Correspondingly, after receiving the identifier of the first root key from the communication apparatus, the master node sends the identifier of the first root key to the first secondary node.

S606b: The first secondary node protects the communication data between the first secondary node and the communication apparatus based on the first root key when determining that the communication apparatus accesses the first secondary node.

For example, when determining that the communication apparatus accesses the first secondary node, the first secondary node determines the first root key. For example, when receiving a radio resource control reconfiguration complete message from the master node, the first secondary node determines that the terminal apparatus accesses the first secondary node.

In correspondence to the solution I, in a possible implementation, the first root key is a root key that is in the N root keys received by the first secondary node in S603 and that is the first to be used. For example, the first secondary node determines the use order of the N root keys for the first secondary node based on the first indication information from the master node or the preconfigured rule, and then determines, from the N root keys based on the use order of the N root keys, the root key that is the first to be used.

In a possible implementation (denoted as a solution a), when determining to access the first secondary node, the communication apparatus determines, from the N root keys for the first secondary node based on the use order of the N root keys, the first root key that is the first to be used, and then protects the communication data between the first secondary node and the communication apparatus by using the first root key. For example, the first secondary node generates the first communication key based on the first root key, and protects the communication data between the communication apparatus and the first secondary node by using the first communication key.

In another possible implementation (denoted as a solution b), after receiving the N root keys for the first secondary node from the master node, the communication apparatus separately generates the N communication keys based on each of the N root keys, and then stores the N communication keys based on the use order. It can be understood that the N communication keys respectively correspond to the N root keys, and therefore the use order of the N communication keys corresponds to the use order of the N root keys. When determining to access the first secondary node, the communication apparatus determines the first communication key corresponding to the first root key that is in the N root keys and that is the first to be used (or the communication apparatus determines, based on the use order of the N communication keys, the first communication key that is the first to be used), and then the first secondary node protects the communication data between the first secondary node and the communication apparatus by using the first communication key.

In correspondence to the solution II, in another possible implementation, after receiving the identifier of the first root key from the master node, the first secondary node determines the first root key based on the identifier of the first root key, and then protects the communication data between the first secondary node and the communication apparatus by using the first root key.

Optionally, in S607a, the communication apparatus protects communication data between the first secondary node and the communication apparatus based on a second root key when determining to access the second secondary node.

For example, the M count values for the second secondary node that are received by the communication apparatus in S605 are included in second secondary cell group conditional configuration information of the second secondary node, and the second secondary cell group conditional configuration information further includes a second execution condition corresponding to a primary secondary cell of the second secondary node. When the second execution condition is satisfied, the communication apparatus determines to access the second secondary node.

When determining to access the second secondary node, the communication apparatus protects communication data between the second secondary node and the communication apparatus based on the second root key, where the second root key is generated by the communication apparatus based on a count value that is in the M count values for the second secondary node and that is the first to be used. A specific implementation is similar to the solution described in S606a, and a difference lies in that in S606a, the first root key is used, and the first root key is the root key that is in the N root keys for the first secondary node and that is the first to be used; while in S607a, the second root key is used, and the second root key is a root key that is in the M root keys for the second secondary node and that is the first to be used. For brevity, details are not described herein again.

Optionally, in S607b, the second secondary node protects the communication data between the second secondary node and the communication apparatus based on the second root key when determining that the communication apparatus accesses the second secondary node.

For example, the second secondary node determines the second root key when determining that the communication apparatus accesses the second secondary node, where the second root key is the root key that is in the M root keys for the second secondary node and that is the first to be used. A specific implementation is similar to the solution described in S606b, and a difference lies in that S606b is performed by the first secondary node, and the first secondary node uses the root key that is in the N root keys for the first secondary node and that is the first to be used; while S607b is performed by the second secondary node, and the second secondary node uses the root key that is in the M root keys for the second secondary node and that is the first to be used. For brevity, details are not described herein again.

Optionally, in S608a, the communication apparatus protects communication data between the first secondary node and the communication apparatus based on a third root key when determining to access the first secondary node.

For example, after the communication apparatus accesses the second secondary node, when the first execution condition is satisfied, the communication apparatus determines to access the first secondary node. In other words, after being disconnected from the first secondary node, the terminal apparatus determines to access the first secondary node again.

The communication apparatus protects the communication data between the first secondary node and the communication apparatus based on the third root key when determining to access the first secondary node again. For example, the communication apparatus generates a third communication key based on the third root key, and protects the communication data between the communication apparatus and the third secondary node by using the third communication key.

The third root key is generated by the communication apparatus based on a count value that is in the N count values for the first secondary node and that is the second to be used.

In correspondence to the solution 1, in a possible implementation, after generating the first root key by using the first count value, the communication apparatus deletes the first count value or marks the first count value as invalid. In this case, the communication apparatus determines, from the remaining N-1 count values available for the first secondary node, a second count value that is the first to be used, generates the third root key based on the second count value, generates the third communication key based on the third root key, and protects the communication data between the communication apparatus and the third secondary node by using the third communication key.

In correspondence to the solution 2, in another possible implementation, after generating the first communication key by using the first root key, the communication apparatus deletes the first root key or marks the first root key as invalid. In this case, the communication apparatus determines, from the remaining N-1 root keys available for the first secondary node, the third root key that is the first to be used, generates the third communication key based on the third root key, and protects the communication data between the communication apparatus and the third secondary node by using the third communication key.

In correspondence to the solution 3, in still another possible implementation, after protecting the communication data between the communication apparatus and the third secondary node by using the first communication key, the communication apparatus deletes the first communication key or marks the first communication key as invalid. In this case, the communication apparatus determines, from the remaining N-1 communication keys available for the first secondary node, the third communication key that is the first to be used, and then protects the communication data between the communication apparatus and the third secondary node by using the third communication key.

Optionally, in S608b, the first secondary node protects the communication data between the first secondary node and the communication apparatus based on the third root key when determining that the communication apparatus accesses the first secondary node.

For example, when the first secondary node determines that the communication apparatus accesses the first secondary node again, the first secondary node determines the third root key, and protects the communication data between the first secondary node and the communication apparatus based on the third root key, where the third root key is a root key that is in the N root keys for the first secondary node and that is the second to be used.

In correspondence to the solution a, after generating the first communication key by using the first root key, the first secondary node deletes the first root key or marks the first root key as invalid. In this case, the communication apparatus determines, from the remaining available N-1 root keys, the third root key that is the first to be used, generates the third communication key based on the third root key, and protects the communication data between the communication apparatus and the third secondary node by using the third communication key.

In correspondence to the solution b, after protecting the communication data between the communication apparatus and the first secondary node by using the first communication key, the first secondary node deletes the first communication key or marks the first communication key as invalid. In this case, the communication apparatus determines, from the remaining available N-1 communication keys, the third communication key that is the first to be used, and then protects the communication data between the communication apparatus and the third secondary node by using the third communication key.

In the foregoing solution, the master node generates different root keys for different secondary nodes, to implement key isolation between different secondary nodes. To be specific, when accessing different secondary nodes, the communication apparatus can use different root keys to protect communication data between the communication apparatus and the secondary nodes, to improve communication security.

In addition, the master node generates, for each secondary node, at least one count value and a root key corresponding to the at least one count value. This ensures that when establishing a connection to a same secondary node for a plurality of times, the communication apparatus can use a different root key each time to protect communication data between the communication apparatus and the secondary node, to improve communication security.

It can be understood that the method is described by using an example in which the communication apparatus establishes a secure connection to a secondary node when being handed over between the first secondary node and the second secondary node. However, this application is not limited thereto. In a possible example, the method can also be applied to handover between different cells of a same node. In this case, the first secondary node and the second secondary node in this embodiment may be considered as different cells of a same secondary node, and handover of the communication apparatus between the first secondary node and the second secondary node may be considered as handover of the communication apparatus from one cell of the secondary node to another cell of the secondary node. In an example, assuming that the communication apparatus accesses a first cell of the first secondary node in S606a, the communication apparatus protects the communication data between the communication apparatus and the first secondary node by using the first root key, where the first root key is generated based on the first count value that is in the N count values for the first secondary node and that is the first to be used. Optionally, the communication apparatus may delete the first count value or mark the first count value as "used". Further, if determining to be handed over from the first cell of the first secondary node to a second cell of the first secondary node, the communication apparatus may protect the communication data between the communication apparatus and the first secondary node by using the third root key, where the third root key is generated by the communication apparatus based on the count value that is in the N count values for the first secondary node and that is the second to be used. Because the N count values for the first secondary node are different from each other, the third root key is also different from the first root key. Therefore, according to the foregoing solution, the communication apparatus can generate different root keys by using different count values when accessing different cells of a same secondary node, to protect communication security. This can improve communication security. In other words, if the first secondary node has a plurality of candidate cells, when the communication apparatus is handed over between different cells of the first secondary node, the communication apparatus may generate corresponding root keys by sequentially using the N count values for the first secondary node. Correspondingly, the first secondary node may sequentially use the N root keys for the secondary node. In this way, the communication apparatus can use different root keys to access different cells of the first secondary node.

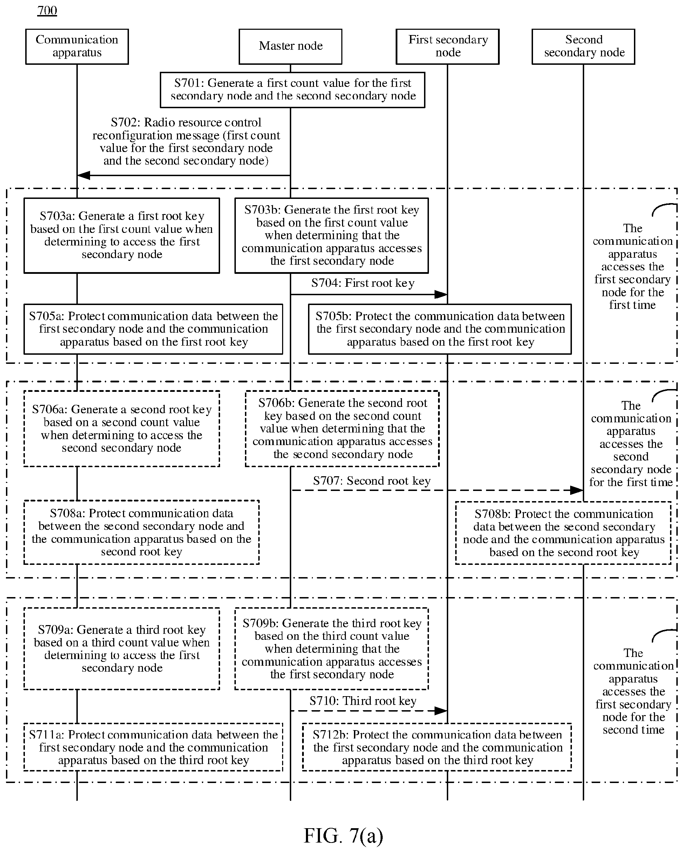

FIG. 7(a) is an example flowchart of a method 700 according to an embodiment of this application. The following describes the method 700 by using an example with reference to steps in FIG. 7(a).

S701: A master node generates a first count value for a first secondary node and a second secondary node.

For example, when determining to configure the first secondary node and the second secondary node for a communication apparatus, the master node generates the first count value for the first secondary node and the second secondary node.

In addition, the master node stores the first count value.

S702: The master node sends a radio resource control reconfiguration message to the communication apparatus, where the radio resource control reconfiguration message includes the first count value. Correspondingly, the communication apparatus receives the radio resource control reconfiguration message from the master node.

For example, after generating the first count value in S701, the master node sends the radio resource control reconfiguration message to the communication apparatus, where the radio resource control reconfiguration message includes the first count value. For example, the radio resource control reconfiguration message includes first secondary cell group conditional configuration information of the first secondary node and second secondary cell group conditional configuration information of the second secondary node, and the first count value is included in the first secondary cell group conditional configuration information and the second secondary cell group conditional configuration information. In other words, the first secondary cell group conditional configuration information of the first secondary node and the second secondary cell group conditional configuration information of the second secondary node include a same count value. Alternatively, the first count value is included in information that is other than the first secondary cell group conditional configuration information and the second secondary cell group conditional configuration information and that is in the radio resource control reconfiguration message. In other words, the radio resource control reconfiguration message includes only one count value (namely, the first count value herein), and the count value is for a plurality of secondary nodes.

After receiving the radio resource control reconfiguration message, the first secondary node stores the first count value.

S703a: The communication apparatus generates a first root key based on the first count value when determining to access the first secondary node.

In an example, the radio resource control reconfiguration message includes the first secondary cell group conditional configuration information of the first secondary node, and the first secondary cell group conditional configuration information further includes a first execution condition corresponding to a primary secondary cell of the first secondary node. When the first execution condition is satisfied, the communication apparatus determines to access the first secondary node.

The communication apparatus generates the first root key based on the first count value when determining to access the first secondary node.

Optionally, after generating the first root key by using the first count value, the communication apparatus may store the first count value, and optionally may further store marker information, where the marker information indicates that the first count value has been used. Alternatively, the first secondary node generates a second count value based on the first count value, and stores the second count value. Optionally, the communication apparatus deletes the first count value. For example, the first secondary node increases the first count value by n to obtain the second count value, and then stores the second count value and deletes the first count value, where n is an integer greater than or equal to 1.

S703b: The master node generates the first root key based on the first count value when determining that the communication apparatus accesses the first secondary node.

For example, when the master node determines that the communication apparatus accesses the first secondary node (for example, the master node receives a radio resource control reconfiguration complete message (or another message) from the communication apparatus, where the radio resource control reconfiguration complete message (or the another message) includes information about the first secondary node), the master node generates the first root key based on the first count value.

Optionally, after generating the first root key by using the first count value, the master node may store the first count value and marker information, where the marker information indicates that the first count value has been used; or the master node generates the second count value based on the first count value, and stores the second count value. Optionally, the master node deletes the first count value.

S704: The master node sends the first root key to the first secondary node. Correspondingly, the first secondary node receives the first root key from the master node.

For example, after generating the first root key, the master node sends the first root key to the first secondary node.

S705a: The communication apparatus protects communication data between the first secondary node and the communication apparatus based on the first root key.

For example, after generating the first root key, the communication apparatus protects the communication data between the first secondary node and the communication apparatus based on the first root key. For example, the communication apparatus generates a first communication key based on the first root key, and then protects the communication data between the first secondary node and the communication apparatus by using the first communication key.

S705b: The first secondary node protects the communication data between the first secondary node and the communication apparatus based on the first root key.

For example, after receiving the first root key from the master node, the first secondary node protects the communication data between the first secondary node and the communication apparatus based on the first root key. For example, the first secondary node generates the first communication key based on the first root key, and then protects the communication data between the first secondary node and the communication apparatus by using the first communication key.

S706a: The communication apparatus generates a second root key based on the second count value when determining to access the second secondary node.

In an example, the radio resource control reconfiguration message includes the second secondary cell group conditional configuration information of the second secondary node, and the second secondary cell group conditional configuration information includes a second execution condition corresponding to a primary secondary cell of the second secondary node. When the second execution condition is satisfied, the communication apparatus determines to access the second secondary node.

When determining to access the second secondary node, the communication apparatus generates the second root key based on the second count value, where the second count value is generated based on the first count value.

For example, if the communication apparatus stores the marker information corresponding to the first count value after using the first count value, the communication apparatus generates the second count value based on the marker information by using the first count value. Alternatively, if the communication apparatus generates the second count value based on the first count value after using the first count value, and stores the second count value, the communication apparatus generates the second root key directly by using the second count value.

Optionally, the communication apparatus may send the second count value to the master node, or the communication apparatus may send indication information to the master node, where the indication information indicates the master node to derive a new count value.

Optionally, after generating the second root key by using the second count value, the communication apparatus may store the second count value and marker information, where the marker information indicates that the second count value has been used; or the first secondary node generates a third count value based on the second count value, and stores the third count value. Optionally, the communication apparatus deletes the second count value.

S706b: The master node generates the second root key based on the second count value when determining that the communication apparatus accesses the second secondary node.

For example, the master node generates the second root key based on the second count value for the second secondary node when determining that the communication apparatus accesses the second secondary node.

For example, if the master node stores the marker information corresponding to the first count value after using the first count value, the master node generates the second count value based on the marker information by using the first count value. Alternatively, if the master node generates the second count value based on the first count value after using the first count value, and stores the second count value, the master node generates the second root key directly by using the second count value. Alternatively, if receiving the second count value from the communication apparatus, the master node generates the second root key directly by using the second count value. Alternatively, if receiving the indication information from the communication apparatus, the master node generates the second count value based on the first count value and the indication information.

Optionally, after generating the second root key by using the second count value, the master node may store the second count value and the marker information, where the marker information indicates that the second count value has been used; or the master node generates the third count value based on the second count value, and stores the second count value. Optionally, the master node deletes the second count value.

S707: The master node sends the second root key to the second secondary node. Correspondingly, the second secondary node receives the second root key from the master node.

For example, after generating the second root key, the master node sends the second root key to the second secondary node.

S708a: The communication apparatus protects communication data between the second secondary node and the communication apparatus based on the second root key.

For example, after generating the second root key, the communication apparatus protects the communication data between the second secondary node and the communication apparatus based on the second root key. For example, the communication apparatus generates the first communication key based on the second root key, and then protects the communication data between the second secondary node and the communication apparatus by using the first communication key.

S708b: The second secondary node protects the communication data between the second secondary node and the communication apparatus based on the second root key.

For example, after receiving the second root key from the master node, the second secondary node protects the communication data between the second secondary node and the communication apparatus based on the second root key. For example, the second secondary node generates the first communication key based on the second root key, and then protects the communication data between the second secondary node and the communication apparatus by using the first communication key.

S709a: The communication apparatus generates a third root key based on the third count value when determining to access the first secondary node.

In an example, after the communication apparatus accesses the second secondary node, when the first execution condition is satisfied, the communication apparatus determines to access the first secondary node. In other words, after being disconnected from the first secondary node, the communication apparatus determines to access the first secondary node again.

In this case, the communication apparatus generates the third root key based on the third count value, where the third count value is generated based on the second count value.

For example, if the communication apparatus stores the marker information corresponding to the second count value after using the second count value, the communication apparatus generates the third count value based on the marker information by using the second count value. Alternatively, if the communication apparatus generates the third count value based on the second count value after using the second count value, and stores the third count value, the communication apparatus generates the third root key directly by using the third count value.

Optionally, the communication apparatus may send the third count value to the master node, or the communication apparatus may send indication information to the master node, where the indication information indicates the master node to derive a new count value.

S709b: The master node generates the third root key based on the third count value when determining that the communication apparatus accesses the first secondary node.

For example, the master node generates the third root key based on the third count value when determining that the communication apparatus accesses the first secondary node, where the third count value is generated based on the second count value.

For example, if the master node stores the marker information corresponding to the second count value after using the second count value, the master node generates the third count value based on the marker information by using the second count value. Alternatively, if the master node generates the third count value based on the second count value after using the second count value, and stores the third count value, the master node generates the third root key directly by using the third count value. Alternatively, if receiving the third count value from the communication apparatus, the master node generates the third root key directly by using the third count value. Alternatively, if receiving the indication information from the communication apparatus, the master node generates the third count value based on the second count value and the indication information.

S710: The master node sends the third root key to the first secondary node. Correspondingly, the first secondary node receives the third root key from the master node.

For example, after generating the third root key, the master node sends the third root key to the first secondary node.

S711a: The communication apparatus protects communication data between the first secondary node and the communication apparatus based on the third root key.

For example, after generating the third root key, the communication apparatus protects the communication data between the first secondary node and the communication apparatus based on the third root key. For example, the communication apparatus generates a third communication key based on the third root key, and then protects the communication data between the third secondary node and the communication apparatus by using the third communication key.

S712b: The first secondary node protects the communication data between the first secondary node and the communication apparatus based on the third root key.

For example, after receiving the third root key from the master node, the first secondary node protects the communication data between the first secondary node and the communication apparatus based on the third root key. For example, the first secondary node generates the third communication key based on the third root key, and then protects the communication data between the first secondary node and the communication apparatus by using the third communication key.

In the foregoing solution, the communication apparatus maintains the count values. Each time a terminal device accesses a secondary node, the terminal device updates a count value once, so that when the terminal device accesses different secondary nodes or accesses a same secondary node for a plurality of times, different count values are used to derive root keys. This implements key isolation between different secondary nodes and for a same secondary node at different moments, and improves communication security.

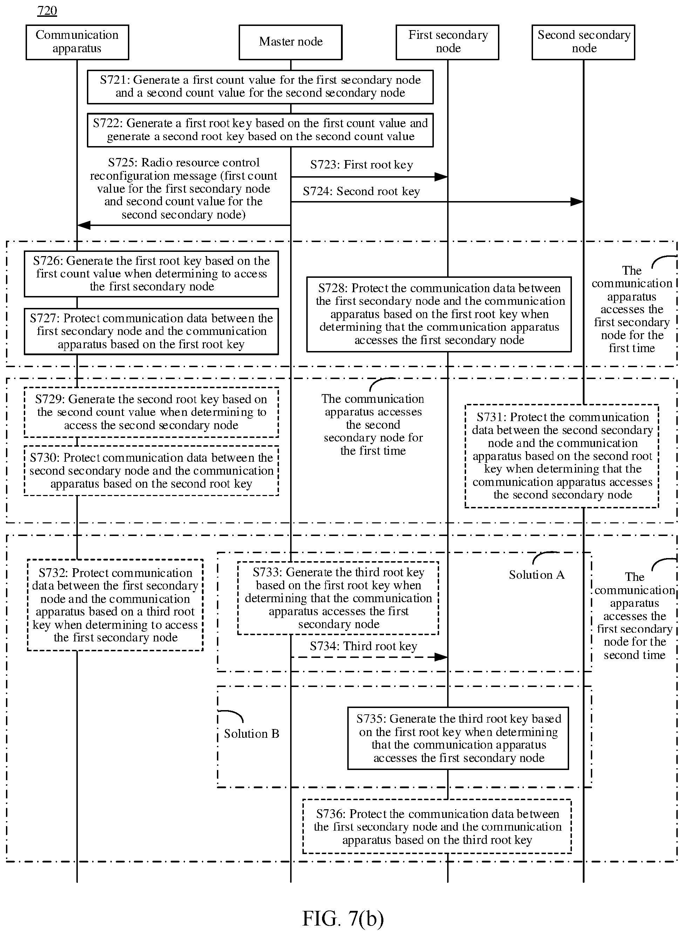

FIG. 7(b) is an example flowchart of a method 720 according to an embodiment of this application. The following describes the method 720 by using an example with reference to steps in FIG. 7(b).

S721: A master node generates a first count value for a first secondary node and a second count value for a second secondary node.

For example, when determining to configure the first secondary node and the second secondary node for a communication apparatus, the master node generates the first count value for the first secondary node and the second count value for the second secondary node, where the first count value is different from the second count value.

In addition, the master node stores the first count value for the first secondary node and the second count value for the second secondary node.

S722: The master node generates a first root key based on the first count value and generates a second root key based on the second count value.

For example, after generating the first count value for the first secondary node, the master node generates the first root key for the first secondary node based on the first count value; and after generating the second count value for the second secondary node, the master node generates the second root key for the second secondary node based on the second count value.

S723: The master node sends the first root key to the first secondary node. Correspondingly, the first secondary node receives the first root key from the master node.

S724: The master node sends the second root key to the second secondary node. Correspondingly, the second secondary node receives the second root key from the master node.

S725: The master node sends a radio resource control reconfiguration message to the communication apparatus. Correspondingly, the communication apparatus receives the radio resource control reconfiguration message from the master node.

For example, after generating the first count value for the first secondary node and the second count value for the second secondary node, the master node sends the radio resource control reconfiguration message to the communication apparatus, where the radio resource control reconfiguration message includes the first count value for the first secondary node and the second count value for the second secondary node. The first secondary node receives and stores the first root key and the second root key. It can be understood that the first root key is associated with identification information of the first secondary node, and the second root key is associated with identification information of the second secondary node.

S726: The communication apparatus generates the first root key based on the first count value when determining to access the first secondary node.

In an example, the first count value for the first secondary node that is received by the communication apparatus in S725 is included in first secondary cell group conditional configuration information of the first secondary node, and the first secondary cell group conditional configuration information further includes a first execution condition corresponding to a primary secondary cell of the first secondary node. When the first execution condition is satisfied, the communication apparatus determines to access the first secondary node.

The communication apparatus generates the first root key based on the first count value when determining to access the first secondary node.

Optionally, after generating the first root key, the communication apparatus stores the first root key.

S727: The communication apparatus protects communication data between the first secondary node and the communication apparatus based on the first root key.

For example, after generating the first root key, the communication apparatus protects the communication data between the first secondary node and the communication apparatus based on the first root key. For example, the communication apparatus generates a first communication key based on the first root key, and then protects the communication data between the first secondary node and the communication apparatus by using the first communication key.

S728: The first secondary node protects the communication data between the first secondary node and the communication apparatus based on the first root key when determining that the communication apparatus accesses the first secondary node.

For example, the first secondary node protects the communication data between the first secondary node and the communication apparatus based on the locally stored first root key when determining that the communication apparatus accesses the first secondary node. For example, the first secondary node generates the first communication key based on the first root key, and then protects the communication data between the first secondary node and the communication apparatus by using the first communication key.

Optionally, after protecting the communication data between the first secondary node and the communication apparatus based on the first root key, the first secondary node stores identification information associated with the first root key, where the identification information indicates that the first root key has been used.

S729: The communication apparatus generates the second root key based on the second count value when determining to access the second secondary node.

In an example, the second count value for the second secondary node that is received by the communication apparatus in S725 is included in second secondary cell group conditional configuration information of the second secondary node, and the second secondary cell group conditional configuration information further includes a second execution condition corresponding to a primary secondary cell of the second secondary node. When the second execution condition is satisfied, the communication apparatus determines to access the second secondary node.

The communication apparatus generates the second root key based on the second count value for the second secondary node when determining to access the second secondary node.

S730: The communication apparatus protects communication data between the second secondary node and the communication apparatus based on the second root key.

For example, after generating the second root key, the communication apparatus protects the communication data between the second secondary node and the communication apparatus based on the second root key. For example, the communication apparatus generates the first communication key based on the second root key, and then protects the communication data between the second secondary node and the communication apparatus by using the first communication key.

S731: The second secondary node protects the communication data between the second secondary node and the communication apparatus based on the second root key when determining that the communication apparatus accesses the second secondary node.

For example, the second secondary node protects the communication data between the second secondary node and the communication apparatus based on the locally stored second root key when determining that the communication apparatus accesses the second secondary node. For example, the second secondary node generates a second communication key based on the second root key, and then protects the communication data between the second secondary node and the communication apparatus by using the second communication key.

S732: The communication apparatus protects communication data between the first secondary node and the communication apparatus based on a third root key when determining to access the first secondary node.

In an example, after the communication apparatus accesses the second secondary node, when the first execution condition is satisfied, the communication apparatus determines to access the first secondary node. In other words, the communication apparatus determines to access the first secondary node again.

In this case, the communication apparatus protects the communication data between the first secondary node and the communication apparatus based on the third root key, where the third root key is generated based on the first root key.

For example, after generating the first root key based on the first count value in S726, the communication apparatus stores the first root key, where the first root key is associated with information about the first secondary node. For example, the communication apparatus associatively stores the first root key with the first secondary cell group conditional configuration information of the first secondary node, or with a conditional configuration identifier in the first secondary cell group conditional configuration information. After determining to access the first secondary node in S732, and after determining that the first root key for the first secondary node is locally stored, the communication apparatus generates the third root key based on the first root key. For another example, after generating the first root key based on the first count value in S726, the communication apparatus may generate the third root key based on the first root key, and then store the third root key, where the third root key is associated with the identification information of the first secondary node. After determining to access the first secondary node in S732, and after determining that the third root key for the first secondary node is locally stored, the communication apparatus protects the communication data between the first secondary node and the communication apparatus based on the third root key.

Optionally, the communication apparatus may send indication information to the master node, to indicate the master node to generate a new root key.

Further, the first secondary node obtains the third root key. The following provides an example for description with reference to two possible implementations.

In a possible implementation (denoted as a solution A), the master node generates the third root key, and sends the third root key to the first secondary node.

S733: The master node generates the third root key based on the first root key when determining that the communication apparatus accesses the first secondary node.

For example, when determining that the communication apparatus accesses the first secondary node and receiving the indication information from the communication apparatus, the master node generates the third root key based on the locally stored first root key for the first secondary node.

S734: The master node sends the third root key to the first secondary node. Correspondingly, the first secondary node receives the third root key from the master node.

S736: The first secondary node protects the communication data between the first secondary node and the communication apparatus based on the third root key.

In another possible implementation (denoted as a solution B), the first secondary node generates the third root key.

S735: The first secondary node generates the third root key based on the first root key when determining that the communication apparatus accesses the first secondary node.

For example, when determining that the communication apparatus accesses the first secondary node, if finding that the identification information corresponding to the first root key is locally stored, the first secondary node generates the third root key based on the first root key and the identification information.

S736: The first secondary node protects the communication data between the first secondary node and the communication apparatus based on the third root key.

In the foregoing solution, the master node generates different root keys for different secondary nodes by using different count values, to implement key isolation between different secondary nodes. To be specific, when accessing different secondary nodes, the communication apparatus can use different root keys to protect communication data between the communication apparatus and the secondary nodes, to improve communication security.

In addition, the communication apparatus maintains a used root key, and when a same secondary node is accessed again, the communication apparatus generates a new root key based on the root key used last time. This implements key isolation for the same secondary node at different moments, and improves communication security. Correspondingly, when the communication apparatus accesses a same secondary node for a plurality of times, the secondary node may generate a new root key based on identification information, to implement key isolation for the same secondary node at different moments; or when the communication apparatus accesses a same secondary node for a plurality of times, the master node generates a new root key based on an indication of the communication apparatus, and sends the new root key to the secondary node, to implement key isolation for the same secondary node at different moments, and improve communication security.

It can be understood that the method 600, the method 700, and the method 710 are described by using examples in which the first secondary node and the second secondary node are candidate secondary nodes of the communication apparatus. However, this application is not limited thereto. In other words, the communication apparatus may further have other candidate secondary nodes, for example, a third secondary node and a fourth secondary node, and the like.

It can also be understood that the method 600, the method 700, and the method 710 show only some example procedures. After accessing the first secondary node for the second time, the second communication apparatus may further access another secondary node, for example, the second secondary node, a third secondary node, or the like. This is not limited in this application.

It can also be understood that the method 600, the method 700, and the method 710 are described by using examples in which the communication apparatus establishes a secure connection to a secondary node when being handed over between the first secondary node and the second secondary node. However, this application is not limited thereto. In a possible example, the method 600, the method 700, and the method 710 can also be applied to handover between different cells of a same node. In this case, the first secondary node and the second secondary node in this embodiment may be considered as different cells of a same secondary node, and handover of the communication apparatus between the first secondary node and the second secondary node may be considered as handover of the communication apparatus from one cell of the secondary node to another cell of the secondary node. A detailed procedure is similar to the foregoing solution, and details are not described herein again.

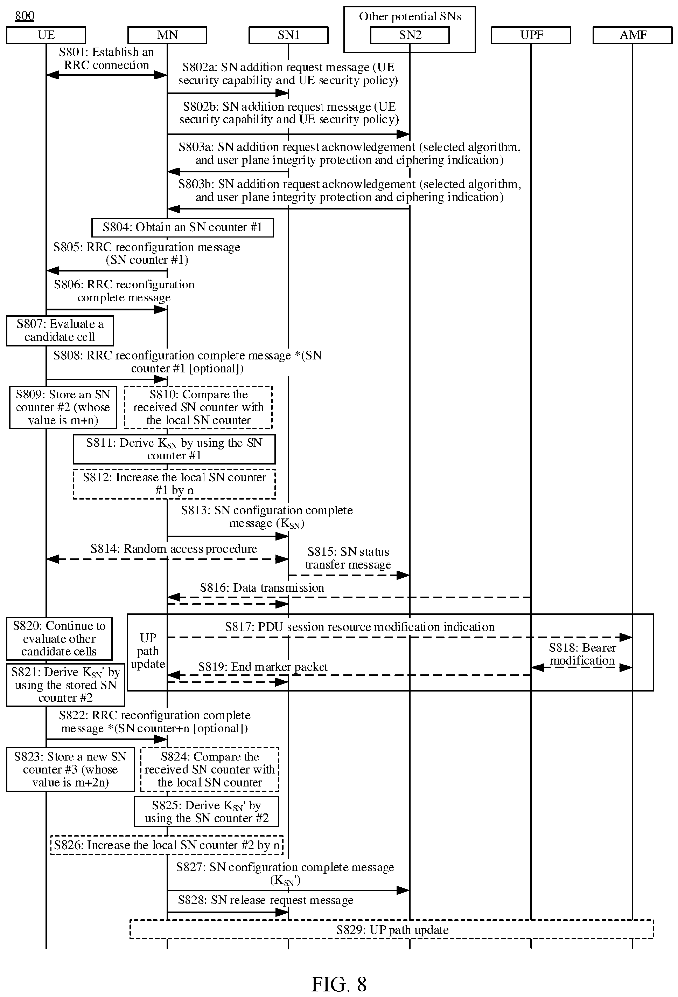

With reference to the embodiments shown in FIG. 2, FIG. 3, and FIG. 5, FIG. 8 is an example flowchart of a method 800 according to an embodiment of this application. The method 800 may be considered as a possible implementation of the method 700. UE in the method 800 may correspond to the communication apparatus in the method 700, an MN in the method 800 may correspond to the master node in the method 700, and an SN1 or an SN2 in the method 800 may correspond to the first secondary node in the method 700. The following describes the method 800 by using an example with reference to steps in FIG. 8.

S801: Establish an RRC connection between the UE and the MN. A detailed procedure is not limited in this application.

S802a: The MN sends an SN addition request message to the SN1.

S802b: The MN sends an SN addition request message to other potential SNs.

For example, when determining to configure a CPA or an enhanced CPA for the UE, the MN separately sends the SN addition request to the candidate SN1 and the other potential SNs. It can be understood that the other potential SNs in this embodiment of this application include one or more SNs other than the SN1. For ease of description, in this embodiment of this application, an example in which the SN2 is another potential SN is used for description. However, this application is not limited thereto.

It should be noted that, when it is determined that the enhanced CPA is initiated, the SN addition request message includes a UE security capability and a UE security policy.

Optionally, in a PDU split scenario, the SN addition request message further includes a user plane integrity protection and ciphering activation decision that is of a PDU session and that is determined by the MN.

Optionally, the SN addition request message further includes indication information indicating that the request is used for the enhanced CPA. The enhanced CPA may also be referred to as a continuous CPA.

It can be understood that K_{SN} is not carried in S802, that is, the MN skips derivation of K_{SN}.

S803a: The SN1 sends an SN addition request acknowledgement message to the MN, where the SN addition request acknowledgement message includes configuration information of an SCG.

Similarly, in S803b, the SN2 sends an SN addition request acknowledgement message to the MN.

S804: The MN obtains an SN counter #1.

A manner in which the MN obtains the SN counter #1 is not limited in this application. In a possible example, the MN obtains the SN counter #1 from an AS context.

Optionally, after obtaining the SN counter #1, the MN locally stores the SN counter #1.

It can be understood that the SN counter #1 may be any count value. For convenience, a value of the SN counter #1 obtained by the MN in S804 is denoted as m, where m is any integer greater than or equal to 0.

It can be understood that S804 may be performed at any moment before S805. An occasion for performing S804 by the MN is not limited in this application.

S805: The MN sends an RRC reconfiguration message to the UE.

For example, after obtaining the SN counter, the MN generates the RRC reconfiguration message, where the RRC reconfiguration message includes a CPA configuration. The CPA configuration includes a conditional reconfiguration list. The conditional reconfiguration list includes one or more conditional reconfigurations, and each conditional reconfiguration includes a conditional reconfiguration identifier (for example, CondReconfig Id), an execution condition, and a conditional RRC reconfiguration (CondRRCReconfig), where the conditional RRC reconfiguration includes an SN counter value.

It can be understood that each conditional reconfiguration is associated with one candidate PSCell, and therefore each candidate PSCell has an associated execution condition.

Optionally, the RRC reconfiguration message includes indication information indicating the enhanced CPA. SN counter values in the RRC reconfigurations are the same.

In another implementation, the MN may further include the SN counter #1 in the RRC reconfiguration message. For example, the SN counter #1 is included at a location other than a location of the conditional reconfiguration. The CPA configuration may not include the SN counter #1, or may include the SN counter #1. In this scenario, the UE may determine, based on the SN counter value in the RRC reconfiguration message, that a current procedure is an enhanced CPA procedure.

Optionally, the RRC reconfiguration message may further include indication information #2. The indication information #2 indicates that the current procedure is the enhanced CPA procedure, or the indication information #2 indicates the UE to increase, after the UE uses the value of the SN counter #1, the value of the SN counter #1 by n and then store an obtained new value. The indication information #2 may be an existing IE (where for example, the existing IE is enhanced to indicate the foregoing information), or the indication information #2 may be a newly added IE. This is not limited in this application.

S806: The UE sends an RRC reconfiguration complete message to the MN.

For example, after receiving the RRC reconfiguration message from the MN, the UE processes the RRC reconfiguration message and sends the RRC reconfiguration complete message to the MN. A detailed procedure is not limited in this application.

S807: The UE evaluates a candidate cell.

For example, the UE starts to evaluate the candidate cell, and determines whether an execution condition corresponding to a candidate cell is satisfied.

S808: The UE sends an RRC reconfiguration complete message * to the MN.

For example, if the UE detects a candidate cell that satisfies an execution condition, the UE sends an RRC reconfiguration complete message * corresponding to the selected candidate PSCell#1 to the MN. The RRC reconfiguration complete message * includes information used by the MN to identify an SN corresponding to the selected candidate PSCell#1, and the information may be a conditional reconfiguration identifier. Optionally, the message includes an SN counter value for deriving K_{SN} by the UE.

In this embodiment of this application, the SN corresponding to the PSCell#1 is denoted as the SN1.

It can be understood that a candidate PSCell selected by the UE in this embodiment of this application is a candidate PSCell that satisfies an execution condition and that is detected by the UE. Similar parts are not described again subsequently.

After determining the candidate cell, the UE derives K_{SN} by using an SN counter in a conditional reconfiguration corresponding to the determined candidate cell, and further derives a signaling plane key and a user plane security key based on the configuration information by using K_{SN}. A detailed procedure is not limited in this application. Alternatively, if the MN uses the RRC reconfiguration message to include the SN counter, the UE may derive K_{SN} by using the SN counter, and the SN counter is included at a location other than the location of the conditional reconfiguration.

After key derivation is completed, the UE increases the SN counter by n to obtain a new SN counter. Assuming that an original value of the SN counter is m, a value of the new SN counter obtained by the UE is m+n.

It can be understood that m is any integer greater than or equal to 0, n is any integer (for example, 1) greater than 0, and a value of n may be a preconfigured or predefined value or a value specified by the MN. If n is a value specified by the MN, the MN may include n in S805, or send n to the UE by using another message or through another procedure. This is not limited in this application.

Optionally, the UE may perform the foregoing procedure for the enhanced CPA, that is, the UE may perform the foregoing procedure when determining that a current CPA is the enhanced CPA. This is not limited in this application.

S809: The UE stores a new SN counter #2.

For example, after deriving K_{SN} by using the SN counter #1, the UE generates the SN counter #2 based on the SN counter #1.

A manner in which the UE generates the SN counter #2 is not limited in this application. However, it should be understood that a value of the SN counter #2 generated by the UE needs to be different from the value of the SN counter #1, and a manner in which the MN generates the SN counter #2 in S812 needs to be the same as the manner in which the UE generates the SN counter #2.

For example, the UE increases the SN counter #1 by n to obtain the new SN counter #2. Assuming that the original value of the SN counter #1 is m, the value of the new SN counter #2 obtained by the UE is m+n.

Optionally, in an implementation, when determining that the current procedure is the enhanced CPA procedure, the UE generates and stores the SN counter #2. For example, when the RRC reconfiguration message received by the UE in S805 carries the indication information #2, the UE generates and stores the SN counter #2.

It can be understood that n is any number (for example, 1) greater than 0, and a value of n may be a preconfigured or predefined value or a value specified by the MN. If n is a value specified by the MN, the MN may include n in S805, or send n to the UE by using another message or through another procedure. This is not limited in this application.

For example, the UE stores the new SN counter (whose value is m+n) in the access stratum context.

Optionally, in S810, the MN compares the received SN counter with the local SN counter.

S811: The MN derives K_{SN} by using the SN counter #1.

For example, the MN receives the RRC reconfiguration message from the UE, where the RRC reconfiguration message includes information identifying the SN corresponding to the selected candidate PSCell.

If the RRC reconfiguration message further includes the SN counter for deriving K_{SN} by the UE, the MN compares the received SN counter with the local SN counter. If the SN counter received by the MN is the same as or greater than the locally stored SN counter, the MN derives K_{SN} by using the received SN counter.

If the RRC reconfiguration message does not include the SN counter, the MN derives K_{SN} by using the locally stored SN counter.

Further, the MN may derive, by using K_{SN}, a communication key used to protect communication security between the UE and the SN in which the PSCell is located.

It can be learned from the foregoing solution that the SN counter locally stored by the MN is the SN counter #1, and the SN counter included by the UE in the RRC reconfiguration complete message * is also the SN counter #1. The two SN counters are the same. In this case, the MN derives K_{SN} by using the SN counter #1 (whose value is m).

Optionally, in S812, the MN increases the value of the local SN counter #1 by n.

After derivation is completed, the MN increases the value of the local SN counter by n to obtain a new SN counter #2 (whose value is m+n). It should be noted that n used by the MN and n used by the UE have a same value, and are integers greater than 0. Therefore, the value of the SN counter #2 locally stored by the MN is the same as the value of the SN counter #2 stored by the UE in S809.

Optionally, the MN deletes the SN counter #1, or stores indication information indicating that the SN counter #1 is unavailable.

S813: The MN sends an SN configuration complete message to the SN1.

For example, the MN determines a target SN (namely, the SN1) based on information from the UE, and sends the SN configuration complete message to the SN1, where the SN configuration complete message includes K_{SN} derived by the MN.

After receiving the SN reconfiguration complete message from the MN, the SN1 derives a communication key based on K_{SN} carried in the SN reconfiguration complete message. It can be understood that because same K_{SN} is used, the communication keys derived by the SN1 and the UE are the same. Communication security between the SN1 and the UE can be protected by using the communication key.

Optionally, in S814, the UE performs synchronization with the SN in which the selected candidate cell is located, that is, performs a random access procedure. A detailed procedure is not limited in this application.

Optionally, in S815, the MN sends an SN status transfer message to the SN.

Optionally, the MN performs data transmission to the target SN.

Optionally, in S817 to S819, the MN performs a user plane path update. A detailed procedure is not limited in this application.

Optionally, if the enhanced CPA is configured for the UE, a subsequent procedure continues to be performed.

S820: The UE continues to evaluate a candidate cell.

For example, the UE continues to evaluate whether execution conditions of other candidate cells are satisfied.

S821: The UE derives K_{SN}' by using the stored SN counter #2.

For example, if detecting a new candidate cell (assumed as a PSCell#2) that satisfies an execution condition, the UE determines whether an SN counter is stored in the local AS context. If the SN counter is stored, the UE derives K_{SN}' by using the locally stored SN counter (whose value is m+n), instead of the SN counter (whose value is m) provided by the MN in the request message.

It can be learned from the foregoing solution that the UE stores the SN counter #2 (whose value is m+n) in S809, and therefore the UE derives K_{SN}' in S821 by using the SN counter #2.

Further, the UE derives the signaling plane key and the user plane security key based on the configuration information by using K_{SN}.

S822: The UE sends an RRC reconfiguration complete message * to the MN.

For example, the UE sends an RRC reconfiguration complete message * corresponding to the selected candidate PSCell to the MN. The reconfiguration complete message* includes information used by the MN to identify an SN (for example, the SN2) corresponding to the selected candidate PSCell, and the information may be a conditional reconfiguration identifier. Optionally, the PSCell may be another PSCell of the SN1. This is not limited herein.

Optionally, the RRC reconfiguration complete message * may further include a change indication, indicating to the MN that the message is used to change a source SN to a target SN.

Optionally, the RRC reconfiguration complete message * may further include the SN counter (whose value is m+n) for deriving K_{SN}' by the UE in S821.

S823: The UE stores a new SN counter #3.

For example, after key derivation is completed, the UE obtains the new SN counter #3 (whose value is m+2n) by increasing the SN counter by 2n, and stores the new SN counter #3 in the AS context.

It can be understood that a sequence of performing S822 and S823 is not limited in this application.

Optionally, in S824, the MN compares the received SN counter with the local SN counter.

S825: The MN derives K_{SN} by using the SN counter #2.

For example, after the MN receives the RRC reconfiguration complete message * from the UE, if the RRC reconfiguration complete message * further includes the SN counter for deriving K_{SN} by the UE, the MN compares the received SN counter with the local SN counter.

If the SN counter received by the MN is the same as or greater than the locally stored SN counter, the MN derives K_{SN}' by using the received SN counter.

If the RRC reconfiguration complete message * does not include the SN counter, the MN derives K_{SN} by using the locally stored SN counter.

It can be learned from the foregoing solution that, if the MN generates and stores the SN counter #2 in S812, the SN counter carried in the RRC reconfiguration complete message * is the same as the SN counter locally stored by the MN (both are the SN counter #2). In this case, the MN derives K_{SN}' by using the SN counter #2. If the MN does not perform S812, the SN counter locally stored by the MN is the SN counter #1 that is obtained and stored by the MN in S804, and therefore the SN counter (namely, the SN counter #2 whose value is m+n) carried in the RRC reconfiguration complete message * is greater than the SN counter (namely, the SN counter #1 whose value is m) locally stored by the MN. In this case, the MN derives K_{SN}' by using the SN counter #2 carried in the RRC reconfiguration complete message*.

It can be understood that, because count values used by the UE and the MN to derive K_{SN} are both the SN counter #2, and an algorithm and an input parameter used by the UE are the same as those used by the MN, the UE and the MN derive same K_{SN}.

Optionally, in S826, the MN increases a value of the local SN counter #2 by n.

After derivation is completed, the MN increases the value of the local SN counter (whose value is m+n) by n to obtain a new SN counter (whose value is m+2n).

S827: The MN sends an SN configuration complete message to the SN2.

For example, the MN determines a target SN (namely, the SN2) based on information from the UE, and sends the SN configuration complete message to the SN2, where the SN configuration complete message includes K_{SN}' derived by the MN.

Correspondingly, after receiving the SN configuration complete message from the MN, the SN2 derives a communication key based on K_{SN}' carried in the SN configuration complete message. It can be understood that because same K_{SN}' is used, the communication keys derived by the SN2 and the UE are the same. Communication security between the SN2 and the UE can be protected by using the communication key.

It can be understood that, because SN counters used to derive K_{SN} and K_{SN}' are different (where the SN counter #1 is used to derive K_{SN}, and the SN counter #2 is used to derive K_{SN}'), values of K_{SN} and K_{SN}' are different, and communication keys derived by using K_{SN} and K_{SN}' are also different. This implements key isolation effect and improves security performance.

S828: The MN sends an SN release request message to the SN1.

For example, the SN release request message indicates the SN1 to stop sending a data packet to the UE, and to store RRC configuration information corresponding to the UE to subsequently serve the UE.

Optionally, in S829, a UP path update procedure is performed. A detailed procedure is not limited in this application.

It can be understood that the method 600 is described by using the enhanced CPA procedure as an example, but this application is not limited thereto. The method 600 can also be applied to an enhanced CPC procedure. For example, after S801, if an initial status of the UE is that dual connectivity has been established, the MN determines to configure a CPC for the UE, and the MN indicates to the SN that the request is used for an enhanced CPC.

It can also be understood that, only main steps are shown in the procedure shown in the method 600, and an actual procedure may further include other steps. This is not limited in this application.

It can also be understood that the SN counter value is maintained in the foregoing procedure, and the UE or the MN increases the SN counter by n when determining to derive K_{SN}. In other words, the value locally maintained by the UE and the MN is a most recently used SN counter value.

It can also be understood that in the SN change procedure, input K for deriving K_{SN} by the MN may be replaced with K_{SN}.

In the foregoing solution, the UE side maintains an SN counter value. Each time the UE triggers a CPA or a CPC, the UE updates the SN counter. An existing K_{SN} derivation method is reused to ensure, by changing the SN counter, that a different root key is used each time, so that communication keys are different.

Specifically, the UE maintains the SN counter value, to monotonically increase the SN counter value after the SN counter value is used and then store an increased value or incrementally increase the SN counter value before K_{SN} is derived, and the MN provides K_{SN} for the SN in an SN activation procedure, to ensure that different K_{SN} is used each time the SN is connected. This implements key isolation between different SNs or for a same SN at different moments.

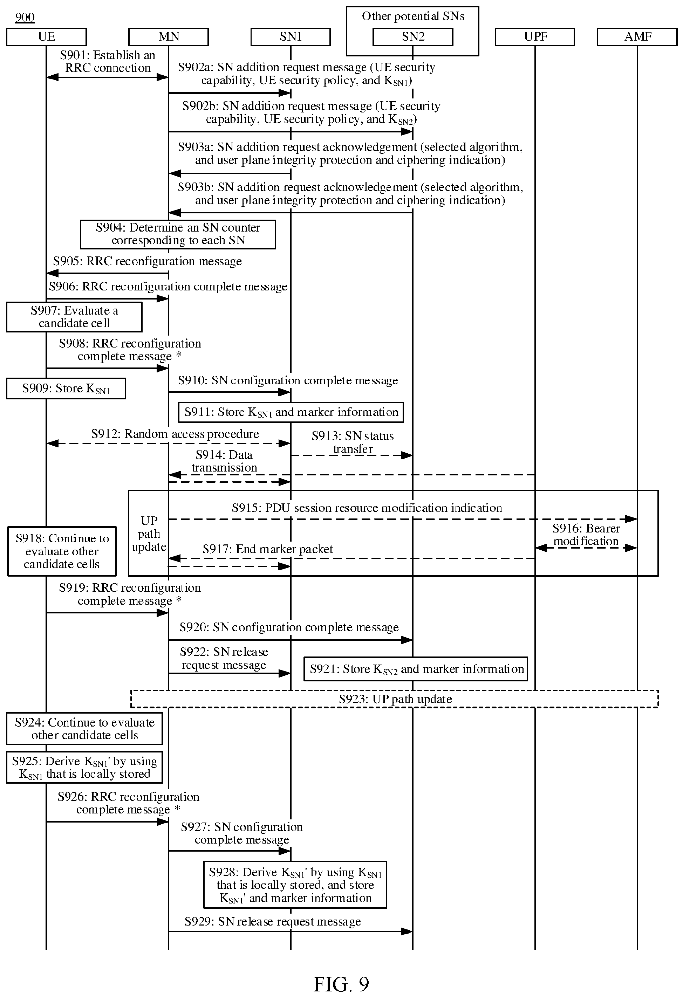

With reference to the embodiments shown in FIG. 2, FIG. 3, and FIG. 5, FIG. 9 is an example flowchart of a method 900 according to an embodiment of this application. The method 900 may be considered as a possible implementation of the solution B in the method 720. UE in the method 900 may correspond to the communication apparatus in the method 720, an MN in the method 900 may correspond to the master node in the method 720, and an SN1 or an SN2 in the method 900 may correspond to the first secondary node in the method 720. The following describes the method 900 by using an example with reference to steps in FIG. 9.

S901: Establish an RRC connection between the UE and the MN. A detailed procedure is not limited in this application.

S902a: The MN sends an SN addition request message to the SN1.

S902b: The MN sends an SN addition request message to other potential SNs.

For example, when determining to configure a CPA or an enhanced CPA for the UE, the MN separately sends the SN addition request message to the candidate SNs, where the SN addition request message includes a UE security capability, a UE security policy, and K_{SNn}. Optionally, in a PDU split scenario, the SN addition request message includes a user plane integrity protection and ciphering activation decision that is of a PDU session and that is determined by the MN.

For the SNs, the MN derives corresponding K_{SN} by using different SN counter values, and therefore the SNs correspond to different K_{SN}. For example, the MN derives K_{SN1} for the SN1 by using an SN counter 1. The MN increases the SN counter to an SN counter 2, and derives K_{SN2} for the SN2 by using the SN counter 2. Further, if there is a candidate SN3, the MN continues to increase the SN counter 2 to an SN counter 3, and derives K_{SN3} for the SN3 by using the SN counter 3; and so on. An SN addition request message sent by the MN to each SN includes K_{SN} corresponding to the SN. For example, the SN addition request message sent by the MN to the SN1 includes K_{SN1}, and the SN addition request message sent by the MN to the SN2 includes K_{SN2}.

After receiving an SN addition request message from the MN, a candidate SN stores K_{SNn} carried in the SN addition request message. For example, the SN1 stores K_{SN1}, and the SN2 stores KSN2.

Optionally, after deriving corresponding K_{SN} for different SNs, the MN stores a correspondence between a corresponding SN counter and an SN. For example, the SN counter 1 corresponds to the SN1, the SN counter 2 corresponds to the SN2, the SN counter 3 corresponds to the SN3, and an SN counter n corresponds to an SNn. After derivation of a needed key K_{SN} is completed, the MN increases an SN counter and stores an increased value. The SN counter is used to derive a next key K_{SN}.

Optionally, the MN may further indicate to the SN that the request is used for the enhanced CPA.

If an initial status of the UE is that dual connectivity has been established, the MN determines to configure a CPC for the UE, and the MN indicates to the SN that the request is used for an enhanced CPC.

S903a: The SN1 sends an SN addition request acknowledgement message to the MN, where the SN addition request acknowledgement message includes configuration information of an SCG.

Similarly, in S903b, the SN2 sends an SN addition request acknowledgement message to the MN.

S904: The MN determines an SN counter corresponding to each SN.

S905: The MN sends an RRC reconfiguration message to the UE.

For example, after receiving responses from the SNs, the MN obtains, based on the stored correspondence between an SN counter and an SN, SN counters corresponding to different SNs, and generates conditional reconfiguration information. For example, the MN obtains the corresponding SN counter 1 for the SN1; the MN obtains the corresponding SN counter 2 for the SN2; and so on.

Optionally, a conditional reconfiguration includes a conditional reconfiguration identifier (for example, CondReconfig Id), an execution condition, and a conditional RRC reconfiguration (CondRRCReconfig), where the conditional RRC reconfiguration includes an SN counter value. Conditional reconfiguration information corresponding to each SN includes an SN counter of the SN. It can be understood that each conditional reconfiguration is associated with one candidate PSCell, and therefore each candidate SPCell has an associated execution condition.

Optionally, after generating the conditional reconfiguration information, the MN may delete the stored correspondence between an SN counter and an SN.

The MN further generates the RRC reconfiguration message based on the conditional reconfiguration information, and sends the RRC reconfiguration message to the UE, where the RRC reconfiguration message includes the corresponding conditional reconfiguration information. Further, optionally, the RRC reconfiguration message includes an enhanced CPA indication. It can be understood that an existing IE may be enhanced to indicate the enhanced CPA, or another IE may be added to indicate the enhanced CPA. This is not limited in this application.

S906: The UE sends an RRC reconfiguration complete message to the MN.

For example, after receiving the RRC reconfiguration message from the MN, the UE processes the RRC reconfiguration message and sends the RRC reconfiguration complete message to the MN.

S907: The UE evaluates a candidate cell.

For example, the UE evaluates the candidate cell, and determines whether an execution condition corresponding to a candidate cell is satisfied.

S908: The UE sends an RRC reconfiguration complete message * to the MN.

For example, if the UE detects a candidate cell that satisfies an execution condition, the UE sends an RRC reconfiguration complete message * corresponding to the selected candidate PSCell to the MN. The RRC reconfiguration complete message * includes information used by the MN to identify an SN (for example, the SN1) corresponding to the selected candidate PSCell, and the information may be a conditional reconfiguration identifier.

After determining the candidate cell, the UE derives K_{SN1} by using the SN counter 1 in a conditional reconfiguration corresponding to the SN1, and further derives a signaling plane key and a user plane security key based on the configuration information by using K_{SN1}. A detailed procedure is not limited in this application.

S909: The UE stores K_{SN1}.

For example, if determining that a current CPAis the enhanced CPA, the UE stores generated K_{SN1}. Specifically, the UE may store K_{SN} together with other configurations corresponding to the SN1.

S910: The MN sends an SN configuration complete message to the SN1.

For example, the MN receives the RRC reconfiguration message from the UE, where the message includes information identifying the SN corresponding to the selected candidate PSCell. The MN sends the SN reconfiguration complete message to the SN1.

Correspondingly, the SN1 receives the SN reconfiguration complete message from the MN, and then the SN derives a communication key by using K_{SN1} obtained in S902a. A detailed procedure is not limited in this application.

It can be understood that because the UE and the SN1 use same K_{SN1} to perform key derivation, the communication keys derived by the SN1 and the UE are the same. Communication security between the SN1 and the UE can be protected by using the communication key.

S911: The SN1 stores K_{SN1} and marker information.

For example, for the enhanced CPA, the SN stores K_{SN1} and the marker information. The marker information indicates that K_{SN1} has been used, or is used by the SN1 to determine whether to derive new K_{SN}. It can be understood that the SN1 may alternatively store K_{SN1} and the marker information after S922. This is not limited in this application.

For example, if the SN derives the communication key by using K_{SN1} in S902 to S910, the SN may store K_{SN} and the marker information after using K_{SN}. This is not limited in this application.

S912: The UE performs synchronization with the SN in which the selected candidate cell is located, that is, performs a random access procedure. A detailed procedure is not limited in this application.

S913: The MN sends an SN status transfer message to the SN.

S914: The MN performs data forwarding to the target SN.

S915 to S917: Perform a path update procedure. A detailed procedure is not limited in this application.

Optionally, if the enhanced CPA is configured for the UE, a subsequent procedure continues to be performed.

S918: The UE continues to evaluate a candidate cell, and determines to select the SN2.

S919: The UE sends an RRC reconfiguration complete message * to the MN.

For example, the UE continues to evaluate whether execution conditions of other candidate cells are satisfied. When determining to be handed over to a new candidate cell (which belongs to, for example, the SN2), the UE derives K_{SN2} by using the SN counter 2 in a conditional reconfiguration corresponding to the SN2. In other words, if the UE detects a new candidate PSCell#2 that satisfies an execution condition (assuming that the candidate PSCell#2 belongs to the SN2), the UE may determine whether K_{SN} corresponding to the SN2 is locally stored; and if K_{SN} corresponding to the SN2 is not stored, the UE derives K_{SN2} by using the SN counter 2 in the conditional reconfiguration corresponding to the SN2.

Further, the UE derives a signaling plane key and a user plane security key based on the configuration information (such as a selected algorithm and a user plane integrity protection and ciphering indication) by using K_{SN2}. In addition, the UE performs corresponding SRB3 configuration and DRB configuration.

Then, the UE sends the RRC reconfiguration complete message * to the MN. The message includes information used by the MN to identify the SN corresponding to the selected candidate PSCell#2, and the information may be a conditional reconfiguration identifier. Optionally, the message includes a change indication, indicating to the MN that the message is used to change a source SN to a target SN. In other words, the change indication information is used to change the SN accessed by the UE from the source SN (namely, the SN1) to the target SN (namely, the SN2).

Optionally, the UE stores K_{SN2}.

For example, after deriving K_{SN2} by using the SN counter 2, the UE stores K_{SN2}. Specifically, the UE may store K_{SN2} together with other configurations corresponding to the SN2, or the UE stores an association relationship between K_{SN2} and identification information of the SN2.

S920: The MN sends an SN configuration complete message to the SN2.

For example, after receiving the RRC reconfiguration message from the UE, the MN sends the SN reconfiguration complete message to the SN2.

After receiving the SN configuration complete message from the MN, the SN2 derives a communication key by using K_{SN2} obtained in S902b. A detailed procedure is not limited.

It can be understood that because the UE and the SN2 use same K_{SN2} to perform key derivation, the communication keys derived by the SN2 and the UE are the same. Communication security between the SN2 and the UE can be protected by using the communication key.

S921: The SN2 stores K_{SN2} and marker information.

For example, for the enhanced CPA, the SN2 stores K_{SN2} and the marker information. The marker information indicates that K_{SN2} has been used, or is used by the SN2 to determine whether to derive new K_{SN}.

It can be understood that the SN2 may alternatively store K_{SN2} and the marker information after S929. This is not limited in this application.

In a possible implementation, when determining that a current procedure is an enhanced CPA procedure, the SN2 may store K_{SN2} and marker information #2. For example, when receiving, from the MN, indication information indicating that the current procedure is an enhanced CPA procedure, the SN2 stores K_{SN2} and the marker information #2. For another example, when receiving K_{SN2} from the MN in S902b, the SN2 stores K_{SN2} and the marker information in S921.

S922: The MN determines to send an SN release request message to the SN1, where the SN release request message indicates the SN1 to stop sending a data packet to the UE.

S923: Complete execution of a UP path update. A detailed procedure is not limited.

S924: The UE continues to evaluate other candidate cells, and determines to select the SN1.

S925: The UE derives K_{SN1}' by using K_{SN1} that is locally stored.

For example, the UE continues to perform an evaluation procedure for candidate cells. When determining to be handed over back to the candidate cell of the SN1, or if detecting a candidate PSCell#3 that satisfies an execution condition (assuming that the candidate PSCell#3 belongs to the SN1), the UE may determine whether K_{SN} corresponding to the SN1 is locally stored. It can be learned from the foregoing solution that the UE stores K_{SN1} in S909. In this case, the UE determines, through query, that corresponding K_{SN1} is locally stored, and the UE derives new K_{SN1}' by using K_{SN1} that is locally stored. Further, the UE derives a signaling plane key and a user plane security key by using K_{SN1}', and the UE stores new K_{SN1}'. Specifically, the UE may replace K_{SN1} that is locally stored with K_{SN1}'.

S926: The UE sends an RRC reconfiguration complete message * to the MN.

For example, the UE sends the RRC reconfiguration complete message * to the MN. The message includes information used by the MN to identify the SN1 corresponding to the selected candidate PSCell, and the information may be a conditional reconfiguration identifier. Optionally, the message further includes a change indication, indicating to the MN that the message is used to change a source SNn to the target SN1.

Optionally, the UE stores K_{SN1}'.

For example, after deriving K_{SN1}' by using K_{SN1}, the UE stores K_{SN1}'. Specifically, the UE may store K_{SN1}' together with other configurations corresponding to the SN1, or the UE stores an association relationship between K_{SN1}' and identification information of the SN1, or the UE replaces K_{SN1} that is locally stored with K_{SN1}'.

It can be understood that a sequence of performing S925 and S926 is not limited in this application.

S927: The MN sends an SN configuration complete message to the SN1.

For example, after receiving the RRC reconfiguration complete message * from the UE, the MN sends the SN reconfiguration complete message to the SN1.

S928: The SN1 derives K_{SN1}' by using K_{SN1} that is locally stored, and stores K_{SN1}' and marker information.

Correspondingly, after receiving the SN reconfiguration complete message from the MN, the SN1 determines, based on K_{SN1} that is locally stored and marker information, to derive new K_{SN1}' by using K_{SN1}. Further, the SN1 derives the signaling plane key and the user plane security key by using K_{SN1}', and the SN1 stores new K_{SN1}' and the marker information.

It can be understood that because the UE and the SN1 use same K_{SN1}' to perform key derivation, communication keys derived by the SN1 and the UE are the same. Communication security between the SN1 and the UE can be protected by using the communication key. In addition, because the UE and the SN1 use K_{SN} to perform key derivation in the procedure of S907 to S911, the communication key derived by the UE and the SN1 in the procedure of S923 to S928 is different from the communication key derived by the UE and the SN1 in the procedure of S907 to S911. In this way, communication keys used by the UE and the SN1 in different communication procedures are different. This reduces a security risk caused by a key leakage and improves security performance.

S929: The MN sends an SN release request message to the SN2.

For example, the SN release request message indicates the SN2 to stop sending a data packet to the UE.

It can be understood that, when the SN is accessed again, in addition to K_{SN} used last time, input parameters for deriving K_{SN1} may further include another parameter, for example, a key length or an agreed character string. This is not limited in this application.

It can be understood that the method 700 is described by using the enhanced CPA procedure as an example, but this application is not limited thereto. The method 700 can also be applied to an enhanced CPC procedure. For example, after S901, if an initial status of the UE is that dual connectivity has been established, the MN determines to configure a CPC for the UE, and the MN indicates to the SN that the request is used for an enhanced CPC.

It can also be understood that, only main steps are shown in the procedure shown in the method 700, and an actual procedure may further include other steps. This is not limited in this application.

In the foregoing solution, an SN determines, by using marker information, whether new K_{SN} needs to be derived by using K_{SN} that is locally stored. In another possible implementation, when accessing an SN for the first time, the UE derives K_{SN} by using an SN counter, and then derives K_{SN}' by using K_{SN}. In this way, each time the SN needs to derive a security key, the SN needs to first derive K_{SN}' based on local K_{SN}. In this case, the SN does not need to store marker information, to save resources.

In the foregoing solution, the MN transmits different SN counters to ensure that initial K_{SN} for different SNs is different. In addition, an SN subsequently derives new K_{SN} by using K_{SN}, to ensure that different K_{SN} is used to derive a communication key when a same SN is accessed again. This avoids keystream reuse.

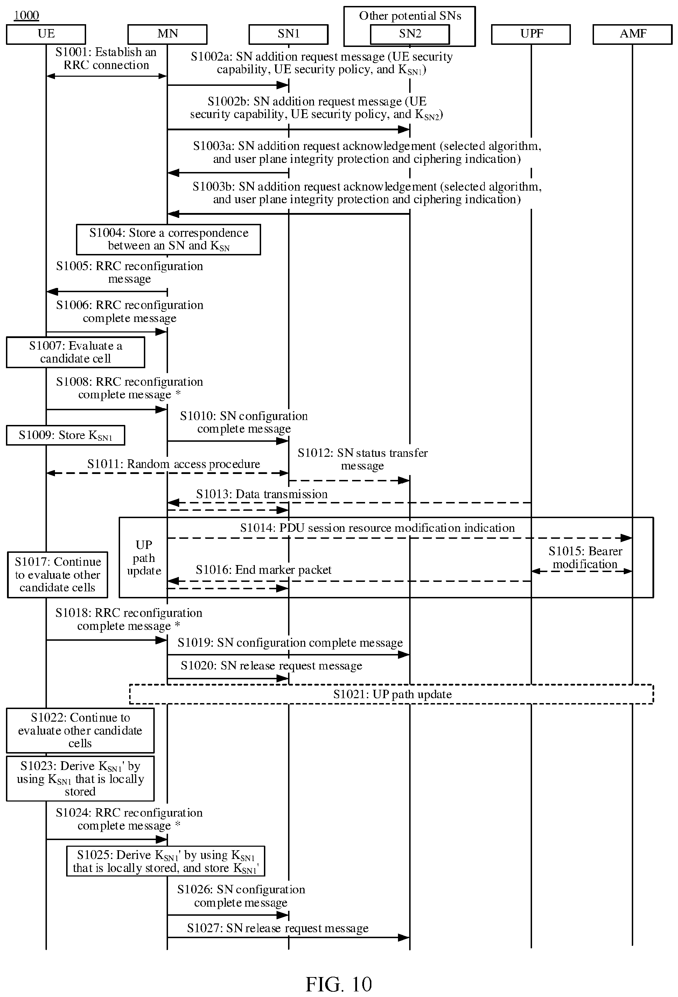

With reference to the embodiments shown in FIG. 2, FIG. 3, and FIG. 5, FIG. 10 is an example flowchart of a method 1000 according to an embodiment of this application. The method 1000 may be considered as a possible implementation of the solution A in the method 720. UE in the method 1000 may correspond to the communication apparatus in the method 720, an MN in the method 1000 may correspond to the master node in the method 720, and an SN1 or an SN2 in the method 1000 may correspond to the first secondary node in the method 720. The following describes the method 1000 by using an example with reference to steps in FIG. 10.

S1001: Establish an RRC connection between the UE and the MN. A detailed procedure is not limited in this application.

S1002a: The MN sends an SN addition request message to the SN1.

S1002b: The MN sends an SN addition request message to other potential SNs.

For example, when determining to configure an enhanced CPA for the UE, the MN separately sends the SN addition request message to candidate SNs, where the SN addition request message includes a UE security capability, a UE security policy, and K_{SNn}. Optionally, in a PDU split scenario, the SN addition request message includes a user plane integrity protection and ciphering activation decision that is of a PDU session and that is determined by the MN.

For the SNs, the MN derives corresponding K_{SN} by using different SN counter values, and therefore the SNs correspond to different K_{SN}. For example, the MN derives K_{SN1} for the SN1 by using an SN counter 1. The MN increases the SN counter to an SN counter 2, and derives K_{SN2} for the SN2 by using the SN counter 2. Further, if there is a candidate SN3, the MN continues to increase the SN counter 2 to an SN counter 3, and derives K_{SN3} for the SN3 by using the SN counter 3; and so on. After derivation of a needed key K_{SN} is completed, the MN increases an SN counter and stores an increased value. The SN counter is used to derive a next key K_{SN}.

An SN addition request message sent by the MN to each SN includes K_{SN} corresponding to the SN. For example, the SN addition request message sent by the MN to the SN1 includes K_{SN1}, and the SN addition request message sent by the MN to the SN2 includes K_{SN2}.

Optionally, the MN may further indicate to the SN that the request is used for the enhanced CPA.

If an initial status of the UE is that dual connectivity has been established, the MN determines to configure a CPC for the UE, and the MN indicates to the SN that the request is used for an enhanced CPC.

S1003a: The SN1 sends an SN addition request acknowledgement message to the MN, where the SN addition request acknowledgement message includes configuration information of an SCG.

Similarly, in S1003b, the SN2 sends an SN addition request acknowledgement message to the MN.

S1004: The MN stores a correspondence between an SN and K_{SN}.

For example, after deriving corresponding K_{SN}, the MN stores the correspondence between corresponding K_{SN} and an SN. Optionally, the MN may store a correspondence between K_{SN}, an SN, and an SN counter. For example, K_{SN1} and the SN counter 1 correspond to the SN1, K_{SN2} and the SN counter 2 correspond to the SN2, K_{SN3} and the SN counter 3 correspond to the SN3, and an SN counter n corresponds to an SNn.

It can be understood that a sequence of performing S1004, S1002a, and S1002b is not limited in this application.

S1005: The MN sends an RRC reconfiguration message to the UE.

For example, after receiving responses from the SNs, the MN obtains the stored SN counters corresponding to the SNs, and generates conditional reconfiguration information. For example, the corresponding SN counter 1 is obtained for the SN1; the corresponding SN counter 2 is obtained for the SN2; and so on. A conditional reconfiguration includes a conditional reconfiguration identifier (for example, CondReconfig Id), an execution condition, and a conditional RRC reconfiguration (CondRRCReconfig), where the conditional RRC reconfiguration includes an SN counter value. Conditional reconfiguration information corresponding to each SN includes an SN counter of the SN.

The MN further generates the RRC reconfiguration message based on the conditional reconfiguration information, where the message includes the corresponding conditional reconfiguration information. Further, the RRC reconfiguration message includes an enhanced CPA indication.

S1006: The UE sends an RRC reconfiguration complete message to the MN.

For example, after receiving the RRC reconfiguration message from the MN, the UE processes the RRC reconfiguration message and sends the RRC reconfiguration complete message to the MN.

S1007: The UE evaluates a candidate cell.

For example, the UE evaluates the candidate cell, and determines whether an execution condition corresponding to a candidate cell is satisfied.

S1008: The UE sends an RRC reconfiguration complete message * to the MN.

If the UE detects a candidate cell that satisfies an execution condition, the UE sends an RRC reconfiguration complete message * corresponding to the selected candidate PSCell to the MN. The RRC reconfiguration complete message * includes information used by the MN to identify an SN (for example, the SN1) corresponding to the selected candidate PSCell, and the information may be a conditional reconfiguration identifier.

After determining the candidate cell, the UE derives K_{SN1} by using the SN counter 1 in a conditional reconfiguration corresponding to the SN1, and further derives a signaling plane key and a user plane security key based on the configuration information by using K_{SN1}. A detailed procedure is not limited in this application.

S1009: The UE stores K_{SN1}.

For example, if determining that the current CPA is the enhanced CPA, the UE stores generated K_{SN1}. Specifically, the UE may store K_{SN1} together with other configurations corresponding to the SN1.

S1010: The MN sends an SN configuration complete message to the SN1.

For example, after receiving the RRC reconfiguration complete message * from the UE, the MN determines the SN1 based on the information that identifies the SN (for example, the SN1) corresponding to the selected candidate PSCell and that is carried in the RRC reconfiguration complete message *, and then sends the SN reconfiguration complete message to the SN1.

Correspondingly, after the SN1 receives the SN configuration complete message from the MN, if the SN1 does not receive new K_{SN} (for example, the SN configuration complete message does not carry new K_{SN}) from the MN, the SN1 derives a communication key by using local K_{SN1} (obtained in S502).

It can be learned from the foregoing solution that, if the MN carries K_{SN1} in S1010, the SN1 derives the communication key by using K_{SN1} received in S1010; or if the MN does not carry K_{SN1} in S1010, the SN1 derives the communication key by using K_{SN1} received and stored in S1002a.

It can be understood that because the UE and the SN1 use the same K_{SN1} to perform key derivation, the communication keys derived by the SN1 and the UE are the same. Communication security between the SN1 and the UE can be protected by using the communication key.

Optionally, the MN stores marker information, identifying that the UE has accessed the SN1 or used to determine that the UE needs to derive, by using K_{SN1} that is locally stored, new K_{SN} when accessing the SN1 again.

Optionally, in S1011, the UE performs synchronization with the SN in which the selected candidate cell is located, that is, performs a random access procedure. A detailed procedure is not limited.

Optionally, in S1012, the MN sends an SN status transfer message to the SN.

Optionally, in S1013, the MN performs data transmission to the SN1.

Optionally, in S1014 to S1016, a path update procedure is performed.

Optionally, if the enhanced CPA is configured for the UE, a subsequent procedure continues to be performed.

S1017: The UE continues to evaluate other candidate cells, and determines to select a candidate cell in the SN2.

S1018: The UE sends an RRC reconfiguration complete message * to the MN.

For example, the UE continues to perform an evaluation procedure for candidate cells. When determining to be handed over to a new candidate cell (which belongs to, for example, the SN2), the UE derives K_{SN2} by using the SN counter 2 in a conditional reconfiguration corresponding to the newly selected SN2, and further derives a signaling plane key and a user plane security key based on the configuration information (such as a selected algorithm and a user plane integrity protection and ciphering indication) by using K_{SN2}. In addition, the UE performs corresponding SRB3 configuration and DRB configuration.

Further, the UE sends the RRC reconfiguration complete message * to the MN. The message includes information used by the MN to identify the SN corresponding to the selected candidate PSCell, and the information may be a conditional reconfiguration identifier. Optionally, the message further includes a change indication, indicating to the MN that the message is used to change a source SN to a target SN.

S1019: The MN sends an SN configuration complete message to the SN2.

For example, the MN receives the RRC reconfiguration message from the UE, and determines the SN2 based on the information that identifies the SN corresponding to the selected candidate PSCell and that is carried in the message. Then, the MN sends the SN reconfiguration complete message to the SN2.

Correspondingly, after receiving the SN configuration complete message from the MN, when determining that no new K_{SN} is received from the MN, the SN2 derives a communication key by using K_{SN2} that is locally stored (obtained in S1002b).

It can be learned from the foregoing solution that, if the MN carries K_{SN2} in S1018, the SN2 derives the communication key by using K_{SN2} received in S1018; or if the MN does not carry K_{SN2} in S1018, the SN2 derives the communication key by using K_{SN2} received and stored in S1002b.

It can be understood that because the UE and the SN2 use the same K_{SN2} to perform key derivation, the communication keys derived by the SN2 and the UE are the same. Communication security between the SN2 and the UE can be protected by using the communication key.

S1020: The MN sends an SN release request message to the SN1.

For example, the SN release request message indicates the SN1 to stop sending a data packet to the UE. Further, the SN1 stores RRC reconfiguration information, K_{SN1}, and the marker information that correspond to the UE, to subsequently serve the UE.

S1021: Complete execution of a UP path update. A detailed procedure is not limited.

S1022: The UE continues to evaluate other candidate cells, and determines to select the SN1.

S1023: The UE derives K_{SN}' by using K_{SN1} that is locally stored.

For example, the UE continues to perform an evaluation procedure for candidate cells. When determining to be handed over back to the SN1, if the UE determines that corresponding K_{SN1} is locally stored, the UE derives new K_{SN1}' by using K_{SN1}. Further, the UE derives a signaling plane key and a user plane security key by using K_{SN1}', and the UE stores the new K_{SN1}'.

S1024: The UE sends an RRC reconfiguration complete message * to the MN. The RRC reconfiguration complete message * includes information used by the MN to identify the SN1 corresponding to the selected candidate PSCell, and the information may be a conditional reconfiguration identifier. Optionally, the message includes a change indication, indicating to the MN that the message is used to change a source SNn to the target SN1. Further, the message may include a reuse indication, which indicates the MN to access the same SN again or is used by the MN to determine to derive the new K_{SN1}' based on K_{SN1}.

S1025: The MN derives K_{SN1}' by using K_{SN1} that is locally stored, and stores K_{SN1}'.

For example, after receiving the RRC reconfiguration complete message * from the UE, the MN determines the SN1 based on the information that identifies the SN corresponding to the selected candidate PSCell and that is carried in the message, and then sends an SN reconfiguration complete message to the SN1.

S1026: The MN sends the SN reconfiguration complete message to the SN1. Correspondingly, the SN1 receives the SN reconfiguration complete message from the MN.

For example, after receiving the RRC reconfiguration complete message * from the UE in S1023, the MN determines, based on the information that is used to identify the SN corresponding to the candidate PSCell selected by the UE and that is carried in the RRC reconfiguration complete message *, that the SN in which the candidate PSCell selected by the UE is located is the SN1.

Further, the MN sends the SN reconfiguration complete message to the SN1, where the SN reconfiguration complete message carries K_{SN1}'.

Correspondingly, after receiving the SN reconfiguration complete message from the MN, the SN1 may determine whether the SN reconfiguration complete message carries K_{SN}. If the SN reconfiguration complete message carries K_{SN}, the SN1 derives a communication key by using K_{SN} carried in the SN reconfiguration complete message. If the SN reconfiguration complete message does not carry K_{SN}, the SN1 derives a communication key by using K_{SN} that is locally stored.

It can be learned from the foregoing solution that the MN carries K_{SN1}' in S1026, and the SN1 derives the communication key by using K_{SN1}' received in S1010.

It can be understood that because the UE and the SN1 use the same K_{SN1}' to perform key derivation, the communication keys derived by the SN1 and the UE are the same. Communication security between the SN1 and the UE can be protected by using the communication key. In addition, because the UE and the SN1 use K_{SN1} to perform key derivation in the procedure of S1007 to S1011, and use K_{SN1}' to perform key derivation in the procedure of S1021 to S1027, the communication keys derived in the two procedures are different. In this way, communication keys used by the UE and the SN1 in different communication procedures are different. This reduces a security risk caused by a key leakage and improves security performance.

The MN determines the SN1 based on the information that identifies the SN corresponding to the selected candidate PSCell and that is carried in the message, and then sends the SN reconfiguration complete message to the SN1.

S1027: The MN sends an SN release request message to the source SN, where the SN release request message indicates the SN to stop sending a data packet to the UE.

Optionally, when the SN is accessed again, in addition to K_{SN} used last time, inputs for deriving K_{SN} may further include another parameter, for example, a key length or an agreed character string.

It can be understood that the method 800 is described by using the enhanced CPA procedure as an example, but this application is not limited thereto. The method 800 can also be applied to an enhanced CPC procedure. For example, after S1001, if an initial status of the UE is that dual connectivity has been established, the MN determines to configure a CPC for the UE, and the MN indicates to the SN that the request is used for an enhanced CPC.

It can also be understood that, only main steps are shown in the procedure shown in the method 800, and an actual procedure may further include other steps. This is not limited in this application.

In the foregoing solution, an SN determines, by using marker information, whether new K_{SN} needs to be derived by using K_{SN} that is locally stored. In another possible implementation, when accessing an SN for the first time, the UE derives K_{SN} by using an SN counter, and then derives K_{SN}' by using K_{SN}. In this way, each time the SN needs to derive a security key, the SN needs to first derive K_{SN}' based on local K_{SN}. In this case, the SN does not need to store marker information, to save resources.

In the foregoing solution, the MN transmits different SN counters to ensure that initial K_{SN} for different SNs is different. In addition, the MN subsequently derives new K_{SN} by using K_{SN}, to ensure that different K_{SN} is used to derive a communication key when a same SN is accessed again. This avoids keystream reuse.

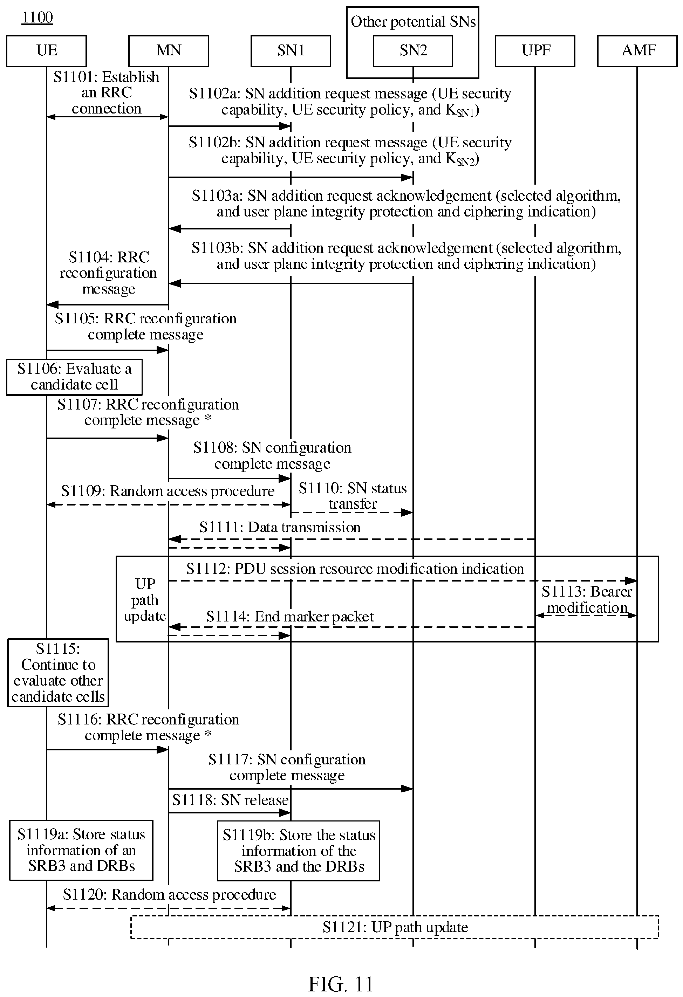

With reference to the embodiments shown in FIG. 2, FIG. 3, and FIG. 5, FIG. 11 is an example flowchart of a method 1100 according to an embodiment of this application. The following describes the method 1100 by using an example with reference to steps in FIG. 11.

S1101: Establish an RRC connection between UE and an MN. A detailed procedure is not limited in this application.

S1102a: The MN sends an SN addition request message to an SN1.

S1102b: The MN sends an SN addition request message to other potential SNs.

For example, when determining to configure an enhanced CPA for the UE, the MN separately sends the SN addition request message to candidate SNs, where the SN addition request message includes a UE security capability, a UE security policy, and K_{SNn}. Optionally, in a PDU split scenario, the SN addition request message includes a user plane integrity protection and ciphering activation decision that is of a PDU session and that is determined by the MN.

For the SNs, the MN derives corresponding K_{SN} by using different SN counter values, and therefore the SNs correspond to different K_{SN}. For example, the MN derives K_{SN1} for the SN1 by using an SN counter 1. The MN increases the SN counter to an SN counter 2, and derives K_{SN2} for the SN2 by using the SN counter 2. Further, if there is a candidate SN3, the MN continues to increase the SN counter 2 to an SN counter 3, and derives K_{SN3} for the SN3 by using the SN counter 3; and so on. After derivation of a needed key K_{SN} is completed, the MN increases an SN counter and stores an increased value. The SN counter is used to derive a next key K_{SN}.

An SN addition request message sent by the MN to each SN includes K_{SN} corresponding to the SN. For example, the SN addition request message sent by the MN to the SN1 includes K_{SN1}, and the SN addition request message sent by the MN to the SN2 includes K_{SN2}.

Optionally, the MN may further indicate to the SN that the request is used for the enhanced CPA.

If an initial status of the UE is that dual connectivity has been established, the MN determines to configure a CPC for the UE, and the MN indicates to the SN that the request is used for an enhanced CPC.

S1103a: The SN1 sends an SN addition request acknowledgement message to the MN, where the SN addition request acknowledgement message includes configuration information of an SCG.

Similarly, in S1103b, the SN2 sends an SN addition request acknowledgement message to the MN.

S1104: The MN sends an RRC reconfiguration message to the UE.

For example, after receiving responses from the SNs, the MN obtains the stored SN counters corresponding to the SNs, and generates conditional reconfiguration information. For example, the corresponding SN counter 1 is obtained for the SN1; the corresponding SN counter 2 is obtained for the SN2; and so on. A conditional reconfiguration includes a conditional reconfiguration identifier (for example, CondReconfig Id), an execution condition, and a conditional RRC reconfiguration (CondRRCReconfig), where the conditional RRC reconfiguration includes an SN counter value. Conditional reconfiguration information corresponding to each SN includes an SN counter of the SN.

The MN further generates the RRC reconfiguration message based on the conditional reconfiguration information, where the message includes the corresponding conditional reconfiguration information. Further, the RRC reconfiguration message includes an enhanced CPA indication.

S1105: The UE sends an RRC reconfiguration complete message to the MN.

For example, after receiving the RRC reconfiguration message from the MN, the UE processes the RRC reconfiguration message and sends the RRC reconfiguration complete message to the MN.

S1106: The UE evaluates a candidate cell, and determines to select the SN1.

S1107: The UE sends an RRC reconfiguration complete message * to the MN.

For example, the UE evaluates the candidate cell, and determines whether execution conditions of different candidate cells are satisfied.

If the UE detects a candidate cell that satisfies an execution condition, the UE sends an RRC reconfiguration complete message * corresponding to the selected candidate PSCell to the MN. The RRC reconfiguration complete message * includes information used by the MN to identify an SN (for example, the SN1) corresponding to the selected candidate PSCell, and the information may be a conditional reconfiguration identifier.

After determining the candidate cell, the UE derives K_{SN1} by using the SN counter 1 in a conditional reconfiguration corresponding to the SN1, and further derives a signaling plane key and a user plane security key based on the configuration information by using K_{SN1}. A detailed procedure is not limited in this application.

S1108: The MN sends an SN configuration complete message to the SN1.

For example, after receiving the RRC reconfiguration complete message * from the UE, the MN determines the SN1 based on the information that identifies the SN (for example, the SN1) corresponding to the selected candidate PSCell and that is carried in the RRC reconfiguration complete message *, and then sends the SN reconfiguration complete message to the SN1.

Correspondingly, after the SN1 receives the SN configuration complete message from the MN, if the SN1 does not receive new K_{SN} (for example, the SN configuration complete message does not carry new K_{SN}) from the MN, the SN1 derives a communication key by using local K_{SN1} (obtained in S502).

Optionally, in S1109, the UE performs synchronization with the SN in which the selected candidate cell is located, that is, performs a random access procedure. A detailed procedure is not limited.

Optionally, in S1110, the MN sends an SN status transfer message to the SN.

Optionally, in S1111, the MN performs data transmission to the SN1.

Optionally, in S1112 to S1114, a path update procedure is performed.

S1115: The UE continues to evaluate other candidate cells, and determines to select the SN2.

For example, the UE continues to perform an evaluation procedure for candidate cells. When determining to be handed over to a new SN (for example, the SN2), the UE derives K_{SN2} by using the SN counter 2 in a conditional reconfiguration corresponding to the newly selected SN2, and further derives a signaling plane key and a user plane security key based on the configuration information (such as a selected algorithm and a user plane integrity protection and ciphering indication) by using K_{SN2}. In addition, the UE performs corresponding SRB3 configuration and DRB configuration.

S1116: The UE sends an RRC reconfiguration complete message * to the MN. The message includes information used by the MN to identify the SN corresponding to a selected candidate PSCell, and the information may be a conditional reconfiguration identifier. Optionally, the message includes a change indication, indicating to the MN that the message is used to change a source SN to a target SN.

S1117: The MN sends an SN configuration complete message to the SN2.

For example, after receiving the RRC reconfiguration complete message * from the UE, the MN determines the SN2 based on the information that identifies the SN corresponding to the selected candidate PSCell and that is carried in the message, and then sends the SN reconfiguration complete message to the SN2.

S1118: The MN sends an SN release request to the SN1, where the SN release request indicates the SN to stop sending a data packet to the UE.

S1119a: The UE stores status information of an SRB3 and DRBs.

For example, when determining to be handed over from the SN1 to the SN2, the UE stores latest PDCP count values (including an uplink PDCP count value and a downlink PDCP count value) of a connection to the SN1. Specifically, for example, the UE stores the status information of the SRB3 and status information of a DRB1 between the UE and the SN. The status information of the SRB3 includes an SRB identifier and PDCP count values (where the PDCP count values herein can be understood as signaling plane PDCP count values) (including an uplink value and a downlink value), and the status information of the DRB1 includes a DRB1 identifier and PDCP status values (where the PDCP count values herein can be understood as user plane PDCP count values, including an uplink value and a downlink value).

S1119b: The SN1 stores the status information of the SRB3 and the DRBs.

For example, the SN1 stores RRC reconfiguration information corresponding to the UE, to subsequently serve the UE. In addition, the SN1 stores the status information corresponding to the SRB3 and the DRBs. The status information includes the SRB identifier and the PDCP status values (including the uplink value and the downlink value), and the DRB1 identifier and the PDCP status values (including the uplink value and the downlink value). Similarly, the UE also stores the status information of the SRB3 and the DRBs.

When the UE is connected to the SN1 again, initial values of the PDCP counters of the corresponding DRB or SRB between the UE and the SN1 are determined based on a storage status. For example, if a current uplink PDCP counter value corresponding to the DRB 1 has reached 100, a quantity of uplink packets correspondingly increases from 101 when the UE accesses the SN again.

In this case, the PDCP count values used when the UE accesses the SN1 for the second time are different from PDCP count values used when the UE accesses the SN1 for the first time. Therefore, a keystream generated by the UE and the SN1 by using the PDCP count values when the UE accesses the SN1 for the second time is different from a keystream generated by the UE and the SN1 by using the PDCP count values when the UE accesses the SN1 for the first time. This prevents keystream reuse and improves communication security performance.

S1120: The UE performs synchronization with the SN in which the selected candidate cell is located, that is, performs a random access procedure.

S1121: A network side performs a UP path update.

It can be understood that the method 1100 is described by using the enhanced CPA procedure as an example, but this application is not limited thereto. The method 900 can also be applied to an enhanced CPC procedure. For example, after S1101, if an initial status of the UE is that dual connectivity has been established, the MN determines to configure a CPC for the UE, and the MN indicates to the SN that the request is used for an enhanced CPC.

It can also be understood that, only main steps are shown in the procedure shown in the method 1100, and an actual procedure may further include other steps. This is not limited in this application.

In the foregoing solution, the configuration sent by the MN to the UE includes different SN counters, to ensure that K_{SN} for different SNs is different. This implements key isolation between the different SNs. Further, status information of the connection is maintained on the UE and the SN, to ensure that PDCP values are different when keys do not change. This ensures that to-be-used keystreams are different, and further prevents keystream reuse.

Specifically, after accessing an SN, the UE maintains status information (PDCP counter values that need be used to determine a next piece of signaling plane data or PDCP counter values that need to be used to determine a next user plane data packet) between the UE and the SN. When the UE subsequently accesses the same SN again, the UE starts to use security information based on a previous status, to prevent keystream reuse.

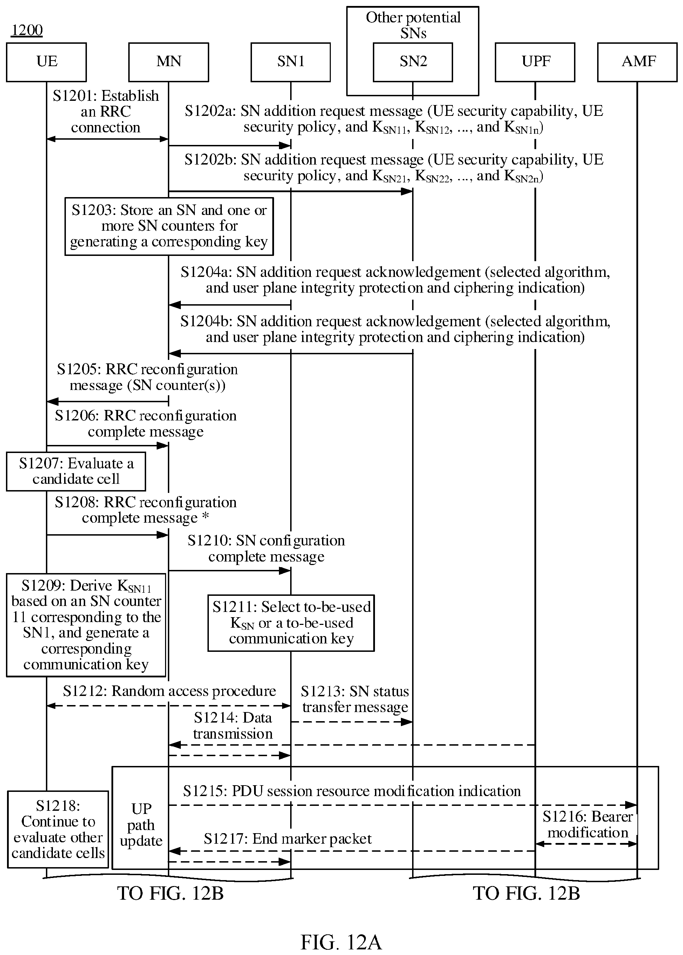

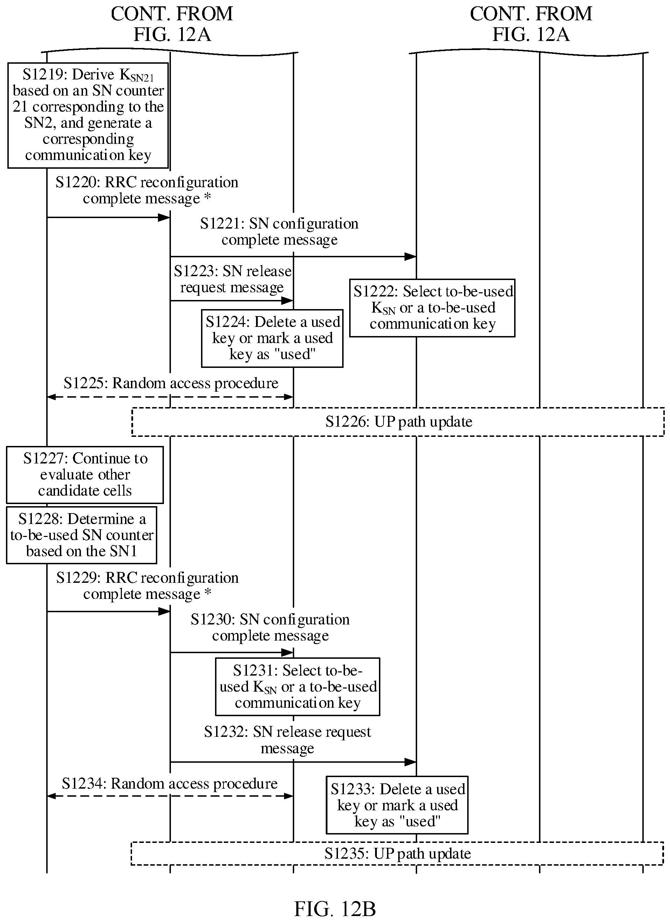

With reference to the embodiments shown in FIG. 2, FIG. 3, and FIG. 5, FIG. 12A and FIG. 12B are an example flowchart of a method 1200 according to an embodiment of this application. The method 1200 may be considered as a possible implementation of the method 600. UE in the method 1200 may correspond to the communication apparatus in the method 600, an MN in the method 1200 may correspond to the master node in the method 600, and an SN1 or an SN2 in the method 1200 may correspond to the first secondary node in the method 600. The following describes the method 1200 by using an example with reference to steps in FIG. 12A and FIG. 12B.

S1201: Establish an RRC connection between the UE and the MN. A detailed procedure is not limited in this application.

S1202a: The MN sends an SN addition request message to the SN1.

S1202b: The MN sends an SN addition request message to other potential SNs (where the SN2 is used as an example for description in this application).

For example, when determining to configure a CPA or an enhanced CPA for the UE, the MN separately sends the SN addition request message to candidate SNs, where the SN addition request message includes a UE security capability, a UE security policy, and at least one key K_{SNn}. Optionally, in a PDU split scenario, the SN addition request message further includes a user plane integrity protection and ciphering activation decision that is of a PDU session and that is determined by the MN.

It can be understood that when the SN addition request message includes a plurality of keys K_{SN}, the MN may indicate a use order of the keys by using explicit information. For example, the MN configures a number for each key K_{SN} to indicate a ranking of each key K_{SN}. Alternatively, the use order is indicated by using implicit information. This is not limited in this application. For example, the use order of these keys is indicated by using locations of the keys in the message (for example, sequentially using the keys from front to back).

A specific example of a manner in which the MN derives K_{SN} is as follows: For the SNs, the MN derives different K_{SN} by using different SN counters. For example, the MN derives K_{SN11}, K_{SN12}, ..., and K_{SN1n} for the SN1 by using an SN counter 11, an SN counter 12, ..., and an SN counter 1n, respectively. The SN counter 11, the SN counter 12, ..., and the SN counter 1n may be obtained by the MN in ascending order of local SN counter values. The MN further derives K_{SN21}, K_{SN22}, ..., and K_{SN2n} for the SN2 by using an SN counter 21, an SN counter 22, ..., and an SN counter 2n, respectively. The SN counter 21, the SN counter 22, ..., and the SN counter 2n may be obtained by sequentially increasing an SN counter value after all the keys for the SN1 are derived. The SN counter 21, the SN counter 22, ..., and the SN counter 2n are count values different from the SN counter 11, the SN counter 12, ..., and the SN counter 1n.

If there is a candidate SN3, the MN derives keys for the SN3 by using a similar method. Details are not described herein again.

In addition, after deriving corresponding K_{SN}, the MN temporarily stores a correspondence between one or more corresponding SN counters and an SN. For example, the SN counter 11, the SN counter 12, ..., and the SN counter 1n correspond to the SN1; the SN counter 21, the SN counter 22, ..., and the SN counter 2n correspond to the SN2; an SN counter 31, an SN counter 32, ..., and an SN counter 3n correspond to the SN3; and so on. After derivation of a needed key is completed, the MN increases an SN counter and stores an increased value. The SN counter is used to derive a next key K_{SN}.

Optionally, it can be understood that the foregoing example is described by using an example in which the MN sequentially derives keys for different SNs (that is, first derives all the keys for the SN1, and then derives the keys for the SN2). However, this application is not limited thereto. The MN may derive keys for a plurality of SNs in any manner, provided that SN counter values used to derive different keys are different. In an example, the foregoing manner of preparing keys for each SN may be replaced with a manner of preparing a key for each SN by the MN for a plurality of times. For example, after preparing a 1^{st} key for each SN, the MN sequentially prepares a 2^{nd} key and the like for each SN. Specifically, for example, the MN derives K_{SN11} for the SN1 based on the SN counter 11; increases the SN counter to the SN counter 21, and derives K_{SN21} for the SN2 based on the SN counter 21; if there is an SN3, the MN further increases the SN counter 21 to the SN counter 31, and derives K_{SN31} for the SN3 based on the SN counter 31; and so on. After the 1^{st} key is derived for each SN, the 2^{nd} key and a 3^{rd} key are derived for each SN by using the same method.

Optionally, the MN may determine, based on a requirement (for example, a quantity of times that the UE is allowed to be handed over in the SN1), a quantity of keys needed by the SN1, that is, determine a quantity of keys K_{SN} generated for the SN1. It can be understood that, quantities of keys needed by different SNs may be the same or different.

S1203: The MN stores an SN and one or more SN counters for generating a corresponding key.

For example, after deriving a corresponding key for each SN, the MN stores one or more SN counters for deriving the key and the SN. Optionally, the MN stores an association relationship between an SN, a derived key, and one or more corresponding SN counters.

Further, the MN may determine, based on a requirement (for example, a quantity of times of allowed handover in each SN), a quantity of keys needed by the SN. Quantities of keys needed by different SNs may be the same or different. Then, the MN selects a needed quantity of keys for each SN and sends the selected quantity of keys to the corresponding SN.

An implementation in which the MN derives the key for the SN is not limited in this application.

Optionally, the MN may further indicate to the SN that the request is used for the enhanced CPA.

If an initial status of the UE is that dual connectivity has been established, the MN determines to configure a CPC for the UE, and the MN indicates to the SN that the request is used for an enhanced CPC.

S1204a: The SN1 sends an SN addition request acknowledgement message to the MN.

S1204b: The SN2 sends an SN addition request acknowledgement message to the MN.

For example, after determining to receive the request of the MN, the SN sends the SN addition request acknowledgement message to the MN, where the SN addition request acknowledgement message includes configuration information of an SCG.

In addition, the SN sequentially stores the received key.

S1205: The MN sends an RRC reconfiguration message to the UE.

For example, after receiving responses from the SNs, the MN obtains, from the local storage, one or more SN counters corresponding to different SNs, and generates conditional reconfiguration information. For example, the corresponding SN counter 11, SN counter 12, ..., and SN counter 1n are obtained for the SN1; the corresponding SN counter 21, SN counter 22, ..., and SN counter 2n are obtained for the SN2; and so on. A conditional reconfiguration includes a conditional reconfiguration identifier (for example, CondReconfig Id), an execution condition, and a conditional RRC reconfiguration (CondRRCReconfig), where the conditional RRC reconfiguration includes an obtained SN counter value.

Optionally, the MN indicates a use order of the SN counter values (the same as the use order of K_{SN} sent by the MN to the SN). The MN may indicate, by using explicit information, an included order, or a standardized rule (in ascending or descending order of the SN counter values), the order of using the SN counter values by the UE. If the standardized rule is used, when sending the key order to the SN, the MN also determines, based on the rule, an order of indicating the keys to the SN. For example, the MN configures a number for each key K_{SN} to indicate a ranking of each key K_{SN}. For another example, the MN sets an order of the SN counters in the conditional reconfiguration information to indicate the use order of these SN counters (for example, sequentially using the SN counters from front to back).

Therefore, conditional reconfiguration information corresponding to each SN includes an SN counter of the SN.

The MN further generates the RRC reconfiguration message based on the conditional reconfiguration information, where the message includes the corresponding conditional reconfiguration information. Optionally, the RRC reconfiguration message includes an enhanced CPA indication. Optionally, the MN further sends the RRC reconfiguration message to the UE.

S1206: The UE sends an RRC reconfiguration complete message to the MN.

For example, after receiving the RRC reconfiguration message from the MN, the UE processes the message and sends the RRC reconfiguration complete message to the MN.

S1207: The UE evaluates a candidate cell.

For example, the UE starts to evaluate the candidate cell, and determines whether an execution condition corresponding to a candidate cell is satisfied.

S1208: The UE sends an RRC reconfiguration complete message * to the MN.

For example, if the UE detects a candidate cell that satisfies an execution condition, the UE sends an RRC reconfiguration complete message * corresponding to the selected candidate PSCell to the MN. The message includes information used by the MN to identify an SN (assumed as the SN1) corresponding to the selected candidate PSCell, and the information may be a conditional reconfiguration identifier.

S1209: The UE derives K_{SN11} based on the SN counter 11 corresponding to the SN1, and generates a corresponding communication key.

For example, for the determined candidate cell, the UE derives K_{SN} based on an SN counter in a corresponding conditional reconfiguration.

If the conditional reconfiguration information corresponding to the SN1 includes a plurality of SN counters, the UE selects an SN counter with a highest priority based on an order indicated by the MN or a preconfigured standardized rule. Specifically, for example, the UE selects an SN counter based on the use order. If the standardized rule is to use the SN counter values in ascending order, the UE selects a smallest SN counter from the SN counter values corresponding to the SN to derive K_{SN}. Alternatively, if the use order is a sequence of the SN counter values in the message, and the SN counter values are sequentially used from front to back, the UE uses a foremost SN counter value. Alternatively, the MN explicitly indicates the use order of the SN counters, and the UE determines a to-be-used SN counter value based on the indication.

For example, the UE derives K_{SN11} for the SN1 by using the SN counter 11.

Further, the UE derives a signaling plane key and a user plane security key based on the configuration information (such as a selected algorithm and a user plane integrity protection and ciphering indication) by using K_{SN11}. For example, for a user plane, a corresponding key is determined to be derived based on an enabling indication. After derivation of the key is completed, the UE deletes a value of the used SN counter 11 from a local storage, updates the configuration to mark the used SN counter 11 as "used", or deletes the used SN counter 11 from the configuration. A specific manner is not limited (where this step may alternatively be performed at any time after step S1219).

S1210: The MN sends an SN configuration complete message to the SN1.

For example, after receiving the RRC reconfiguration message from the UE, the MN determines the SN1 based on the information that identifies the SN1 corresponding to the selected candidate PSCell and that is carried in the message, and then sends the SN reconfiguration complete message to the SN1.

S1211: The SN1 selects to-be-used K_{SN} or a to-be-used communication key.

For example, after receiving the SN configuration complete message from the MN, the SN1 selects to-be-used K_{SN11} based on a use order of the plurality of locally stored keys K_{SN}, and further derives a communication key (including a signaling plane key and/or a user plane key) for the UE based on K_{SN11}.

Alternatively, after receiving the at least one key K_{SN} sent by the MN in S1202a, the SN1 may derive a communication key (including a signaling plane key and/or a user plane key) for the UE based on each received key K_{SN}, and store the communication key based on the use order. In this case, the SN1 selects a to-be-used communication key based on the use order. In other words, the SN1 may derive the to-be-used communication key in advance based on K_{SN}.

Optionally, in S1212, the UE performs synchronization with the SN in which the selected candidate cell is located, that is, performs a random access procedure.

Optionally, in S1213, the MN sends an SN status transfer message to the SN.

Optionally, the MN performs data forwarding to the target SN.

Optionally, in S1215 to S1217, a path update procedure is performed.

Optionally, if the enhanced CPA is configured for the UE, a subsequent procedure continues to be performed.

S1218: The UE continues to evaluate other candidate cells, and determines to select the SN2.

S1219: The UE derives K_{SN21} based on the SN counter 21 corresponding to the SN2, and generates a corresponding communication key.

For example, the UE continues to perform an evaluation procedure for candidate cells. When determining to be handed over to a candidate cell of a new SN (where the new SN is assumed as the SN2), the UE derives K_{SN} by using an SN counter in a conditional reconfiguration corresponding to the newly selected candidate cell, and further derives a signaling plane key and a user plane security key based on the configuration information (such as a selected algorithm and a user plane integrity protection and ciphering indication) by using selected K_{SN}.

Specifically, the UE selects an SN counter based on the use order. For example, if the standardized rule is to use the SN counter values in ascending order, the UE selects a smallest SN counter from the SN counter values corresponding to the SN to derive K_{SN}. Alternatively, if the use order is a sequence of the SN counter values in the message, and the SN counter values are sequentially used from front to back, the UE uses a foremost SN counter value. Alternatively, the MN explicitly indicates the use order of the SN counters, and the UE determines a to-be-used SN counter value based on the indication.

For example, the UE derives K_{SN21} by using the SN counter 21.

In addition, the UE performs corresponding SRB3 configuration and DRB configuration. After derivation of the key is completed, the UE deletes a value of the used SN counter 21 from a local storage, updates the configuration to mark the used SN counter 21 as "used", or deletes the used SN counter 21 from the configuration. A specific manner is not limited (where this step may alternatively be performed at any time after step 13).

S1220: The UE sends an RRC reconfiguration complete message * to the MN.

For example, the RRC reconfiguration complete message * includes information identifying the SN corresponding to the selected candidate PSCell.

S1221: The MN sends an SN reconfiguration complete message to the SN2.

S1222: The SN2 selects to-be-used K_{SN} or a to-be-used communication key.

For example, after receiving the SN reconfiguration complete message from the MN, the SN2 selects the to-be-used K_{SN} or the to-be-used communication key.

In an example, the SN2 selects to-be-used K_{SN21} based on the use order, and further derives a communication key (including a signaling plane key and/or a user plane key) for the UE based on K_{SN21}.

Alternatively, after receiving the at least one key K_{SN} sent by the MN in S1202b, the SN2 derives a communication key (including a signaling plane key and/or a user plane key) for the UE based on each received key K_{SN}, and stores the communication key based on the use order. In this case, the SN2 may select a to-be-used communication key based on the use order. In other words, the SN2 may derive the to-be-used communication key in advance based on K_{SN}.

S1223: The MN sends an SN release request message to the SN1.

For example, the SN release request message indicates the SN1 to delete a used key or mark a used key as "used" or "unavailable".

S1224: The SN1 deletes the used key or marks the used key as "used".

For example, the SN1 deletes K_{SN11} based on the received SN release request message, or marks K_{SN11} as "used" or "unavailable".

S1225: The UE performs synchronization with the SN in which the selected candidate cell is located, that is, performs a random access procedure.

S1226: A network side performs a path update procedure.

S1227: The UE continues to evaluate other candidate cells, and determines to select the SN1.

S1228: The UE determines a to-be-used SN counter based on the SN1.

For example, the UE continues to perform an evaluation procedure for candidate cells. When determining to be handed over to the SN1, the UE derives K_{SNn} based on an unused SN counter from the MN, and further derives a signaling plane key and a user plane security key based on the configuration information (such as a selected algorithm and a user plane integrity protection and ciphering indication) by using selected K_{SNn}.

Specifically, the UE selects an SN counter based on the use order and marker information. For example, if the standardized rule is to use the SN counter values in ascending order, the UE selects a smallest SN counter from the SN counter values corresponding to the SN to derive K_{SN}. Alternatively, if the use order is a sequence of the SN counter values in the message, and the SN counter values are sequentially used from front to back, the UE uses a foremost SN counter value. Alternatively, the MN explicitly indicates the use order of the SN counters, and the UE determines a to-be-used SN counter value based on the indication.

For example, the UE derives K_{SN12} by using the SN counter 12.

For example, the UE continues to perform an evaluation procedure for candidate cells. When determining to be handed over to the SN1, the UE selects a to-be-used SN counter based on the unused SN counter from the MN, that is, selects the to-be-used SN counter based on the unused SN counter in the SN counters corresponding to the SN1.

If there are a plurality of unused SN counters, the UE selects an SN counter with a highest priority based on an order indicated by the MN or a preconfigured standardized rule. Specifically, for example, if the standardized rule is to use the SN counter values in ascending order, the UE selects a smallest SN counter value from the unused SN counters corresponding to the SN1 to derive K_{SN}. Alternatively, if the use order is a sequence of the SN counter values in the message, and the SN counter values are sequentially used from front to back, the UE uses a foremost unused SN counter value in the message. Alternatively, the UE determines a to-be-used SN counter value from the unused SN counters based on explicit indication information from the MN. For example, the UE derives K_{SN12} for the SN1 by using the SN counter 12.

In addition, the UE performs corresponding SRB3 configuration and DRB configuration.

After derivation of the key is completed, the UE deletes a value of the used SN counter 12 from a local storage, updates the configuration to mark the used SN counter 12 as "used", or deletes the used SN counter 12 from the configuration. A specific manner is not limited (where this step may alternatively be performed at any time after step S1229).

Further, optionally, for a storage manner, only a most recently used SN counter value may be stored.

S1229: The UE sends an RRC reconfiguration complete message * to the MN.

For example, the UE sends the RRC reconfiguration complete message * to the MN, where the message includes information used to identify the SN corresponding to the selected candidate PSCell.

S1230: The MN sends an SN configuration complete message to the SN1.

S1231: The SN1 selects to-be-used K_{SN} or a to-be-used communication key.

For example, the SN1 selects K_{SN} from unused K_{SN} based on the use order, and further derives a communication key (including a signaling plane key and/or a user plane key) for the UE.

For example, the SN1 derives the communication key based on K_{SN12}.

Alternatively, after receiving the at least one key K_{SN} sent by the MN in step 1, the SN derives a communication key (including a signaling plane key and/or a user plane key) for the UE based on each received key K_{SN}, and stores the communication key based on the use order. In this case, the SN selects a communication key from an unused communication key based on the use order.

S1232: The MN sends an SN release request message to the SN2.

S1233: The SN2 deletes a used key or marks a used key as "used".

For example, after receiving the SN release request message from the MN, the SN2 deletes the used key or mark the used key as "used" or "unavailable".

S1234: The UE performs synchronization with the SN in which the selected candidate cell is located, that is, performs a random access procedure.

S1235: A network side performs a path update procedure.

It can be understood that, only main steps are shown in the procedure shown in the method 1000, and an actual procedure may further include other steps. This is not limited in this application.

In the foregoing solution, for each SN, the configuration sent by the MN to the UE includes at least one different SN counter, to ensure that K_{SN} for different SNs is different. This implements key isolation between the different SNs. Further, for each SN, a plurality of SN counters are sent to ensure that the UE uses different root keys when accessing a same SN again.

It can be understood that the foregoing method 800 to method 1200 provided in embodiments of this application are all described by using the CPA procedure as examples. However, it should be understood that the method for establishing a secure connection between the UE and the SN provided in this application is also applicable to a CPC procedure, or is also applicable to a procedure of establishing a secure connection between the UE and different devices in another network architecture. This is not limited in this application.

It can be understood that the method 800 to the method 1200 are described by using the enhanced CPAC procedure as examples, but this application is not limited thereto. In an example, some steps in the method 800 to the method 1200 can also be applied to the CPAC procedures shown in FIG. 2 and FIG. 3. However, in this case, after evaluating the candidate cell and performing the random access procedure with the target cell, the UE releases the CPA or CPC configuration. Therefore, the procedure in which the UE accesses the candidate cell for the first time in the method 800 to the method 1200 (for example, S801 to S808 in the method 800, S901 to S908 in the method 900, S1001 to S1008 in the method 1000, S1101 to S1107 in the method 1100, and S1201 to S1208 in the method 1200) may be reused in the CPAC procedure shown in FIG. 2 or FIG. 3.

It can also be understood that the method 800 to the method 1200 are described by using examples in which the UE establishes a secure connection to an SN when being handed over between the SNs, but this application is not limited thereto. In a possible example, the method 800 to the method 1200 can also be applied to handover between different cells of a same node. In this case, the SN1 and the SN2 in the foregoing embodiments may be considered as a same SN, and handover of the UE between the SN1 and the SN2 may be considered as handover of the UE from one cell of the SN to another cell of the SN.

In correspondence to the methods provided in the foregoing method embodiments, an embodiment of this application further provides a corresponding apparatus. The apparatus includes corresponding modules configured to perform the foregoing method embodiments. The modules may be software, hardware, or a combination of software and hardware. It can be understood that technical features described in the foregoing method embodiments are also applicable to the following apparatus embodiments. Therefore, for content that is not described in detail, refer to the foregoing method embodiments. For brevity, details are not described herein again.

In correspondence to the methods provided in the foregoing method embodiments, an embodiment of this application further provides a corresponding apparatus. The apparatus includes corresponding modules configured to perform the foregoing method embodiments. The modules may be software, hardware, or a combination of software and hardware. It can be understood that technical features described in the foregoing method embodiments are also applicable to the following apparatus embodiments. Therefore, for content that is not described in detail, refer to the foregoing method embodiments. For brevity, details are not described herein again.

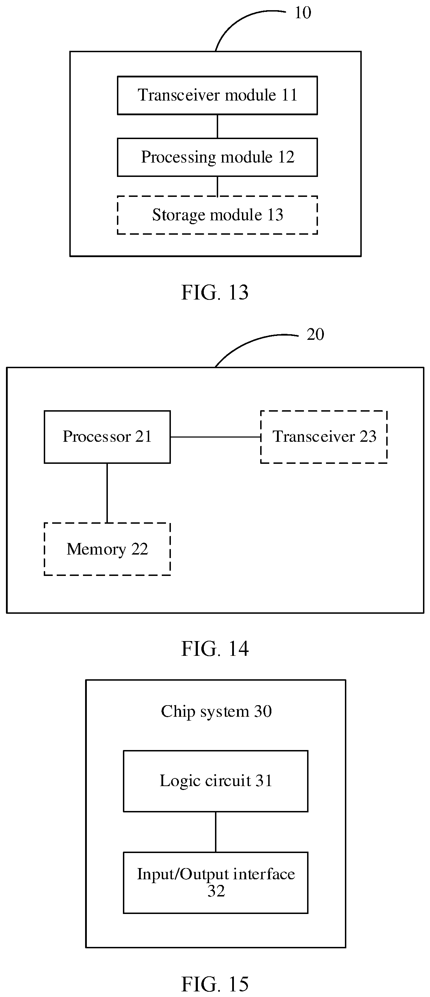

FIG. 13 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing. In other words, the transceiver module 11 is configured to perform receiving and sending related operations, and the processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement actions of the devices or the network elements in the foregoing method embodiments.

In a first design, the apparatus 10 may correspond to the communication apparatus in the foregoing method embodiments (for example, the communication apparatus in the method 600, the method 700, and the method 710, or the UE in the method 800 to the method 1200). The communication apparatus may be a terminal device, or a component (for example, a chip) of a terminal device.

The apparatus 10 may implement steps or procedures performed by the communication apparatus in the foregoing method embodiments. The transceiver module 11 may be configured to perform receiving and sending related operations performed by the communication apparatus in the foregoing method embodiments. The processing module 12 may be configured to perform processing-related operations performed by the communication apparatus in the foregoing method embodiments.

In a possible implementation, the transceiver module 11 is configured to receive a radio resource control reconfiguration message from a master node, where the radio resource control reconfiguration message includes N count values for a first secondary node and M count values for a second secondary node, N and M are positive integers greater than or equal to 1, the N count values for the first secondary node are different from each other, and the M count values for the second secondary node are different from each other; and the processing module 12 is configured to protect communication data between the apparatus and the first secondary node based on a first root key when determining to access the first secondary node, where the first root key is generated by the communication apparatus based on a count value that is in the N count values for the first secondary node and that is the first to be used.

In another possible implementation, the transceiver module 11 is configured to receive a radio resource control reconfiguration message from a master node, where the radio resource control reconfiguration message includes a first count value for a first secondary node and a second secondary node; and the processing module 12 is configured to protect communication data between the apparatus and the first secondary node based on a first root key when determining to access the first secondary node, where the first root key is generated by the communication apparatus based on the first count value.

In still another possible implementation, the transceiver module 11 is configured to receive a first count value for a first secondary node and a second count value for a second secondary node from a master node, where the first count value is different from the second count value; and the processing module 12 is configured to protect communication data between the communication apparatus and the first secondary node based on a first root key when determining to access the first secondary node, where the first root key is generated by the communication apparatus based on the first count value.

In a second design, the apparatus 10 may correspond to the first secondary node in the foregoing method embodiments (for example, the first secondary node in the method 600, the method 700, and the method 710, or the SN1 or the SN2 in the method 800 to the method 1200), or may be a component (for example, a chip) of the first secondary node.

The apparatus 10 may implement steps or procedures performed by the first secondary node in the foregoing method embodiments. The transceiver module 11 may be configured to perform receiving and sending related operations performed by the first secondary node in the foregoing method embodiments. The processing module 12 may be configured to perform processing-related operations performed by the first secondary node in the foregoing method embodiments.

In a possible implementation, the transceiver module 11 is configured to receive N root keys from a master node, where N is a positive integer greater than or equal to 1, and values of the N root keys are different from each other; and the processing module 12 is configured to protect communication data between the transceiver module and a communication apparatus based on a first root key when determining that the communication apparatus accesses the first secondary node, where the first root key is a root key that is in the N root keys and that is the first to be used.

In another possible implementation, the transceiver module 11 is configured to receive a first root key from a master node. The processing module 12 is configured to protect communication data between the first secondary node and a communication apparatus based on the first root key when determining that the communication apparatus accesses the apparatus. The processing module 12 is further configured to protect communication data between the apparatus and the communication apparatus based on a third root key when determining that the communication apparatus accesses the apparatus again after being disconnected from the apparatus, where the third root key is generated by the first secondary node based on the first root key, and the third root key is different from the first root key.

In a third design, the apparatus 10 may correspond to the master node in the foregoing method embodiments (for example, the master node in the method 600, the method 700, and the method 710, or the MN in the method 800 to the method 1200), or may be a component (for example, a chip) of the master node.

The apparatus 10 may implement steps or procedures performed by the master node in the foregoing method embodiments. The transceiver module 11 may be configured to perform receiving and sending related operations performed by the master node in the foregoing method embodiments. The processing module 12 may be configured to perform processing-related operations performed by the master node in the foregoing method embodiments.

In a possible implementation, the processing module 12 is configured to: generate N count values for a first secondary node and M count values for a second secondary node, where N and M are positive integers greater than or equal to 1, the N count values for the first secondary node are different from each other, and the M count values for the second secondary node are different from each other; and generate N root keys based on each of the N count values for the first secondary node and generate M root keys based on each of the M count values for the second secondary node. The transceiver module 11 is configured to send the N root keys to the first secondary node and send the M root keys to the second secondary node. The transceiver module is further configured to send a radio resource control reconfiguration message to a communication apparatus, where the radio resource control reconfiguration message includes the N count values for the first secondary node and the M count values for the second secondary node.

In another possible implementation, the processing module 12 is configured to generate a first count value for a first secondary node and a second secondary node. The transceiver module 11 is configured to send a radio resource control reconfiguration message to a communication apparatus, where the radio resource control reconfiguration message includes the first count value. The processing module 12 is configured to generate a first root key based on the first count value when determining that the communication apparatus accesses the first secondary node. The transceiver module 11 is further configured to send the first root key to the first secondary node, where the first root key is used to protect communication data between the communication apparatus and the first secondary node.

In still another possible implementation, the processing module 12 is configured to generate a first count value for a first secondary node and a second count value for a second secondary node, where the first count value is different from the second count value. The processing module is further configured to generate a first root key based on the first count value and generate a second root key based on the second count value. The transceiver module 11 is configured to send a radio resource control reconfiguration message to a communication apparatus, where the radio resource control reconfiguration message includes the first count value for the first secondary node and the second count value for the second secondary node. The transceiver module 11 is further configured to send the first root key to the first secondary node and send the second root key to the second secondary node.

It should be understood that detailed procedures of performing the corresponding steps by the modules are described in the foregoing method embodiments. For brevity, details are not described herein again.

It should also be understood that the apparatus 10 herein is embodied in a form of a functional module. The term "module" herein may be an application-specific integrated circuit (application-specific integrated circuit, ASIC), an electronic circuit, a processor configured to execute one or more software or firmware programs (for example, a shared processor, a dedicated processor, or a packet processor), a memory, a combinational logic circuit, and/or another appropriate component that supports the described functions. In an optional example, a person skilled in the art can understand that the apparatus 10 may be specifically the communication apparatus in the foregoing embodiments, and may be configured to perform procedures and/or steps corresponding to the communication apparatus in the foregoing method embodiments; the apparatus 10 may be specifically the first secondary node in the foregoing embodiments, and may be configured to perform procedures and/or steps corresponding to the first secondary node in the foregoing method embodiments; or the apparatus 10 may be specifically a mobility management network element in the foregoing embodiments, and may be configured to perform procedures and/or steps corresponding to the mobility management network element in the foregoing method embodiments. To avoid repetition, details are not described herein again.

The apparatus 10 in each of the foregoing solutions has a function of implementing corresponding steps performed by the device (for example, the communication apparatus, the first secondary node, or the master node) in the foregoing methods. The function may be implemented by using hardware, or may be implemented by hardware executing corresponding software. The hardware or the software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit, for example, the processing module, may be replaced with a processor, to respectively perform receiving and sending operations and processing-related operations in the method embodiments.

In addition, the transceiver module 11 may alternatively be a transceiver circuit (which may include, for example, a receiving circuit and a sending circuit), and the processing module may be a processing circuit.

FIG. 14 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the methods in the foregoing method embodiments. Optionally, there are one or more processors 21.

Optionally, as shown in FIG. 14, the apparatus 20 further includes the memory 22, where the memory 22 is configured to store the computer program or instructions and/or data. The memory 22 and the processor 21 may be integrated, or may be disposed separately. Optionally, there are one or more memories 22.

Optionally, as shown in FIG. 14, the apparatus 20 may further include a transceiver 23, where the transceiver 23 is configured to receive a signal and/or send a signal. For example, the processor 21 is configured to control the transceiver 23 to receive the signal and/or send the signal.

In a solution, the apparatus 20 is configured to implement operations performed by the communication apparatus in the foregoing method embodiments.

In another solution, the apparatus 20 is configured to implement operations performed by the first secondary node in the foregoing method embodiments.

In another solution, the apparatus 20 is configured to implement operations performed by the master node in the foregoing method embodiments.

It should be understood that the processor mentioned in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate, a transistor logic device, a discrete hardware component, or the like. The general-purpose processor may be a microprocessor, or the processor may be any conventional processor or the like.

It should also be understood that the memory mentioned in this embodiment of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM includes a plurality of forms as follows: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, another programmable logic device, a discrete gate, a transistor logic device, or a discrete hardware component, the memory (a storage module) may be integrated into the processor.

It should also be noted that the memories described in this specification are intended to include but are not limited to these memories and any other appropriate types of memories.

FIG. 15 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, so that the chip system 30 can implement the methods and functions in embodiments of this application. The input/output interface 32 may be an input/output circuit in the chip system 30, and outputs information that is obtained through processing by the chip system 30, or inputs to-be-processed data or signaling information to the chip system 30 for processing.

In another solution, the chip system 30 is configured to implement operations performed by the communication apparatus in the foregoing method embodiments (for example, the communication apparatus in FIG. 6 and FIG. 7(a) and FIG. 7(b) or the UE in FIG. 8 to FIG. 12A and FIG. 12B).

For example, the logic circuit 31 is configured to implement processing-related operations performed by the communication apparatus in the foregoing method embodiments, for example, processing-related operations performed by the communication apparatus in the embodiments shown in FIG. 6 and FIG. 7(a) and FIG. 7(b), or processing-related operations performed by the UE in any one of the embodiments shown in FIG. 8 to FIG. 12A and FIG. 12B. The input/output interface 32 is configured to implement sending and/or receiving related operations performed by the communication apparatus in the foregoing method embodiments, for example, sending and/or receiving related operations performed by the communication apparatus in the embodiments shown in FIG. 6 and FIG. 7(a) and FIG. 7(b), or sending and/or receiving related operations performed by the UE in any one of the embodiments shown in FIG. 8 to FIG. 12A and FIG. 12B.

In another solution, the chip system 30 is configured to implement operations performed by the first secondary node in the foregoing method embodiments (for example, the first secondary node in FIG. 6 and FIG. 7(a) and FIG. 7(b) or the SN1 or the SN2 in FIG. 8 to FIG. 12A and FIG. 12B).

For example, the logic circuit 31 is configured to implement processing-related operations performed by the first secondary node in the foregoing method embodiments, for example, processing-related operations performed by the first secondary node in the embodiments shown in FIG. 6 and FIG. 7(a) and FIG. 7(b), or processing-related operations performed by the SN1 or the SN2 in any one of the embodiments shown in FIG. 8 to FIG. 12A and FIG. 12B. The input/output interface 32 is configured to implement sending and/or receiving related operations performed by the first secondary node in the foregoing method embodiments, for example, sending and/or receiving related operations performed by the first secondary node in the embodiments shown in FIG. 6 and FIG. 7(a) and FIG. 7(b), or sending and/or receiving related operations performed by the SN1 or the SN2 in any one of the embodiments shown in FIG. 8 to FIG. 12A and FIG. 12B.

In another solution, the chip system 30 is configured to implement operations performed by the master node in the foregoing method embodiments (for example, the master node in FIG. 6 and FIG. 7(a) and FIG. 7(b) or the MN in FIG. 8 to FIG. 12A and FIG. 12B).

For example, the logic circuit 31 is configured to implement processing-related operations performed by the master node in the foregoing method embodiments, for example, processing-related operations performed by the master node in the embodiments shown in FIG. 6 and FIG. 7(a) and FIG. 7(b), or processing-related operations performed by the MN in any one of the embodiments shown in FIG. 8 to FIG. 12A and FIG. 12B. The input/output interface 32 is configured to implement sending and/or receiving related operations performed by the master node in the foregoing method embodiments, for example, sending and/or receiving related operations performed by the master node in the embodiments shown in FIG. 6 and FIG. 7(a) and FIG. 7(b), or sending and/or receiving related operations performed by the MN in any one of the embodiments shown in FIG. 8 to FIG. 12A and FIG. 12B.

An embodiment of this application further provides a computer-readable storage medium. The computer-readable storage medium stores computer instructions for implementing the methods performed by the devices in the foregoing method embodiments.

For example, when a computer program is executed by a computer, the computer is enabled to implement the method performed by a mobility management network element in the foregoing method embodiments.

For another example, when a computer program is executed by a computer, the computer is enabled to implement the method performed by the communication apparatus in the foregoing method embodiments.

An embodiment of this application further provides a computer program product, including instructions. When the instructions are executed by a computer, the method performed by the device (for example, the communication apparatus, the first secondary node, or the master node) in the foregoing method embodiments is implemented.

An embodiment of this application further provides a communication system, including the foregoing first secondary node. Optionally, the communication system further includes the foregoing master node, and optionally further includes the foregoing communication apparatus.

For descriptions of related content and beneficial effects of any apparatus provided above, refer to the corresponding method embodiments provided above. Details are not described herein again.

In the several embodiments provided in this application, it should be understood that the disclosed apparatuses and methods may be implemented in other manners. For example, the described apparatus embodiments are merely examples. For example, division into units is merely logical function division and may be other division during actual implementation. For example, a plurality of units or components may be combined or may be integrated into another system, or some features may be ignored or not be performed. In addition, the displayed or discussed mutual couplings or direct couplings or communication connections may be implemented through some interfaces. The indirect couplings or communication connections between the apparatuses or units may be implemented in an electrical form, a mechanical form, or another form.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. The usable medium may include but is not limited to any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by a communication apparatus, a radio resource control reconfiguration message from a master node, wherein the radio resource control reconfiguration message comprises N count values for a first secondary node and M count values for a second secondary node, N and M are positive integers greater than or equal to 1, the N count values for the first secondary node are different from each other, and the M count values for the second secondary node are different from each other; and
protecting, by the communication apparatus, communication data between the communication apparatus and the first secondary node based on the first root key when determining to access the first secondary node, wherein the first root key is generated by the communication apparatus based on a count value that is in the N count values for the first secondary node and that is the first to be used.

2. The method according to claim 1, wherein the method further comprises:
determining, by the communication apparatus from the N count values for the first secondary node based on a use order of the N count values, the first count value that is the first to be used; and
generating, by the communication apparatus, the first root key based on the first count value.

3. The method according to claim 1, wherein the method further comprises:
generating, by the communication apparatus, N root keys based on each of the N count values, wherein the N root keys comprise the first root key, and the count value corresponding to the first root key is the first to be used.

4. The method according to any one of claims 1 to 3, wherein the N count values for the first secondary node are comprised in first secondary cell group conditional configuration information of the first secondary node, the first secondary cell group conditional configuration information further comprises a first execution condition corresponding to a primary secondary cell of the first secondary node, the M count values for the second secondary node are comprised in second secondary cell group conditional configuration information of the second secondary node, and the second secondary cell group conditional configuration information further comprises a second execution condition corresponding to a primary secondary cell of the second secondary node;
before the protecting, by the communication apparatus, communication data between the communication apparatus and the first secondary node based on the first root key, the method further comprises:
when the first execution condition is satisfied, determining, by the communication apparatus, to access the first secondary node; and
after the protecting, by the communication apparatus, communication data between the communication apparatus and the first secondary node based on the first root key, the method further comprises:
when the second execution condition is satisfied, determining, by the communication apparatus, to access the second secondary node; and
protecting, by the communication apparatus, communication data between the communication apparatus and the second secondary node based on a second root key, wherein the second root key is generated by the communication apparatus based on a count value that is in the M count values for the second secondary node and that is the first to be used.

5. The method according to claim 4, wherein the method further comprises:
deleting, by the communication apparatus, the first count value or marking the first count value as invalid; or
deleting, by the communication apparatus, the first root key or marking the first root key as invalid.

6. The method according to claim 4 or 5, wherein the method further comprises:
after the protecting, by the communication apparatus, communication data between the communication apparatus and the second secondary node based on a second root key, the method further comprises:
when the first execution condition is satisfied, determining, by the communication apparatus, to access the first secondary node; and
protecting, by the communication apparatus, communication data between the communication apparatus and the first secondary node based on a third root key, wherein the third root key is generated by the communication apparatus based on a count value that is in the N count values for the first secondary node and that is the second to be used.

7. The method according to any one of claims 1 to 3, wherein the protecting, by the communication apparatus, communication data between the communication apparatus and the first secondary node based on the first root key when determining to access the first secondary node comprises:
protecting, by the communication apparatus, the communication data between the communication apparatus and the first secondary node based on the first root key when determining to access a first cell of the first secondary node; and
after the protecting, by the communication apparatus, the communication data between the communication apparatus and the first secondary node based on the first root key, the method further comprises:
protecting, by the communication apparatus, communication data between the communication apparatus and the first secondary node based on a third root key when determining to be handed over from the first cell of the first secondary node to a second cell of the first secondary node, wherein the third root key is generated by the communication apparatus based on a count value that is in the N count values for the first secondary node and that is the second to be used.

8. The method according to claim 7, wherein before the protecting, by the communication apparatus, communication data between the communication apparatus and the first secondary node based on a third root key, the method further comprises:
deleting, by the communication apparatus, the first count value or marking the first count value as invalid; or
deleting, by the communication apparatus, the first root key or marking the first root key as invalid.

9. The method according to any one of claims 1 to 8, wherein the method further comprises:
receiving, by the communication apparatus, indication information from the master node; and
determining, by the communication apparatus, the use order of the N count values and/or a use order of the M count values based on the indication information; or
determining, by the communication apparatus, the use order of the N count values and/or a use order of the M count values based on a preconfigured rule.

10. A communication method, wherein the method comprises:
receiving, by a first secondary node, N root keys from a master node, wherein N is a positive integer greater than or equal to 1, and values of the N root keys are different from each other; and
protecting, by the first secondary node, communication data between the first secondary node and a communication apparatus based on a first root key when determining that the communication apparatus accesses the first secondary node, wherein the first root key is a root key that is in the N root keys and that is the first to be used.

11. The method according to claim 10, wherein before the protecting, by the first secondary node, communication data between the first secondary node and a communication apparatus based on a first root key, the method further comprises:
receiving, by the first secondary node, an identifier of the first root key from the master node.

12. The method according to claim 10 or 11, wherein the method further comprises:
receiving, by the first secondary node, an identifier of each of the N root keys from the master node; and
determining, by the first secondary node, the first root key from the N root keys based on the identifier of the first root key.

13. The method according to claim 12, wherein the identifier of each of the N root keys is a count value used to generate each of the N root keys.

14. The method according to any one of claims 10 to 13, wherein the method further comprises:
protecting, by the first secondary node, communication data between the first secondary node and the communication apparatus based on a second root key when determining that the communication apparatus accesses the first secondary node again after being disconnected from the first secondary node, wherein the second root key is a root key that is in the N root keys and that is the second to be used.

15. The method according to claim 10, wherein the method further comprises:
deleting, by the first secondary node, the first root key from a local storage or marking the first root key as invalid.

16. The method according to claim 15, wherein the method further comprises:
receiving, by the first secondary node, indication information from the master node; and
determining, by the first secondary node, a use order of the N root keys based on the indication information; or
determining, by the first secondary node, a use order of the N root keys based on a preconfigured rule.

17. A communication method, wherein the method comprises:
generating, by a master node, N count values for a first secondary node and M count values for a second secondary node, wherein N and M are positive integers greater than or equal to 1, the N count values for the first secondary node are different from each other, and the M count values for the second secondary node are different from each other;
generating, by the master node, N root keys based on each of the N count values for the first secondary node and generating M root keys based on each of the M count values for the second secondary node;
sending, by the master node, the N root keys to the first secondary node and sending the M root keys to the second secondary node; and
sending, by the master node, a radio resource control reconfiguration message to a communication apparatus, wherein the radio resource control reconfiguration message comprises the N count values for the first secondary node and the M count values for the second secondary node.

18. The method according to claim 17, wherein the method further comprises:
sending, by the master node, first indication information to the first secondary node, wherein the first indication information indicates a use order of the N root keys;
sending, by the master node, second indication information to the second secondary node, wherein the second indication information indicates a use order of the M root keys; and
sending, by the master node, third indication information and fourth indication information to the terminal device, wherein the third indication information indicates a use order of the N count values, the fourth indication information indicates a use order of the M count values, the use order of the N count values corresponds to the use order of the N root keys, and the use order of the M count values corresponds to the use order of the M root keys.

19. The method according to claim 17 or 18, wherein the method further comprises:
determining, by the master node, values of N and M.

20. The method according to claim 17, wherein the method further comprises:
sending, by the master node, an identifier of each of the N root keys to the first secondary node and sending an identifier of each of the M root keys to the second secondary node.

21. The method according to claim 20, wherein the identifier of each of the N root keys is a count value used to generate each of the N root keys, and the identifier of each of the M root keys is a count value used to generate each of the M root keys.

22. The method according to claim 20 or 21, wherein after the sending, by the master node, a radio resource control reconfiguration message to a communication apparatus, the method further comprises:
receiving, by the master node, an identifier of the first root key for the first secondary node from the communication apparatus; and
sending, by the master node, the identifier of the first root key to the first secondary node.

23. A communication method, comprising:
receiving, by a communication apparatus, a radio resource control reconfiguration message from a master node, wherein the radio resource control reconfiguration message comprises a first count value for a first secondary node and a second secondary node; and
protecting, by the communication apparatus, communication data between the communication apparatus and the first secondary node based on a first root key when determining to access the first secondary node, wherein the first root key is generated by the communication apparatus based on the first count value.

24. The method according to claim 23, wherein the radio resource control reconfiguration message comprises first secondary cell group conditional configuration information of the first secondary node and second secondary cell group conditional configuration information of the second secondary node, the first secondary cell group conditional configuration information further comprises a first execution condition corresponding to a primary secondary cell of the first secondary node, and the second secondary cell group conditional configuration information further comprises a second execution condition corresponding to a primary secondary cell of the second secondary node;
before the protecting, by the communication apparatus, communication data between the communication apparatus and the first secondary node based on a first root key, the method further comprises:
when the first execution condition is satisfied, determining, by the communication apparatus, to access the first secondary node; and
after the protecting, by the communication apparatus, communication data between the communication apparatus and the first secondary node based on a first root key, the method further comprises:
when the second execution condition is satisfied, determining, by the communication apparatus, to access the second secondary node; and
protecting, by the communication apparatus, communication data between the second communication apparatus and the second secondary node based on a second root key, wherein the second root key is generated by the communication apparatus based on a second count value, and the second count value is generated based on the first count value.

25. The method according to claim 24, wherein the first count value is comprised in the first secondary cell group conditional configuration information and the second secondary cell group conditional configuration information; or
the first count value is comprised in information that is other than the first secondary cell group conditional configuration information and the second secondary cell group conditional configuration information and that is in the radio resource control reconfiguration message.

26. The method according to claim 24 or 25, wherein the method further comprises:
sending, by the first secondary node, the second count value to the master node.

27. The method according to any one of claims 24 to 26, wherein the method further comprises:
after the protecting, by the communication apparatus, communication data between the second communication apparatus and the second secondary node based on a second root key, the method further comprises:
when the first execution condition is satisfied, determining, by the communication apparatus, to access the first secondary node; and
protecting, by the communication apparatus, communication data between the communication apparatus and the first secondary node based on a third root key, wherein the third root key is generated by the communication apparatus based on a third count value, and the third count value is generated by the communication apparatus based on the second count value.

28. The method according to claim 27, wherein the method further comprises:
sending, by the first secondary node, the third count value to the master node.

29. A communication method, comprising:
generating, by a master node, a first count value for a first secondary node and a second secondary node;
sending, by the master node, a radio resource control reconfiguration message to a communication apparatus, wherein the radio resource control reconfiguration message comprises the first count value;
generating, by the master node, a first root key based on the first count value when determining that the communication apparatus accesses the first secondary node; and
sending, by the master node, the first root key to the first secondary node, wherein the first root key is used to protect communication data between the communication apparatus and the first secondary node.

30. The method according to claim 29, wherein after the sending, by the master node, the first root key to the first secondary node, the method further comprises:
generating, by the master node, a second root key based on a second count value when determining that the communication apparatus accesses the second secondary node, wherein the second count value is generated based on the first count value, and the first count value is different from the second count value; and
sending, by the master node, the second root key to the second secondary node, wherein the second root key is used to protect communication data between the communication apparatus and the second secondary node.

31. The method according to claim 30, wherein the method further comprises:
receiving, by the master node, the second count value from the communication apparatus; or
generating, by the master node, the second count value based on the first count value.

32. The method according to claim 30 or 31, wherein after the sending, by the master node, the second root key to the second secondary node, the method further comprises:
generating, by the master node, a third root key based on a third count value when determining that the communication apparatus accesses the first secondary node, wherein the third root key is used to protect communication data between the communication apparatus and the first secondary node, the third count value is generated based on the second count value, and the third count value is different from the second count value; and
sending, by the master node, the third root key to the first secondary node.

33. A communication method, comprising:
receiving, by a communication apparatus, a first count value for a first secondary node and a second count value for a second secondary node from a master node, wherein the first count value is different from the second count value; and
protecting, by the communication apparatus, communication data between the communication apparatus and the first secondary node based on a first root key when determining to access the first secondary node, wherein the first root key is generated by the communication apparatus based on the first count value.

34. The method according to claim 33, wherein the first count value is comprised in first secondary cell group conditional configuration information of the first secondary node, the first secondary cell group conditional configuration information further comprises a first execution condition corresponding to a primary secondary cell of the first secondary node, the second count value is comprised in second secondary cell group conditional configuration information of the second secondary node, and the second secondary cell group conditional configuration information further comprises a second execution condition corresponding to a primary secondary cell of the second secondary node;
before the protecting, by the communication apparatus, communication data between the communication apparatus and the first secondary node based on a first root key, the method further comprises:
when the first execution condition is satisfied, determining, by the communication apparatus, to access the first secondary node; and
after the protecting, by the communication apparatus, communication data between the communication apparatus and the first secondary node based on a first root key, the method further comprises:
when the second execution condition is satisfied, determining, by the communication apparatus, to access the second secondary node; and
protecting, by the communication apparatus, communication data between the second communication apparatus and the second secondary node based on a second root key, wherein the second root key is generated by the communication apparatus based on the second count value.

35. The method according to claim 33 or 34, wherein the method further comprises:
after the protecting, by the communication apparatus, communication data between the second communication apparatus and the second secondary node based on a second root key, the method further comprises:
when the first condition is satisfied, determining, by the communication apparatus, to access the first secondary node; and
protecting, by the communication apparatus, communication data between the communication apparatus and the first secondary node based on a third root key, wherein the third root key is generated by the communication apparatus based on the first root key, and the third count value is different from the first count value.

36. A communication apparatus, wherein the apparatus comprises a module configured to perform the method according to any one of claims 1 to 9, a module configured to perform the method according to any one of claims 10 to 16, a module configured to perform the method according to any one of claims 17 to 22, a module configured to perform the method according to any one of claims 23 to 28, a module configured to perform the method according to any one of claims 29 to 32, or a module configured to perform the method according to any one of claims 33 to 35.

37. A communication apparatus, comprising:
a processor, configured to execute a computer program stored in a memory, to enable the apparatus to perform the method according to any one of claims 1 to 9, enable the apparatus to perform the method according to any one of claims 10 to 16, enable the apparatus to perform the method according to any one of claims 17 to 22, enable the apparatus to perform the method according to any one of claims 23 to 28, enable the apparatus to perform the method according to any one of claims 29 to 32, or enable the apparatus to perform the method according to any one of claims 33 to 35.

38. A computer program product, wherein the computer program product comprises instructions used to perform the method according to any one of claims 1 to 9, the computer program product comprises instructions used to perform the method according to any one of claims 10 to 16, the computer program product comprises instructions used to perform the method according to any one of claims 17 to 22, the computer program product comprises instructions used to perform the method according to any one of claims 23 to 28, the computer program product comprises instructions used to perform the method according to any one of claims 29 to 32, or the computer program product comprises instructions used to perform the method according to any one of claims 33 to 35.

39. A computer-readable storage medium, wherein the computer-readable storage medium stores a computer program, and when the computer program is run on a computer, the computer is enabled to perform the method according to any one of claims 1 to 9, the computer is enabled to perform the method according to any one of claims 10 to 16, the computer is enabled to perform the method according to any one of claims 17 to 22, the computer is enabled to perform the method according to any one of claims 23 to 28, the computer is enabled to perform the method according to any one of claims 29 to 32, or the computer is enabled to perform the method according to any one of claims 33 to 35.
